# EUROPEAN PATENT APPLICATION

(11) **EP 4 765 025 A1**
(43) Date of publication of application: **24.06.2026**
(21) Application number: 24882883.2
(22) Date of filing: 24.10.2024
(51) Int. Cl.: G06T 11/60, G06F 3/14, G06F 3/0484, G06T 7/50, G06F 3/04883, G06T 11/00, G06T 7/11, G06T 11/20

(54) **ELECTRONIC DEVICE, METHOD, AND STORAGE MEDIUM FOR GENERATING IMAGE**

(30) Priority: 24.10.2023 KR 20230143245; 17.01.2024 KR 20240007326; 06.09.2024 KR 20240121942
(71) Applicant: Samsung Electronics Co., Ltd., Suwon-si, Gyeonggi-do 16677 (KR)
(72) Inventor: MUN, Jihun, Suwon-si, Gyeonggi-do 16677 (KR); KIM, Sungtae, Suwon-si, Gyeonggi-do 16677 (KR); PARK, Jiyoon, Suwon-si, Gyeonggi-do 16677 (KR); YOO, Nagyeom, Suwon-si, Gyeonggi-do 16677 (KR); HYUN, Daeyoung, Suwon-si, Gyeonggi-do 16677 (KR)
(74) Representative: HGF
(86) International application number: PCT/KR2024/016350
(87) International publication number: WO 2025/089856

(57) **Abstract**

Provided are an electronic device, a method, and a storage medium for generating an image. The method for generating an image includes an operation of receiving a second drawing input around an object included in an image. The method identifies attributes of the object when the second drawing input is determined as a control command on the basis of the object and the second drawing input. The method generates a first preliminary object image on the basis of the attributes of the identified object. The method provides the generated first preliminary object image.

## Description

### [Technical Field]

Embodiments of the disclosure relate to an electronic device, a method, and a storage medium, for example, an electronic device, a method, and a storage medium for generating an image.

### [Background Art]

An electronic device provides various functions to a user. For example, the electronic device may capture an image and display the captured image. Further, the electronic device may provide a function of editing the image. In general, the electronic device may provide an image editing function for cropping an image or consecutively connecting two images. In addition, the electronic device may provide an image editing function for extracting an object from an image or moving and disposing an object within an image, and an image editing function for adding a new object.

The above information may be provided as related arts for merely helping understanding of the disclosure. Any of the above description cannot be claimed as the prior art related to the disclosure or cannot be used for determining the prior art.

### [Disclosure of Invention]

### [Solution to Problem]

A method for generating an image according to various embodiments herein may include receiving a second drawing input around an object included in the image. The method may include identifying an attribute of the object in the case that the second drawing input is determined to be a control command, based on the object and the second drawing input. The method may include generating a first preliminary object image, based on the identified attribute of the object. The method may include providing the generated first preliminary object image.

An electronic device according to various embodiments herein may include a display configured to display an image, at least one processor including a processing circuit, and a memory configured to store instructions to be individually or collectively executed by the at least one processor. The instructions stored in the memory may be configured to cause the electronic device to receive a second drawing input around an object included in the image. The instructions may be configured to cause the electronic device to identify an attribute of the object in the case that the second drawing input is determined to be a control command, based on the object and the second drawing input. The instructions may be configured to cause the electronic device to generate a first preliminary object image, based on the identified attribute of the object. The instructions may be configured to cause the electronic device to provide the generated first preliminary object image.

A non-transitory computer-readable storage medium recording a program for performing a method for generating an image according to various embodiments herein may include receiving a second drawing input around an object included in the image. The storage medium may include identifying an attribute of the object in the case that the second drawing input is determined to be a control command based on the object and the second drawing input. The storage medium may include generating a first preliminary object image, based on the identified attribute of the object. The storage medium may include providing the generated first preliminary object image.

### [Advantageous Effects of Invention]

Various embodiments of the disclosure for example, can provide high-level image processing function considering a scene or a subject included in an image through an intuitive user input.

Effects of the disclosure are not limited to the above-mentioned effects, and other effects which have not been mentioned above can be clearly understood from the following description by those skilled in the art.

### [Brief Description of Drawings]

FIG. 1 is a block diagram of an electronic device within a network environment according to various embodiments.
FIG. 2 is a block diagram illustrating a configuration of the electronic device according to various embodiments.
FIGS. 3A and 3B are diagrams illustrating a process of editing an image according to various embodiments.
FIGS. 4A, 4B, and 4C are diagrams illustrating a process of recognizing an object, based on a drawing element according to various embodiments.
FIG. 5 is a diagram illustrating a process of generating an edited image according to various embodiments.
FIGS. 6A and 6B are diagrams illustrating an example of editing an image according to various embodiments.
FIGS. 7A and 7B are diagrams illustrating an example of analyzing a user input and determining an object according to various embodiments.
FIGS. 8A, 8B, 8C, and 8D are diagrams illustrating an example of moving an object within an image while maintaining reality according to various embodiments.
FIGS. 9A, 9B, and 9C are diagrams illustrating an example of moving an object by using depth information according to various embodiments.
FIGS. 10A, 10B, 10C, 10D, 10E, and 10F are diagrams illustrating an example of adding and moving an object according to various embodiments.
FIGS. 11A, 11B, 11C, 11D, 11E, and 11F are diagrams illustrating an example of adding and moving a plurality of objects according to various embodiments.
FIGS. 12A, 12B, 12C, 12D, 13A, 13B, 13C, and 13D are diagrams illustrating an example of changing shapes of some areas of the object according to various embodiments.
FIGS. 14A, 14B, and 14C are diagrams illustrating an example of adding an object by using other information according to various embodiments.
FIGS. 15A, 15B, 16A, and 16B are diagrams illustrating an example of changing a color of an area within an image according to various embodiments.
FIGS. 17A and 17B are diagrams illustrating an example of editing an image by motion of an electronic device according to various embodiments.
FIGS. 18A, 18B, and 18C are diagrams illustrating an example of displaying an image in various sizes by using a complete object image according to various embodiments.
FIGS. 19 and 20 illustrate examples of generating an image based on a drawing according to various embodiments.
FIG. 21 illustrates a mixture of experts (MoE) layer according to various embodiments.
FIG. 22 illustrates operations for processing a text input according to various embodiments.
FIGS. 23A, 23B, 23C, 23D, 23E, 24A, 24B, 25A, 25B, 25C, 26A, 26B, 27A, 27B, 28, 29, 30A, 30B, 30C, 30D, and 31 illustrate examples of generating and/or changing an image based on an attribute of an input drawing and/or a control function based on the drawing according to various embodiments.
FIG. 32 is a flowchart illustrating an image editing method according to various embodiments.

### [Mode for the Invention]

Hereinafter, embodiments of the disclosure are described in detail with reference to the drawings to make those skilled in the art to which the disclosure belongs be able to easily realize the disclosure. However, the disclosure may be realized in various different forms and is not limited to embodiments described herein. In connection with description of drawings, the same or similar reference numeral may be used for the same or similar element. Further, in the drawings and description related thereto, description of unknown functions and configurations may be omitted for clarity and briefness.

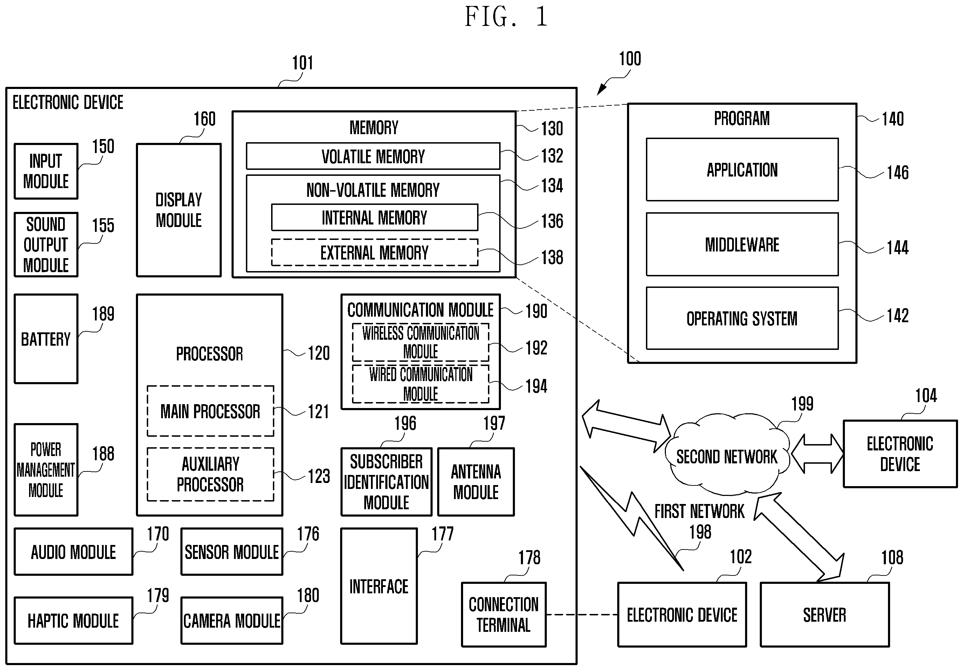

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory may include at least one of an internal memory 136 and an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beamforming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices (e.g. electronic devices 102 and 104 or the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

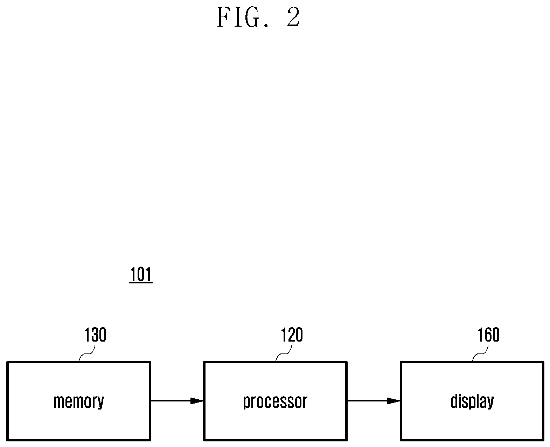

FIG. 2 is a block diagram illustrating a configuration of an electronic device according to various embodiments.

Referring to FIG. 2, the electronic device 101 may include the memory 130, the processor 120, and the display 160.

The memory 130 (for example, the memory 130 of FIG. 1) may store data, algorithms, programs, instructions, and the like that perform functions of the electronic device 101. For example, the memory 130 may store images, image editing algorithms, preliminary object images, and image editing models learned by machine learning or deep learning. For example, the image editing models may include an image analysis model, a user input analysis model, a preliminary object generation model, an atmosphere/lighting model, and/or a depth map generation model. For example, the image editing mode based on artificial intelligence may include a plurality of artificial neural network layers. The artificial neural network may be one of a deep neural network (DNN), a convolutional neural network (CNN), a recurrent neural network (RNN), restricted Boltzmann machine (RBM), a deep belief network (DBN), bidirectional recurrent deep neural network (BRDNN), deep Q-networks, or a combination of two or more thereof, but is not limited thereto. The image editing models based on artificial intelligence may be included in one artificial intelligence computing module included in the electronic device 101 or may be included in different artificial intelligence computing models, respectively. For example, the image editing models based on artificial intelligence may be included in one artificial intelligence computing module included in a separate server (for example, the server 108 of FIG. 1) or may be included in different artificial intelligence computing models, respectively. The image editing models based on artificial intelligence may be logic, firmware, software, and/or hardware modules capable of performing the operation through at least one artificial intelligence computing module.

The processor 120 (for example, the processor 120 of FIG. 1) may control each element of the electronic device 101 by executing instructions and the like stored in the memory 130. The electronic device 101 may include one or more processors 120. For example, the processor 120 may correspond to a plurality of processors that divide a plurality of functions therebetween and perform the functions together.

The processor 120 may display an image (for example, an original image) on the display 160 (for example, the display module 160 of FIG. 1). For example, the image may include a still image (for example, a still image) and a dynamic image (for example, a video). For example, the dynamic image (for example, the video) may be provided in the unit of frames or in the unit of scenes. For example, a frame or a main scene selected from the video may be displayed for image editing, and editing of the corresponding frame or scene may be applied together to another frame or scene related thereto. When a user input is received, the processor 120 may identify the user input. For example, the user input may be an input of adding at least one object to the image displayed on the display, an input of modifying an object, or a control input. In various embodiments of the disclosure, the object may include a thing, a person, and/or a background. For example, the background may be an object such as a sea, a mountain, a sky, or a river behind a thing or a person. For example, the input of adding the object may include an input of adding a new thing and/or person. The input of modifying the object may include an input of changing the size or shape of the object, an input of changing a color, and/or an input of adding a color. The control input may be an input of controlling the object through a method other than drawing of an object shape or adding information on the object. For example, when an arrow is input on the object (or adjacently to the object), the processor 120 may move the object, based on a direction and length of the arrow. For example, when text of log is input on an object having the shape of house (or adjacently to the object), the processor 120 may identify the object as a log cabin. An arrow or text input by the user may be an example of the control input. That is, the processor 120 may identify whether the user input is the input of adding the object, the input of modifying the object, or the control input.

For example, the processor 120 may identify an object which the user desires to add, based on a shape (drawing shape) configured by the user input. For example, the user input may be a touch gesture, and the processor 120 may identify an object which the user desires to add, based on a shape configured by the touch gesture. For example, the user input may be a motion gesture by a user's hand (or finger), the processor 120 may identify an object which the user desires to add, based on a shape configured by the motion gesture. For example, the user input may include an input using a remote controller that can recognize an action in an extended reality (XR) environment or a user gesture recognized through a camera. For example, the user input may be an input distinguished by a touch/non-touch on the display 160 (for example, a touch screen), and the processor 120 may identify the user input according to the existence or non-existence of a touch. For example, when a finger (or an instrument such as an electronic pen) comes in contact with the display 160 and makes a drawing, the processor 120 may identify the user input for adding the object. When a finger (or an electronic pen) hovers and makes a drawing, the processor may identify the user input for modifying the object (for example, for changing texture, changing a color, adding a color, etc.). For example, the user input may be identified as the input for adding the object when the user input is a drawing input on the display 160, and the user input may be identified as the input for modifying the object when the user input is a drawing input through a motion sensor (for example, an acceleration sensor).

According to an embodiment, the user input may be an input using various input devices and/or an input using various input schemes, and the processor 120 may identify the user input, based on the type of input device and/or the input scheme. For example, the processor 120 may identify the user input as the input for adding the object when the user input is a drawing by an electronic pen, and may identify the user input as the input for modifying the object when the user input is a drawing by a finger. For example, the processor 120 may identify the input for adding the object when a drawing is made without pressing of a button of the electronic pen, and may identify the input for modifying the object when the drawing is made in the state where the button of the electronic pen is pressed.

When the user input is identified as the input for adding the object (for example, a first object), the processor 120 may make a request for generating a preliminary object image (for example, a preliminary image of the first object) to an artificial intelligence-based computing device (for example, an artificial intelligence-based computing module or an artificial intelligence-based image editing model). For example, the preliminary object image may be generated not only as just an image but also as image information used for displaying the image of the object. The image information for displaying or generating the object may include, for example, image information that expresses a two-dimensional entire shape of the object, image information that expresses a three-dimensional entire shape of the object, image information that expresses various shapes which may be different depending on angles at which the object is viewed, image information that expresses various shapes which may be different depending on focal distances, and image information that expresses various shapes which may be different depending on view angles. A first preliminary object image may also be generated as first object image information.

For example, the artificial intelligence-based computing device may include an image editing model learned by machine learning or deep learning, and the image editing model may be a generative artificial intelligence model. The generative artificial intelligence model may be a deep learning text-to-image model that receives an input of a prompt and generates an image corresponding to the prompt. For example, the prompt may include various types of content such as text, an image, a web address, and a file. For example, the generative artificial intelligence model may generate an image by using various calculation models such as a generative adversarial network (GAN), a vector quantization GAN (VQ-GAN), a variational auto-encoder (VAE), a VQ-VAE, diffusion, a diffusion-GAN model, and the like.

The GAN model is one of artificial intelligence neural networks using an adversarial neural network structure and may use mock data similar to real data. The GAN model may learn a generator by comparing an image generated by the generator with the original image and evaluating the image by a discriminator. The VAE model is one of probabilistic artificial neural networks, and may encode data with probability distribution in a potential space and perform generation modeling. The VAE model may be a model serving as a generator. The VAE model may extract a feature (for example, eyes, nose, mouth, or the like) that best expresses an input image (X) through an encoder, sample the feature, and generate a latent vector (Z). The VAE model may generate new data most similar to X from Z through a decoder. The VAE model may have the encoder/decoder in comparison with the GAN model, and may learn all of the latent vector, the encoder, and the decoder. The diffusion model may be learned using a forward process (diffusion process) that completely turns data into noise by adding noise from the data little by little and a reverse process that reversely makes data by restoring the data from noise little by little.

For example, the processor 120 may make a request for generating a preliminary object image by loading an image editing model from the memory 130. According to an embodiment, the image editing model may be stored in an external device (for example, the server 108 of FIG. 1). The electronic device 101 may include a communication interface (for example, the communication module 190 of FIG. 1), and the processor 120 may make a request for generating a preliminary object image to the image editing model through the communication interface. That is, the image editing model may be a universal model generally provided by the external device. According to an embodiment, some of the image editing models may be provided by the electronic device 101, or all models may be provided by the electronic device 101 (on-device form).

For example, when the image editing models are generally provided by the external device, the electronic device 101 may transfer an original image selected by the user and user input information to the external device. The external device may identify an added object (including a background) from the user input information. The external device may generate preliminary object images for the identified object and/or the object extracted from the original image and transmit a first edited image which reflects rearrangement of the objects and a lighting characteristic to the electronic device 101. The electronic device 101 may display the received first edited image. When an object within the first edited image is moved by the user, the electronic device 101 may transmit information related to the object of which the location was changed (for example, information of the moved object, coordinate information, or the like) to the external device. The external device may transmit a second edited image which reflects a lighting characteristic and depth information to the electronic device 101, based on the received information. The electronic device 101 may display the second edited image received from the external device.

According to an embodiment, the preliminary object generation model and the depth map generation model may be provided by an external device (for example, the server), and another model (for example, the image analysis model, the user input analysis model, or the atmosphere/lighting mode) may be provided by the electronic device 101. For example, the electronic device 101 may identify an added object from the user input information. Further, the electronic device 101 may analyze the original image and identify information related to an object included in the original image. The electronic device 101 may transmit information on the added object and information on the existing object included in the original image to the external device. The external device may generate preliminary object images for the added object and the existing object, based on the information received from the electronic device 101. Further, the external device may generate a depth map for the added object and the existing object. The external device may transmit the preliminary object images and the depth map information to the electronic device 101. The electronic device 101 may rearrange the objects, based on the depth map information and the preliminary object images and generate the first edited image which reflects the lighting characteristic.

According to an embodiment, all image editing models may be provided by the electronic device 101. When receiving drawing information by a user input, the electronic device 101 may generate a preliminary object image through a preliminary object generation model and generate the first edited image including the generated preliminary object image. The lighting characteristic may be applied to the first edited image. The electronic device 101 may acquire depth information of the first edited image through the depth map generation model. When the electronic device 101 receives an image editing command (for example, object movement) from the user, the electronic device 101 may edit the first edited image according to a user input. When the object moves, the electronic device 101 may update depth information and generate a second edited image which applies the lighting characteristic according to object movement.

The artificial intelligence computing device may identify attributes of a first object (for example, an object configured by a user input), based on a shape configured by the user input. For example, the artificial intelligence computing device may analyze the original image and identify attributes of the first object together with information on the original image. For example, the image information may include information on a scene expressed by the image (for example, a landscape, a building, a person, a food, a city, a country, indoor, outdoor, or the like), time/visual information expressed by the image (for example, sunset, sunrise, night, or the like), imagery reminiscent of the image (for example, comfortable, warm, vibrant, and the like), detailed information on an object (for example, subject) included in the image (for example, a user, a specific person, a user's house, a user's car, and the like), relative sizes of objects included in the image and/or image/object information around a user input. For example, the attributes of the object may include a type, a shape, texture, a color, a characteristic, and/or additional information of the object. As an embodiment, when a user input is a rectangular shape in an indoor image, the artificial intelligence computing device may identify the attributes of the first object as furniture. According to an embodiment, the artificial intelligence computing device may identify the attributes of the object drawn in a human's head part as a hat.

When the artificial intelligence computing device is stored in the memory 130 of the electronic device 101, the artificial intelligence computing device may be loaded to the processor 120 and perform an operation. In this case, the processor 120 may identify attributes of the first object.

The processor 120 (for example, the artificial intelligence computing device) may generate a first preliminary object image of the first object, based on the identified attributes. For example, the first preliminary object image may be an image for the entire shape of the first object. The processor 120 may identify an object from an image including an object having attributes which are the same as or related to the attributes of the identified first object in the image stored in the memory 130 and generate the first preliminary object image. According to an embodiment, the processor 120 may search for a shopping mall site, a portal site, and/or an image of a cloud of a user account through the network. The processor 120 may identify an object from an image including an object having attributes which are the same as or related to the attributes of the identified first object in the found image and generate the first preliminary object image. The processor 120 may generate the first preliminary object image by using the object included in the stored image and/or the found image. According to an embodiment, the processor 120 may generate the first preliminary object image from a user input with reference to the stored image and/or the found image.

The processor 120 may generate a single first preliminary object image or a plurality of first preliminary object images. For example, the plurality of first preliminary object images may be a plurality of images including shapes which can be captured for the first object at different focal distances. For example, the plurality of first preliminary object images may include a plurality of object images including different styles. For example, the processor 120 may generate a preliminary object image for the entire shape of a person including the lower half of the body, based on a drawing of the user describing the upper half of the body of the person. The processor 120 may generate in advance a plurality of first preliminary objects having different clothes, positions, facial expressions, and the like. According to an embodiment, the plurality of first preliminary objects may be images of similar objects that match user input information and belong to the type of the first object. For example, when it is identified that a user input is a red shape and the first object according to the shape of the user input is a hat, the processor 120 may generate a plurality of red hats as first preliminary object images. When the processor 120 generates first preliminary object images of a plurality of similar first objects, the processor 120 may display the generated first preliminary object images of the plurality of similar first objects and determine one first preliminary object according to selection of the user. For example, the first preliminary object images can be used during an image editing process and thus referred to as candidate images, and are generated as images including the entire shape of the object and thus referred to as a complete image.

According to an embodiment, when the background of the original image does not match the attributes of the first object, the processor 120 may insert a new object (for example, another object which is expressed with the first object and may assist the first object or another part of the object) to generate the first preliminary object image. For example, the processor 120 may identify relevance (fitness or consistency) between the attributes of the first object and environment of the image information (or image context). The attributes of the first object may include the type and/or characteristic (feature) of the first object. The environment information of the image may include place information, time information, and/or weather information. The processor 120 may generate a first preliminary image (or information on the first preliminary object image) including a new object related to the first object, based on the relevance. The generated first preliminary object image (or the information on the first preliminary object image) may include an object (or object information) identified from a shape drawn by a user input and a new object (or information on the new object) related to the first object.

As an embodiment, one of the attributes of the background of the image may be indoors, for example a living room, and one of the attributes of the first object may be a tree or a plant. The processor 120 may determine that information on the image background is indoor and the object identified by the user input is a tree. The processor 120 may determine relevance between the place information corresponding to indoor and the attributes of the object corresponding to the tree. The tree planted on an indoor floor may be realistically impossible. For example, the processor 120 may insert a pot which is not input by the user as a new object, based on the determined relevance, and generate a tree planted in the pot as a first preliminary object image.

According to an embodiment, the processor 120 may identify the existing object (for example, the second object) included in the original image and make a request for generating a preliminary image for the existing object (for example, a preliminary image for the second object). When the number of second objects is plural, the processor 120 may select the second object according to a priority. For example, when the number of second objects is a preset number or more and/or when at least one some of the second objects have a size equal to or smaller than a preset size, the processor 120 may select some second objects, based on the priority. Further, the processor 120 may make a request for generating preliminary images only for the selected second objects. For example, the priority may be configured in the order of a person, an animal, home appliances, and furniture. As an example, the priority may be configured in the order of the object size. Since second preliminary object images can be used during an image editing process and thus referred to as candidate images, and are generated as images including the entire shape of the object and thus referred to as complete images.

The preliminary object image according to embodiments of the disclosure may be generated as image information used to display an image for the object as well as being generated as an image. The image information for displaying or generating the object may include, for example, image information that expresses a two-dimensional entire shape of the object, image information that expresses a three-dimensional entire shape of the object, image information that expresses various shapes which may be different depending on angles at which the object is viewed, image information that expresses various shapes which may be different depending on focal distances, and image information that expresses various shapes which may be different depending on view angles. The first preliminary object image or the second preliminary object image may be generated as first object image information or second object image information.

The processor 120 may display a first edited image (for example, an image to which an object is added/altered/removed, in which a color is changed, or to which a color is added) related to the original image, based on the first preliminary object image and/or the second preliminary object image. The first edited image may be an image obtained by calibrating the original image according to an editing input of the user. The first edited image may include the first object and/or the second object. The processor 120 may display a first part and/or a second part of the first object and/or the second object in the first edited image.

The second preliminary object image may include a first part and a second part of the second object. For example, a person in the original image including the upper half of the body of the person may be the second object, and an image of the entire shape of the person (for example, the entire shape including the upper half and the lower half of the body of the person) may be the second preliminary object image. The upper half of the body of the person included in the original image may be the first part of the second object, and the lower half of the body which is not included in the original image may be the second part. Similarly, the first preliminary object image may also include the first part and the second part of the first object. As an example, the processor 120 may generate a first edited image to which the first object identified by a drawing of the user is added. When the processor 120 displays only a portion of the first object is displayed in the first edited image, the part displayed in the first edited image may be the first part (or the second part) of the first object, and the part which is not displayed in the first edited image may be the second part (or the first part). According to an embodiment, the first part and/or the second part of the first object in the first preliminary object image may be displayed according to a displayed display area. According to an embodiment, the first part and/or the second part of the second object in the second preliminary object image may be displayed according to a displayed display area. The processor 120 may display the second object in the first edited image, based on the relationship with the first object. For example, the size of the second object included in the first edited image may be different from the size of the second object included in the original image.

The processor 120 may display (add or assign) a lighting effect according to the location of the first object and/or the second object, based on analysis information of the original image.

When receiving an input related to the first object in the first edited image, the processor 120 may display a second edited image associated with the first edited image, based on the first preliminary object image and/or the second preliminary object image. The second edited image may be an image obtained by calibrating the first edited image according to an editing input of the user. The input related to the first object in the first edited image may be an input of moving the object. For example, the input of moving the object may be an input (for example, a drag input) of moving the object to another location on the screen in the state where the object is selected or a control input. As an example, the control input may be an input in an arrow shape corresponding to a distance and a direction in which the object is to be moved. When receiving the input of moving the first object in the first edited image, the processor 120 may display the second edited image obtained by changing the location of the first object, based on the first preliminary object image. The processor 120 may acquire depth information of the first object, based on the change in the location of the first object, and display the first object, based on the acquired depth information of the first object. Further, the processor 120 may automatically change the location of the second object in the second edited image to a location different from the location of the second object in the first edited image, based on the relationship with the first object.

According to an embodiment, when receiving the input of moving the second object in the first edited image, the processor 120 may display the second edited image obtained by changing the location of the second object, based on the second preliminary object image. The second edited image may be an image obtained by calibrating the first edited image according to an editing image of the user. The processor 120 may acquire depth information of the second object, based on the change in the location of the second object, and display the second object, based on the acquired depth information of the second object. Further, the processor 120 may automatically change the location of the first object in the second edited image to a location different from the location of the first object in the first edited image, based on the relationship with the second object.

For example, when the location of the second object is moved according to the user input, the processor 120 may display the first part and/or the second part of the second object in the second edited image, based on the relationship with the first object. As an example, when the location of the first object is moved according to the user input, the processor 120 may display the first part and/or the second part of the first object in the second edited image, based on the relationship with the second object.

When the location of the first object and/or the second object is changed, the processor 120 may display (and/or assign or change) a lighting effect, based on the change in the location of the first object and/or the second object. As an example, when sunlight is displayed in a center top area of the first edited image and the first object (or the second object) is displayed in a left bottom area, the processor 120 may display a shadow effect of the first object (or the second object) in the first edited image in a left direction. When the location of the first object (or the second object) is changed to a right bottom area according to the user input, the processor 120 may display (or change) a shadow effect of the first object (or the second object) in the second edited image.

The display 160 may output data processed by the processor 120 in the form of an image. The display 160 may display the original image, the first edited image (for example, the image to which the object is added), or the second edited image (for example, the image in which the object is moved). Further, the display 160 may display a user interface (UI) related to an input of adding the object, an input of modifying the object, or a control input. For example, the display 160 is implemented as a touch screen and may receive a user input on the display.

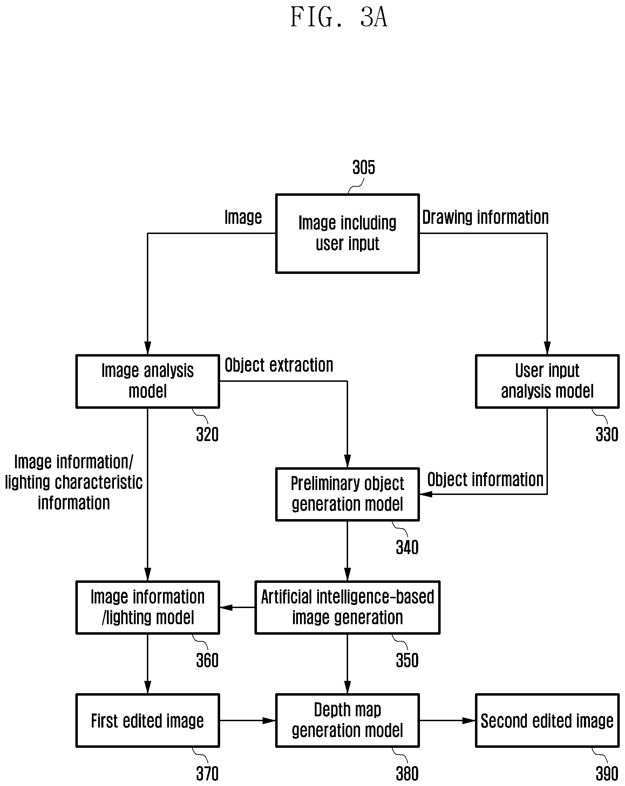

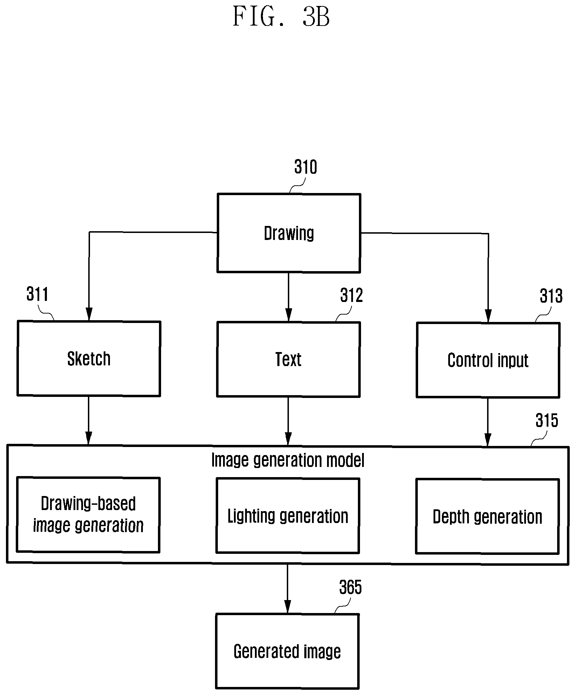

FIGS. 3A and 3B are diagrams illustrating a process of editing an image according to various embodiments.

Referring to FIG. 3A, the electronic device, for example, the electronic device 101 of FIGS. 1-2, may display an image (for example, an original image) and receive a user input in the displayed image. The user input may be an input, for example, including, but not limited to, using a finger, a gesture (or motion), a mouse, a keyboard, a camera, and/or an electronic pen. The electronic device 101 may analyze both an image (image area, image data, or the original image) and drawing information by the user input in an image 305 including the user input (for example, a drawing).

For example, an image analysis model 320 may analyze the image in the image 305 including the user input (for example, a drawing). The image analysis model 320 may analyze information on the image and/or a lighting characteristic. The image analysis model 320 may be an artificial intelligence model learned based on machine learning or deep learning. The image analysis model 320 may generate a prompt (for example, cozy, shining sun light, before sunset, or the like) including the analyzed information on the image and/or the analyzed lighting characteristic (for example, a direction of light). The electronic device 101 may arrange an object added to match the information on the image and/or the lighting environment, based on the prompt generated by the image analysis model 320.

Further, the image analysis model 320 may extract an object (including a background) from the image. For example, the image analysis model 320 may identify an object to be extracted. For example, the processor 120 (e.g., of FIGS. 1-2 above) may display candidates of the object to the user and identify the object to be extracted according to selection of the user. The image analysis model 320 may identify the object in an area irrelevant to a drawing area. Further, the image analysis model 320 may determine a main object according to a preset priority, based on the number, the size, and/or the type of objects. For example, when the object to be extracted is a person, the image analysis model 320 may provide a UI of receiving an input for a style of the person from the user in order to generate a preliminary object image for the person (for example, skirt, pants, slippers, dress shoes, sneakers, or the like). The image analysis model 320 may generate a prompt including the person and the input style information in order to generate the preliminary object image.

A user input analysis model 330 may identify the input drawing. For example, the user input analysis model 330 may identify an object addition input, an input of adding (or changing) a color of the object (for example, background), and/or a control input.

For example, the user input analysis model 330 may determine whether to add the object or add (or change) the color according to whether the drawing is a simple geometrical shape (for example, dot, line, or face) or a shape corresponding to a combination of several figures. The user input analysis model 330 may perform learning related to color addition by using a data set including a simple geometrical image in various colors. When simple geometrical images including colors are grouped according to a preset reference and include a predetermined shape, the grouped simple geometrical images may be recognized as objects. The user input analysis model 330 may perform learning for the object by using a data set including the grouped simple geometrical images.

The user input analysis model 330 may analyze the input drawing and convert the object in the image into a drawing type. The user input analysis model 330 may acquire drawing information through an inverse conversion process of converting the object in the image into the drawing type. The user input analysis model 330 may calibrate the image, based on the acquired drawing information. The user input analysis model 330 may increase the performance by learning the calibrated image again through the added data set.

The user input analysis model 330 may receive information on thickness of a line input through the drawing UI before receiving the user input. For example, the user input analysis model 330 may determine a drawing for the color of the object (for example, the change in the color of the background or addition of the color) when a thick line is selected, and may determine a drawing for object addition when a thin line is selected. According to an example, the user input analysis model 330 may determine whether to add the object and/or change the color, based on a preset drawing pattern.

For example, the user input analysis model 330 may group a plurality of drawing elements, based on the color of the drawing input by the user, the continuity, and the relationship between the input location and an image area, and determine whether to add the object and/or add (or change) the color, based on the grouped drawing elements. For example, the drawing elements may include an individual line configuring parts of the object with the sameness, and a figure or an area including a plurality of lines. The user input analysis model 330 may determine each drawing element according to the color, the continuity, and/or the input location of the input drawing and group a plurality of drawing elements according to the relationship between the input location of each drawing element and the image area. Further, the user input analysis model 330 may determine whether the object is added, the color is added, the color is changed, or there is a control command, based on the grouped drawing elements. As an example, when the input drawing (or a plurality of drawing elements which has been grouped) has a shape of a comb pattern or a zigzag pattern within an object area or draws a boundary of a specific area and then has the same color and repeated form therein, the user input analysis model 330 may identify that the input drawing is the input for adding the color.

According to an embodiment, the user input analysis model 330 may identify the input drawing according to an input tool or an input scheme. For example, when a finger and/or an electronic pen comes into contact with the display 160 (e.g. the display 160 of FIGS. 1-2) and makes a drawing, the user input analysis model 330 may identify the input of adding the object. When a finger and/or an electronic pen hover on a touch screen and makes a drawing, the user input analysis model 330 may identify the input of adding (or changing) the color of the object. According to an embodiment, when the drawing is made in the state where a button of the electronic pen is not pressed, the user input analysis model 330 may identify the input of adding the object. When the drawing is made in the state wherein the button of the electronic pen is pressed, the user input analysis model 330 may identify the input of adding the color of the object. According to an embodiment, the user input analysis model 330 may identify the drawing input on the display 160 as the input of adding the input and identify a drawing input by motion of a user's hand identified through a camera or motion of the electronic device 101 identified through a motion sensor as the input of adding the color.

The user input analysis model 330 may generate information on the object related to the identified drawing as a prompt. For example, the user input analysis model 330 may generate a prompt of generating the object and/or adding color, based on a result of determination for an area of the image in which the drawing is input and a colored area. The prompt including object information generated by the user input analysis model 330 may be input into a preliminary object generation model 340. For example, the prompt may be a textual, visual, and/or sound form. The textual prompt may be a prompt input in a text form. The textual prompt may be a natural language form. The visual prompt may be a prompt in an image form. The visual prompt may be used to generate information in another form in the general image. For example, the visual prompt may be used when depth information is generated in the image (for example, the original image or the first edited image). As an example, a depth map generation model 380 may generate depth information acquired from the image as the visual prompt (for example, a depth map in an image form). For example, the visual prompt may be used when skeleton information for acquiring a shape and/or operation information are acquired from a person image and/or an animal image. As an example, the image analysis model 320 may generate skeleton information of the object as the visual prompt. For example, when the visual prompt is used together with text information, the visual prompt may be used when a converted image is acquired according to input text information. As an example, when the user inputs text of log together with a drawing in a house shape, the preliminary object generation model 340 may acquire a preliminary object image of a log cabin, based on the visual prompt in the house shape generated by the user input analysis model 330 and text. The sound prompt may be a prompt which is similar to the text prompt but is input in the form of a sound (for example, a voice) instead of text. The prompt input in the form of the sound may be converted into text prompt. For example, a model learned according to a specific frequency may output a result of a pre-learned operation when the sound prompt is input.

In various embodiments of the disclosure, the prompt input by the preliminary object generation model 340 may be a prompt having the drawing analysis result converted into the text form and/or a prompt having an input image converted into the visual form. For example, when the user draws a tree on a bottom-right of the input image through a drawing, a prompt in the text form such as "The tree is currently centered on the bottom-right coordinate center pixels 250 (x-coordinate) by 145 (y-coordinate) in the figure" may be input into the preliminary object generation model 340.

The user input analysis model 330 may identify whether the object is additionally input or a color addition/change input is made, identify the relevance with an area within image into which the drawing is input, and identify attributes (for example, the type, the shape, or the like) of the drawing. For example, the prompt may include a sentence (for example, an object of ...', 'a landscape of...') describing a background or an object according to thickness of a pen designated by the user. The prompt may include a word describing attributes and a color of the drawing analyzed by the user input analysis model 330.

The user input analysis model 330 may provide a preset pattern to the user and identify attributes of the drawing, based on the preset pattern. For example, the preset pattern may be identifying the type of the object (or attributes of the drawing) or identifying a control command.

As an example, the user input analysis model 330 may identify one vertical line as a tree and identify three or more vertical lines as a forest. One circle and two vertical lines may be identified as a cat, and two overlapping circles and two vertical lines may be identified as a fox. When attributes of the input drawing are identified as a fox, the user input analysis model 330 may generate a prompt for generating a fox image. As an example, the user input analysis model 330 may generate a prompt including information of a natural language such as "Generate an image of a fox expressing emotions in its own unique way." and input the same into the preliminary object generation model 340.

The user input analysis model 330 may determine whether the identified object matches an area within the image into which the drawing is input (or determine fitness, reality/feasibility, or suitability), based on the relevance therebetween. When the identified object does not match the area into which the drawing is input, the user input analysis model 330 may determine whether a new object is generated. As an example, the user input analysis model 330 may determine that attributes of a user input received in an indoor image is a tree. However, an indoor floor and the tree may not match each other (e.g., do not go together or lack realism). The user input analysis model 330 may determine that a pot is generated as a new object.

For example, the user input analysis model 330 may determine whether the received user input is a control command. When the user input is the control command, the electronic device 101 may perform an operation according to the control command. As an example, the control command may include a command that provides detailed information on the drawing or a command for editing an image.

For example, the electronic device 101 may receive an input of text. The user input analysis model 330 may identify attributes of the drawing by additionally using the input text. As an example, a drawing of a triangle may be input on a rectangle, and text of "log" may be input. The user input analysis model 330 may identify attributes of the drawing corresponding to a house, based on a shape of the drawing and identify attributes of the drawing corresponding to a log cabin which is a lower category of the house, based on the input text.

For example, the control command may include a drawing for editing an image. The electronic device 101 may provide an object movement function as a control command through the drawing. When the user inputs a circle drawing around a drawing in a person shape and a drawing in a left arrow shape into a left area near the circle drawing, the user input analysis model 330 may recognize a control command of moving the person object in the circle drawing in an arrow direction. The processor 120 may generate a preliminary object image for the person through the preliminary object generation model 340 and generate a first edited image by moving the person object to the left when rearranging the object. According to an embodiment, a second edited image in which the object is moved by the control command through the drawing in the first edited image may be generated. For example, types of the control command may be distinguished according to a shape or size of the control drawing. In the above example, a movement distance of the object may be determined according to a length of the arrow. That is, the selected object may be moved by the length of the arrow or may be moved by a preset distance proportional to the length of the arrow.

The processor 120 may extract information required for generating the preliminary object image and generate the preliminary object image through the preliminary object generation model 340 using the extracted information. As an example, the extracted information may include an image stored in the memory 130 of the electronic device 101 and/or a cloud server, a found image, predetermined data, a shopping list, a shopping list image, a list of interest, an image of interest, and/or a screen shot. The preliminary object generation model 340 may receive a prompt (or output data) generated by the image analysis model 320 and/or the user input analysis model 330. According to an embodiment, the preliminary object generation model 340 may receive the extracted information to generate the preliminary object image. The preliminary object generation model 340 may generate the artificial intelligence-based image 350 (for example, the preliminary object image), based on the received image and the received information. When the user input analysis model 330 determines generation of a new object, the preliminary object generation model 340 may generate the preliminary object image including the new object. The electronic device 101 may secure the diversity of preliminary object images which can be generated. The preliminary object generation model 340 may generate the preliminary object image including the entire shape of the object. The object included in the original image and/or the object identified by a user input may be generated in the form of a completed object even though a portion thereof is not displayed on the display 160. The preliminary object image may include, for example, image information that expresses a two-dimensional entire shape of the object, image information that expresses a three-dimensional entire shape of the object, image information that expresses various shapes which may be different depending on angles at which the object is viewed, image information that expresses various shapes which may be different depending on focal distances, and image information that expresses various shapes which may be different depending on view angles. When the image is edited (or the object moves) or a display area of the display changes, the processor 120 may process the image in real time by using the generated preliminary object image and display the processed image.

An image information/lighting model 360 may receive the prompt including image information and/or lighting characteristic information and the generated artificial intelligence-based image 350 (for example, the preliminary object image). The image information/lighting model 360 may arrange the generated preliminary object image to match the original mage and generate a first edited image 370 that reflects the lighting characteristic information to update lighting information.

A depth map generation model 380 may acquire depth information of the object from the first edited image 370 (for example, an image to which the image information and/or the lighting characteristic are applied). For example, the depth information may be perspective-related data according to spatial arrangement of objects. The depth information may include information related to a surface distance of the object included in the image (for example, the first edited image) from a viewpoint of observation. A depth map generation model 380 may be an artificial intelligence model that calculates depth information of the object from an individual image. The depth map generation model 380 may acquire depth information of the object (including the background) within the image. As an example, the depth information may include information acquired using a sensor that obtains depth information such as light detection and ranging (LiDAR) or time of flight (ToF) when the image is captured. The depth information may be stored metadata of the image.

The depth map generation model 380 may store the acquired depth information of each object of the first edited image 370 in the memory 130. When receiving an object movement command from the user, the depth map generation model 380 may update depth information of the moved object, based on a change in the location of the object. The depth map generation model 380 may update the depth information and store the updated depth information in the memory 130.

The processor 120 may generate a second edited image 390, based on the depth information updated according to movement of the object. The processor 120 may change an object display area, based on the state of the object before movement and the changed location information. For example, the processor 120 may display only an area (for example, a first part) of the upper half of the body of the person before movement and display an area (for example, a first part and a second part) of the entire body of the person after movement. The processor 120 may change the lighting characteristic according to movement of the object through the image information/lighting model 360 according to movement of the object. Accordingly, when performing image editing to move the object, the electronic device 101 of the disclosure may use the preliminary object image and thus may not additionally use the image generation mode and may edit the image in real time. Further, the electronic device 101 may update depth information of the object included in the image according to the change in the location of the object, thereby editing the image while continuously preserving perspective.

The division, the use, the connection relation, the operation order, and the like of the image analysis model 320, the user input analysis model 330, the preliminary object generation model 340, the image information/lighting model 360, and the depth map generation model 380 presented as examples of the disclosure can be variously modified. In the above example, the process of generating the first edited image 370 to which the preliminary object image is applied through the image information/lighting model 360 and generating the second edited image 390 through the depth map generation model 380, based on the generated first edited image 370 is presented, but embodiments of the disclosure are not limited thereto. For example, the image information and the lighting-related information acquired through the image information/lighting model 360, the preliminary object image acquired through the preliminary object generation model 340, and the depth map information (for example, perspective-related data according to spatial arrangement of objects) acquired through the depth map generation model 380 may be processed by at least one artificial intelligence computing model and generated as the edited image (for example, the first edited image 370). According to an embodiment, the electronic device 101 may separately generate the preliminary object image through the preliminary object generation model 340 in parallel or sequentially while generating the first edited image 370 that expresses an object in a shape drawn by the user through the image analysis model 320 and the user input analysis model 330, and then use the preliminary object image during a process of generating the second edited image 390 later.

Referring to FIG. 3B, the electronic device 101 may receive a user input, for example, a drawing 310. For example, the electronic device 101 may identify the input drawing 310. For example, the user input analysis model 330 of FIG. 3A may identify the input drawing 310. For example, an image generation model 315 that performs multiple model functions may identify the input drawing 310.

According to an example, the drawing 310 may include a sketch 311, text 312, and a control input 313. The sketch 311 may include a drawing forming a predetermined shape for generating, adding, modifying, or moving an object. The text 312 may include a drawing that adds attribute information (e.g., color, texture, shape, material of the object) to a sketch object when the sketch object is generated. For example, the text 312 may include a word, a phrase, or a sentence that is handwritten or otherwise inputted by a user.

The control input 313 may be an input that controls an object or adds information about the object in a manner other than drawing an object shape. The control input 313 may be a drawing input for controlling an object or adding information about the object in a manner other than a drawing representing an object shape. For example, the text 312 may provide a function of adding attribute information, and the control input 313 may provide a function of identifying an editing command. The control input 313 may include a sketch type (e.g., shape, symbol) and/or a text type. The distinction between the sketch 311, the text 312, and the control input 313 may be a functional classification.

In an example, when an arrow is input on (or in a location adjacent to) an object, the processor 120 may move the object based on the direction and length of the arrow. An arrow or text that is input by a user may be an example of a control input 313.

In an example, a control drawing input may be performed based on the user's selection of a preset menu or user interface element provided by the device. A control drawing input may be performed through, for example, color or thickness settings provided by a user interface element for setting attributes for performing a drawing. A control drawing input may be based on the type of input means (e.g., a hand gesture, a pen input, a virtual keyboard, an input pad type, an input area, etc.).

The control input 313 may relate to a command related to editing an image, and may include a drawing for changing (or, modifying) an object. In an example, the electronic device 101 may identify an object to be generated based on the sketch 311 and identify object attribute information added based on the text 312. The electronic device 101 may change the object or perform a general control operation, based on the control input 313. In an example, the control input 313 may include, for example, lines, shapes, symbols, and/or gestures.

For example, the electronic device 101 may generate a drawing-based image (e.g., a preliminary object image) by using the image generation model 315, which may be trained based on machine learning or deep learning (e.g., an artificial intelligence-based image editing model, an artificial intelligence-based computing device, or an artificial intelligence-based computing module).

According to an example, the image generation model 315 may generate a drawing object-based image, based on input drawing (e.g., a sketch for object generation/modification/coloring, a text drawing, a drawing for control, etc.) information, input additional drawing information, and/or input additional object information (e.g., additional content data such as images, text, etc.), and/or input prompts (e.g., prompts generated based on a drawing and/or additional object information transmitted as an input to the generation model).

According to an example, the image generation model 315 may generate, based on the input drawing information, the additional drawing information, and/or additional object information input, an image reflecting perspective information based on lighting information and/or depth information.

In an example, the models illustrated in FIG. 3A may refer to different artificial intelligence models, and may be elements (e.g., modules or units) which provide different functions and may be included in one artificial intelligence model.

In an example, image information and lighting-related information obtained via the image information/lighting model 360 (for example the image information/lighting model 360 of FIG. 3A) , a preliminary object image obtained via the preliminary object generation model 340, and depth map information (e.g., perspective-related data based on spatial arrangement of objects) obtained via the depth map generation model 380 may be processed in the at least one artificial intelligence computing model and generated as an edited image (e.g., a first edited image 370).

In an example, as illustrated in FIG. 3B, the electronic device 101 may include one image generation model 315.

In an example, as illustrated in FIG. 3B, the electronic device 101 may include the generation model 315 that, in at least one artificial intelligence computing model, generates an image that reflects image/lighting/depth information at the time of image generation based on drawing object attributes.

According to an example, the one image generation model 315 may generate a new image 365 based on an input drawing object, an additional image and/or object attribute, and prompt information, which have been input.

According to an example, the one image generation model 315 may analyze the drawing object, the additional image, and/or the object which has been input, acquire information, and generate the new image 365 based on the acquired information.

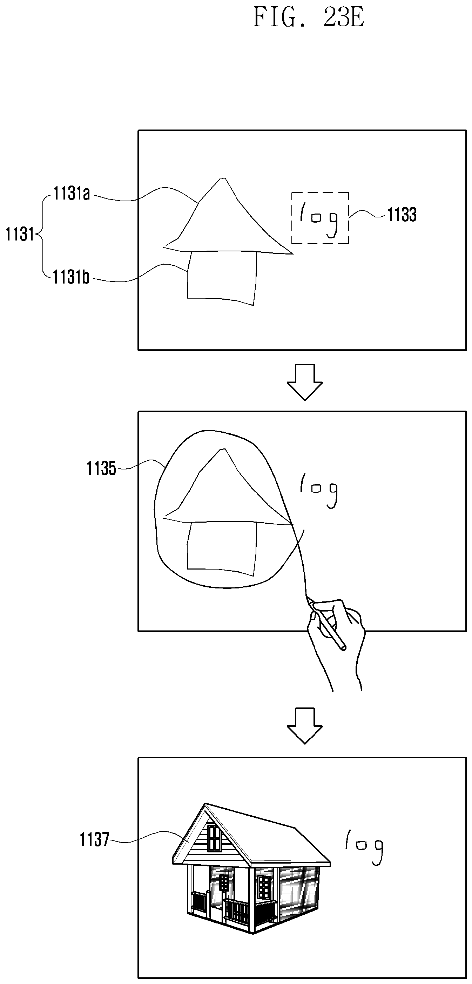

According to an example, the image generation model 315 may generate an image based on the sketch 311, the text 312, and/or the control input 313. For example, the image generation model 315 may identify, from the sketch 311, an object that the user intends to draw. In an example, a sketch of a triangle (1131a in FIG. 23E) and a rectangle (1131b in FIG. 23E) beneath the triangle, and the text "log" (1133 in FIG. 23E) may be inputted. The image generation model 315 may identify an object named a "house" (1131 in FIG. 23E) based on the shape of the sketch of the triangle (1131a in FIG. 23E) and the rectangle (1131b in FIG. 23E) beneath the triangle. The image generation model 315 may determine an attribute of the object, for example, based on the text 312 and/or control input 313. According to an example, when a circular drawing (1135 in FIG. 23E) is input around the sketch of the triangle (1131a in FIG. 23E) and the rectangle (1131b in FIG. 23E) beneath the triangle, the image generation model 315 may recognize the circular drawing (1135 in FIG. 23E) as a control command to identify the sketch within the circular drawing (1135 in FIG. 23E) (or to generate a preliminary object image). Based on the input text, the image generation model 315 may identify the attribute "log cabin", which is a subcategory of a house (1131 in FIG. 23E). The image generation model 315 may generate an object image (or an image including the object) to which the attribute identified from the text 312 and/or control input 313 has been applied. According to an example, the image generation model 315 may generate an object of a log cabin (1137 in FIG. 23E) based on the identified attribute.

According to an example, the image generation model 315 may analyze a drawing, an image in which the drawing is input, information about the image, and/or lighting characteristics. The image generation model 315 may generate text information (e.g., keywords or prompts such as cozy, shining sun-light, before sunset, etc.) that includes information about the analyzed image and/or information about the analyzed lighting characteristics (e.g., the direction of light). When the drawing is received from an original image, the image generation model 315 may identify other objects (including a background) included in the original image. The image generation model 315 may identify the input drawing. The image generation model 315 may identify whether the input drawing (e.g., the sketch 311) is an input to add an object or an input to modify an object. The image generation model 315 may generate information about an object related to the identified drawing as text information (e.g., a prompt). The image generation model 315 may identify depth information related to the drawing. As the drawing is received, the image generation model 315 may generate an object image (or an image including the object) based on the information about the lighting characteristics and/or the depth information. For example, the image generation model 315 may generate a preliminary object image that includes the overall shape of the object. The image generation model 315 may generate the image 365 based on the image information, the information about the lighting characteristics, the depth information, and/or the generated preliminary object image.

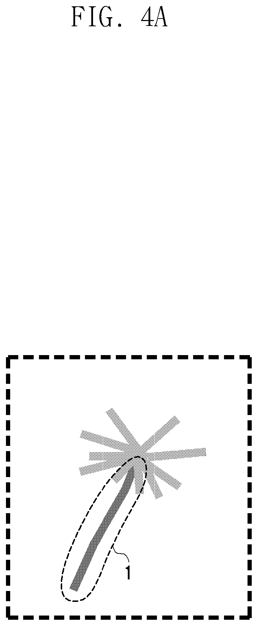

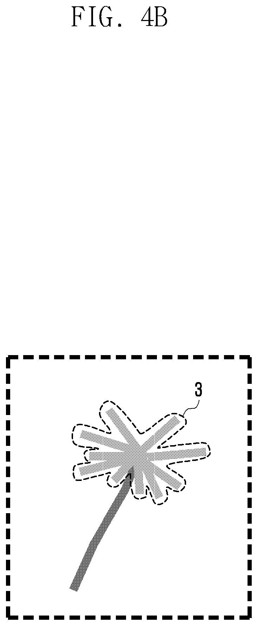

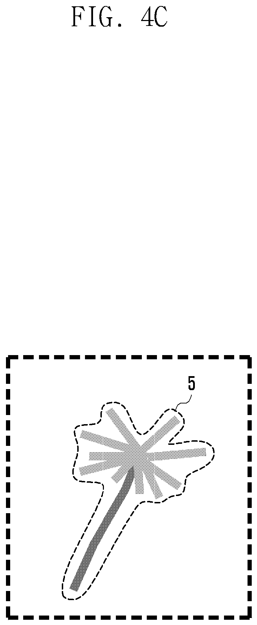

FIGS. 4A, 4B, and 4C are diagrams illustrating a process of recognizing an object, based on drawing elements according to various embodiments.

Referring to FIG. 4A, the electronic device 101 (e.g., the electronic device 101 in FIGS. 1-2) may determine drawing elements according to continuity based on an input time point. For example, the drawing elements may include an individual line configuring a part of the object with the sameness or consistency and a figure or an area including a plurality of lines. The electronic device 101 may determine each drawing element according to a color, a location, and continuity of the input drawing. As an example, the electronic device 101 may receive an input of one line in a first color. One line may be actually input seamlessly. The electronic device 101 may determine one continuously input as a first drawing element 1.

Referring to FIG. 4B, the electronic device 101 may determine drawing elements based on the same color. For example, the electronic device 101 may receive an input of a plurality of second lines in a second color. The plurality of second lines are individual lines but may be input in the same color adjacently to a location at which parts thereof overlap. The electronic device 101 may determine the plurality of second lines input to the adjacent location in the same color as second drawing elements 3.

Referring to FIG. 4C, the electronic device 101 (or an artificial intelligence-based image editing model) may group a plurality of drawing elements. For example, the electronic device 101 may group a plurality of drawing elements, based on at least one of proximity of the location between drawing elements, the relevance, the continuity based on an input time point, and the relevance between the input location and the original image area. For example, the first drawing element 1 and the second drawing element 3 may be input at adjacent locations at a very short time interval and may include the relevance therebetween. The electronic device 101 may determine the first drawing element 1 and the second drawing element 3 as a group 5 of the grouped drawing elements. The electronic device 101 may determine whether there is a control command of adding the object, adding the color, or changing the color or attributes of the object, based on the group 5 of drawing elements.

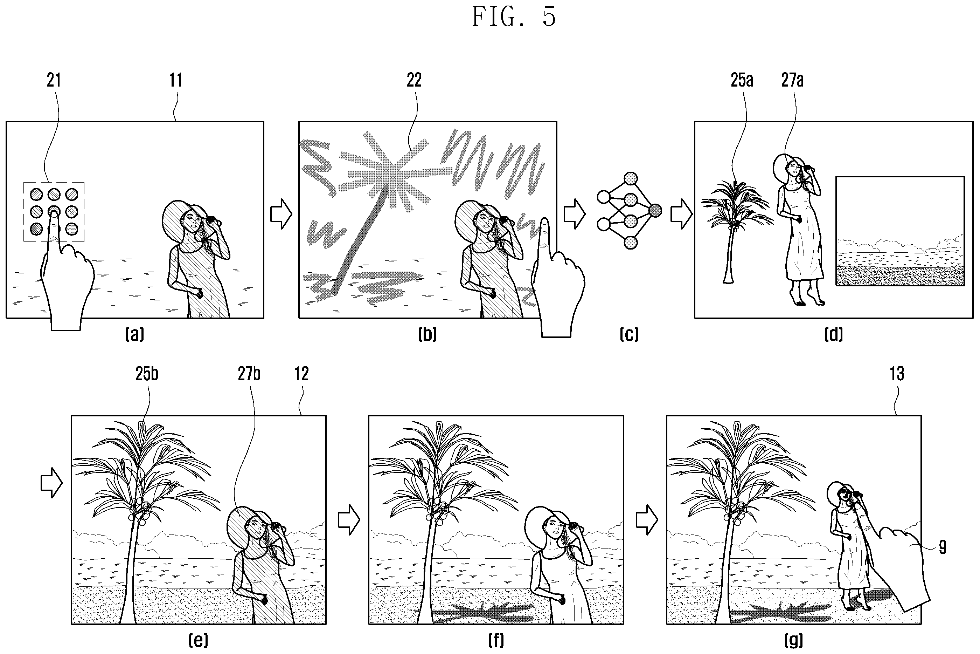

FIG. 5 is a diagram illustrating a process of generating an edited image according to various embodiments.

Referring to FIG. 5-(a), the electronic device 101 may display an image 11 (for example, the original image) and receive a user input in the displayed image. The user input may be an input using a finger, a gesture (or motion), and/or an electronic pen. As an example, the electronic device 101 may display a UI 21 for selecting a color.

Referring to FIG. 5-(b), the electronic device 101 may receive a user input in the selected color in the displayed image and, referring to FIG. 5-(c), identify a drawing input 22 configured by a user input using an image editing model (for example, a user input analysis model).

For example, the electronic device 101 may determine the continuity based on an input time point, a color of the drawing, and/or a drawing element according to an input location. For example, the drawing element may include an individual line configuring a part of the object with the sameness and a figure or an area including a plurality of lines. The electronic device 101 may group a plurality of drawing elements, based on the relationship between the input location of the drawing element and an image area. Further, the electronic device 101 may determine whether the object is added, the color is added, the color is changed, or there is a control command, based on the grouped drawing elements. When the user input (or the drawing input) is determined as an input of adding the object, the electronic device 101 may identify the object, based on a shape drawn by the user input.

As an example, when the screen is small or an area in which the user is to be drawn is small, the electronic device 101 may enlarge the image according to an input of an enlargement gesture (for example, a zoom gesture). The electronic device 101 may analyze the relevance of drawing elements, based on the input drawing elements and automatically group the drawing elements. The electronic device 101 may provide a UE for displaying the grouped drawing elements or modifying the grouped drawing elements. Further, the electronic device 101 may adjust the size and the location of the input drawing and arrange the drawing group at the location intended by the user.

As an example, the electronic device 101 may determine whether the color of the drawing in a background area is brighter or darker than the color of the background and provide a UI for selecting a time/visual option (for example, a.m./p.m., morning/afternoon/evening, sunset time, or the like) and/or a weather option expressed by the image to the user.

The electronic device 101 may generate a prompt for changing the time/visual information expressed by the image, based on a capturing time extracted from metadata of the image. For example, when the capturing time of the image is 12 p.m. and a colored drawing in blue is input into a sky area, the electronic device 101 may generate a prompt for generating clear sky on a bright day. As another example, when the capturing time of the image is 5 p.m. and a colored drawing in blue is input into a sky area, the electronic device 101 may generate a prompt for generating clear sky in the evening.

In parallel or continuously, the electronic device 101 may extract the object (including the background) by using an image editing model (for example, an image analysis model) and analyze information on the image and/or a lighting characteristic. For example, the information on the image may include information on a scene of the image, time/visual information, imagery reminiscent of the image, detailed information related to an object included in the image, relative sizes of objects, and/or image/object information around a user input. The lighting characteristic may include information on the type, the direction, the intensity, the angle, and/or the range of light.

Referring to FIG. 5-(d), the electronic device 101 may generate preliminary object images 25a and 27a for the object by using an image editing model (for example, a preliminary object generation model). For example, the preliminary object images 25a and 27a may include a preliminary object image for an object determined based on a shape of the drawing and/or an object included in the image. For example, the object included in the image may be an object (for example, a person, a main object, or the like) included in the original image rather than that by the drawing input 22. The electronic device 101 may generate the preliminary object images 25a and 27a including the entire shape of the object. For example, the electronic device 101 may generate the preliminary object images 25a and 27a in the completed shape for the object determined from the shape of the drawing input 22. As an example, the electronic device 101 may extract the object (or information on the object) included in the original image 11 rather than the drawing input 22 and generate the preliminary object images 25a and 27a in the completed shape for the extracted object (or information on the object). The preliminary object images 25a and 27a of the object included in the original image 11 and/or the object identified by the user may be generated in the completed object shaped regardless of whether they are displayed on the display 160.

For example, the preliminary object images 25a and 27a may include image information that expresses a two-dimensional entire shape of the object, image information that expresses a three-dimensional entire shape of the object, image information that expresses various shapes which may be different depending on angles at which the object is viewed, image information that expresses various shapes which may be different depending on focal distances, and image information that expresses various shapes which may be different depending on view angles. When the image is edited (for example, the object moves) or a display area of the display 160 changes, the electronic device 101 may process the image in real time by using the generated preliminary object image and display the processed image.

As an example, the electronic device 101 may identify an object which the user desires to add based on an input drawing shape and information on the identified image. The electronic device 101 may generate a single preliminary object image or a plurality of preliminary object images for the identified object. Further, the electronic device 101 may provide a UI for selecting one object image from the plurality of preliminary object images. When one preliminary object image is selected, the electronic device 101 may generate a first edited image 12 to which an object 25b is added based on a selected preliminary object image 25a.

As an example, the electronic device 101 may extract the object (acquire information on the object type, the object appearance, or the like) from another relevant image by using metadata of the image (for example, information such as date/time/location or the like). For example, the electronic device 101 may identify a place in which the image is captured from the metadata. The electronic device 101 may search for and extract an object which is the same type of the identified object from another image captured in a place that is the same as or adjacent to the identified capturing place. As another example, the electronic device 101 may search for an image including the same or similar information for the place or the object through crawling (or web search) using a keyword related to the identified capturing place and information on the identified object and acquire information on the object which the user desires to add. For example, the electronic device 101 may identify a time at which the image is captured in the metadata. The electronic device 101 may search for and extract an object which is the same type of the identified object from another image captured at a time point similar to the identified time.

As another example, the electronic device 101 may search for and extract (for example, information on the object type, the object appearance, or the like) the object which is the same type as the identified object from another image, based on information on the existing object included in the image (for example, the original image). As an example, the electronic device 101 may receive an input of a drawing on a face of a specific person included in the image. The electronic device 101 may identify sunglasses as the object (or the object type), based on a shape of the input drawing. The electronic device 101 may search for another image in which a specific person is wearing sunglasses. The electronic device 101 may generate a preliminary object image, based on information on the sunglass image included in the found image.

The electronic device 101 may generate one preliminary object image, based on image information of one object among the extracted objects. According to an embodiment, the electronic device 101 may generate a plurality of preliminary object images, based on image information of a plurality of extracted objects. The electronic device 101 may display the plurality of preliminary object images and generate a first edited image to which the object is added based on one preliminary object image according to selection of the user.

As an example, when there is an object of a specific type which the user previously drawn, the electronic device 101 may preferentially consider the object to be of the specific type previously drawn. For example, when the user adds an existing cat to a sofa as a new object, the electronic device 101 may preferentially determine a cat during a process of determining the type of an animal on the sofa drawn in another image. As an example, when the user makes a drawing of adding one object to the image, the electronic device 101 may propose addition of another object in consideration of image information. For example, when the user draws an umbrella in the image, the electronic device 101 may propose addition of cloud and raindrop or automatically add the same.

Referring to FIG. 5-(e), the electronic device 101 may arrange the objects 25b and 27b generated based on the preliminary object images 25a and 27a generated using the image editing model (for example, the image information/lighting model) to match the original image 11 and generate the first edited image 12 which reflects information on the lighting characteristic to update the lighting information as illustrated in FIG. 5-(f).

As an example, when the first edited image 12 is generated from the original image 11, the electronic device 101 may apply a similar (or consistent) editing result to other images captured in a time and/or place similar to the original image 11. For example, when a palm tree is added next to the user in the original image, the electronic device 101 may generally reflect the editing result to other images captured in the place that is the same as the capturing place of the original image 11. When the location of the person moves in the original image 11, the electronic device 101 may generally reflect the editing result to other images captured in the place that is the same as the capturing place of the original image 11. For example, the electronic device 101 may provide a UI for performing automatic batch editing. The electronic device 101 may reflect the editing result in a plurality of selected images. As an example, when an image edited by the user and another image are selected together, the electronic device 101 may provide a UI for asking about whether to apply the editing result of the edited image to another image. For example, the editing result (for example, a shape of the added object) reflected in another image may be adjusted using a preliminary object image pre-generated based on a distance between the object to be added and another object (included in another image, the type of another object, the size of another object, and the like. For example, the electronic device 101 may adjust the size, the sight, and/or the position of another object included in the original image 11, based on the relationship with the newly added object. For example, when a puppy is drawn next to the person included in the original image 11, the electronic device 101 may automatically adjust the size, the sight, and/or the position of the person and/or the puppy in order to make the person look at the puppy by using the preliminary object image of the person.

The electronic device 101 may acquire depth information of the object from the first edited image 12 (for example, the image to which the image information and/or the lighting characteristic are applied) by using the image editing model (for example, the depth map generation model). For example, the depth information may be perspective-related data according to spatial arrangement of objects. The electronic device 101 may store depth information of each object in the acquired first edited image 12 in the memory 130.

Referring to FIG. 5-(g), the electronic device 101 may receive an object movement command from a user 9. When the object movement command is received from the user 9, the electronic device 101 may change the location of the object 27b (e.g. object 27b of FIG. 5-(e)) according to the user command and update depth information of the moved object 27b, based on the change in the location of the object 27b. As an example, as illustrated in FIG. 5-(g), the electronic device 101 may move the object 27b of the person to a location farther than the location of the object 27b of the person included in the image of FIG. 5-(f) according to the object movement command of the user 9. The object 27b of the person of which only a potion (for example, a first part) is displayed in the image of FIG. 5-(f) according to location movement may be displayed in the entire shape in the image of FIG. 5-(g). For example, the electronic device 101 may display the entire shape of the object 27b of the person by using the preliminary object image 27a.

The electronic device 101 may generate the second edited image 13, based on the updated depth information. Further, the electronic device 101 may change a lighting characteristic according to object movement by using the image editing model (for example, the image information/lighting model).

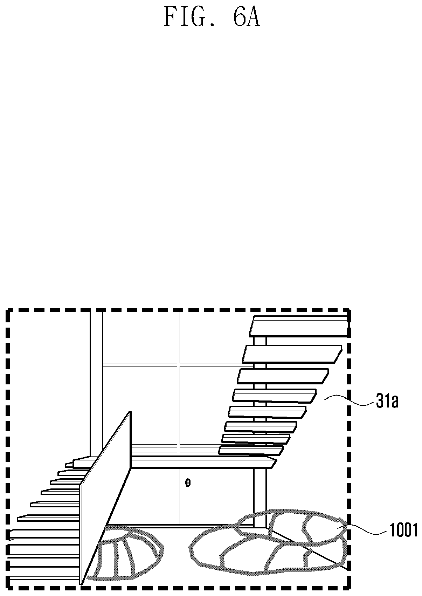

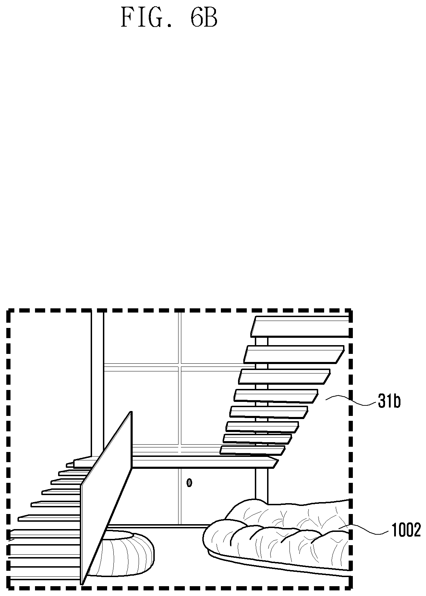

FIGS. 6A and 6B are diagrams illustrating an example of editing an image according to various embodiments.

Referring to FIG. 6A, a drawing in which a drawing element 1001 is added to an original image 31a by a user input is illustrated. The electronic device 101 may identify whether the user input is an input of adding an object. When the user input is identified as the input of adding the object, the electronic device 101 may identify attributes of the drawing 1001 and identify information on the original image 31a and/or the lighting characteristic. The electronic device 101 may generate a prompt for adding the object, based on the identified attributes of the drawing 1001 and the information on the image 31a and/or the lighting characteristic. As an example, the generated prompt may include information of "Generate light blue sofa in the style of avant-garde design".

Referring to FIG. 6B, an edited image 31b (for example, the first edited image) including an added object 1002 is illustrated. The electronic device 101 may generate an object image (for example, a preliminary object image) by using a preliminary object generation model, based on the generated prompt. The generated preliminary object image may be an image including the entire shape of the object. The electronic device 101 may generate the edited image 31b including the object generated based on the preliminary object image. For example, the edited image 31b including the added object 1002 may be generated using a portion of the preliminary object image. When an additional editing request such as movement of the added object 1002 or insertion of another object is received, the electronic device 101 may display a changed shape of the added object 1002 by using the preliminary object image.

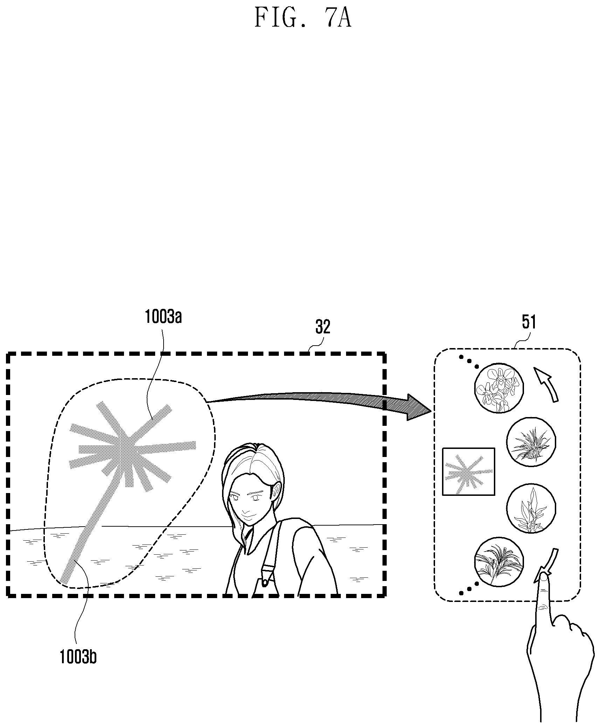

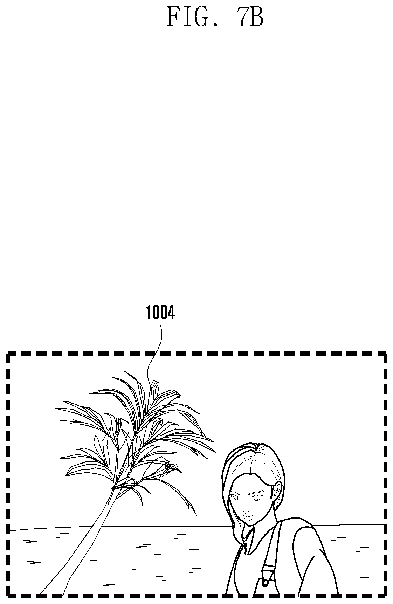

FIGS. 7A and 7B are diagrams illustrating an example of determining an object by analyzing a user input according to various embodiments.

Referring to FIG. 7A, an image 32 including a user input is illustrated. As an example, the user may input drawing elements 1003a and 1003b through a touch or motion. The user may select a specific color and input the desired drawing elements 1003a and 1003b. As an example, the user may input the drawing elements 1003a and 1003b corresponding to a preset pattern. The electronic device 101 may display the drawing elements 1003a and 1003b in the image 32 according to the user input.

The electronic device 101 may identify the user input, based on a shape configured by the user input. The processor 120 may group a plurality of user inputs according to a predetermined reference and identify the user input. For example, the predetermined reference may include a color, proximity of an input location, continuity based on an input time point, and relevance between the input location and an original image area. In FIG. 7A, the first drawing element 1003a may be one drawing element including a plurality of lines input at adjacent locations in the same color and of which portions overlap each other. Further, the second drawing element 1003b may be a drawing element including one line continuously input. The first drawing element 1003a and the second drawing element 1003b may be input at adjacent locations at a very short time interval and may include relevance therebetween. The electronic device 101 may group the first drawing element 1003a and the second drawing element 1003b and determine the user input. Since the grouped drawing elements 1003a and 1003b are not identical to preset control drawing elements and include a predetermined shape, the electronic device 101 may determine an object identified based on the grouped drawing elements 1003a and 1003b as the input of adding the object.

The electronic device 101 may identify information on the image 32, a lighting characteristic, and/or an object. Further, the electronic device 101 may identify attributes of the drawn object, based on the identified image 32, an object included in the image 32, and shapes of the input drawing elements 1003a and 1003b. As an example, the image 32 includes a sea, and the information on the image 32 is a beach, summer, recreation, travel, or the like), and the drawing elements 1003a and 1003b may be determined as a tree shape. For example, the electronic device 101 may identify attributes of the object (for example, the object type, the characteristic, or additional information) as a tree on the beach, a tree in a tropical area, a palm tree, or the like. The electronic device 101 may generate a preliminary object image for the identified object. The electronic device 101 may extract an object from the image including an object related to the identified object from the stored image and/or the found image and generate a preliminary object image. As an example, the electronic device 101 may generate a preliminary object image in various shapes, based on attributes of the identified object. The object image may be generated in the entire shape of the object in consideration of a future image editing process. Accordingly, the generated object image may be referred to as a complete object image. The electronic device 101 may provide a plurality of generated preliminary object images through a UI 51. For example, the preliminary object image may be referred to as preliminary image information or candidate image information.

Referring to FIG. 7B, an image including at least a portion of a generated preliminary object image 1004 is illustrated. The user may select one preliminary object image from a UI 51 including samples (for example, thumbnails) of a plurality of preliminary object images. The electronic device 101 may arrange the selected preliminary object image 1004 in a drawing area of the image 32. Further, the electronic device 101 may reflect the identified lighting characteristic in the preliminary object image 1004 to generate an edited image. In addition, the electronic device 101 may identify depth information for a main object in the image including an added object and store the identified depth information.

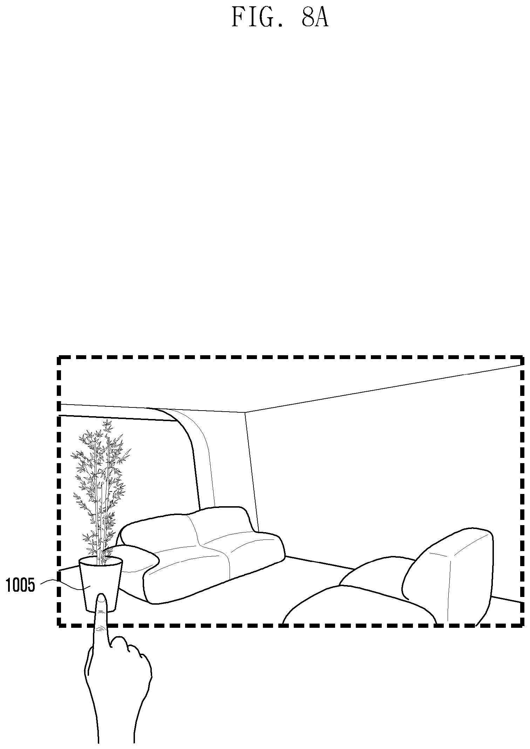

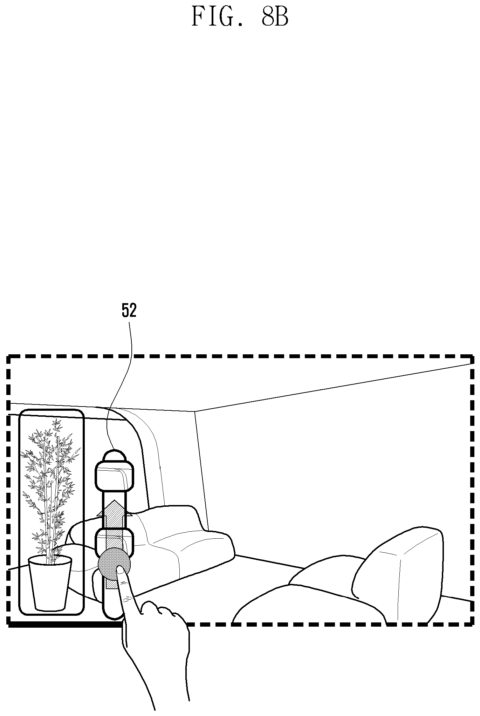

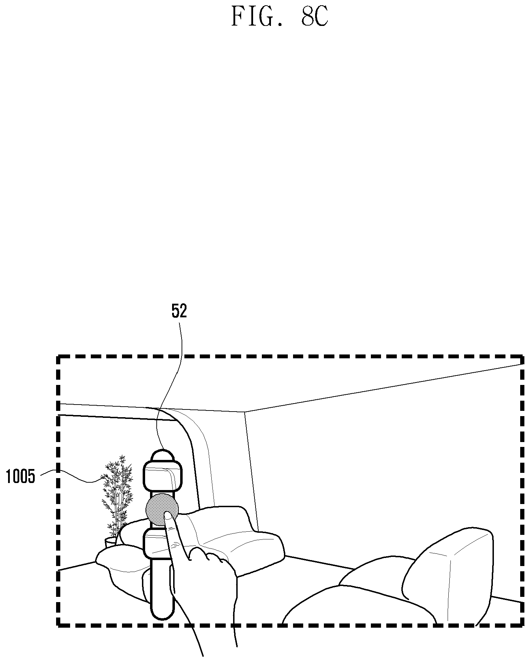

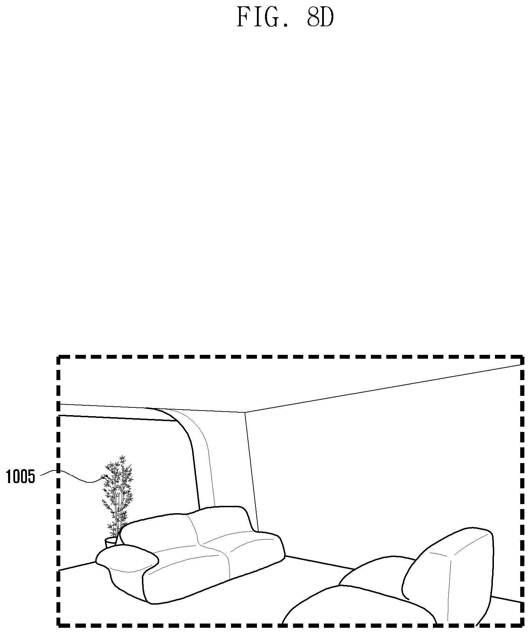

FIGS. 8A, 8B, 8C, and 8D are diagrams illustrating an example of moving an object within an image while maintaining reality according to various embodiments.

Referring to FIG. 8A, an image (for example, a first edited image) to which the object is added is illustrated. The user may move the object within the image. When the object within the image moves, the electronic device 101 may change the size and the location of the object by using the depth information to edit the object to match the image. As an example, an object of a plant 1005 within the image may be selected by the user. According to an embodiment, the electronic device 101 may express a lighting effect varying depending on the location and/or the size of the object, based on lighting characteristic information of the image. For example, the change in the lighting effect may include the intensity or direction of natural lighting or indoor lighting, a change in hue, saturation, brightness, or texture of the object surface considering an effect of another object, or a change in shadow.

Referring to FIG. 8B, according to selection of the plant 1005 corresponding to one of the objects within the image, the electronic device 101 may display a scroll bar receiving an input of location movement of the plant 1005. The electronic device 101 may change the location of the selected plant 1005 in accordance with a user input through the scroll bar 52. According to an embodiment, the electronic device 101 may acquire or update depth information in real time (or periodically) in order to maintain hiding and perspective between the objects. The electronic device 101 may determine whether objects are hidden by each other, based on locations and depth information of the objects.

Referring to FIG. 8C, the electronic device 101 may update depth information in accordance with a user input through the scroll bar 52 and change in real time (or periodically) the location of the plant 1005, a part of the plant to be displayed, a part of the plant to be hidden, and the size thereof, based on the updated depth information.

Referring to FIG. 8D, when the user removes a touch from the scroll bar 52, the electronic device 101 may identify the location and the size of the plant 1005 while the touch is removed as the final location and size. The electronic device 101 may change the lighting effect within the image, based on the final location and size of the plant 1005 and the identified lighting characteristic information. The electronic device 101 may assign a lighting effect corresponding to the change in the location and the size of the plant 1005 to generate an edited image (for example, a second edited image in which the location of the plant is edited).

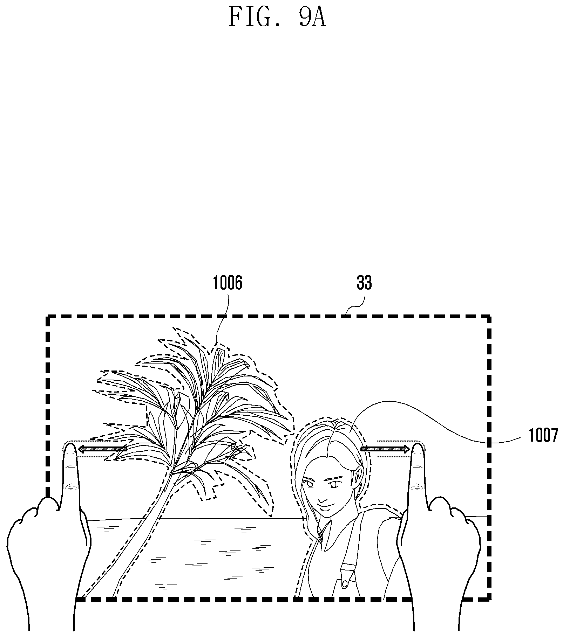

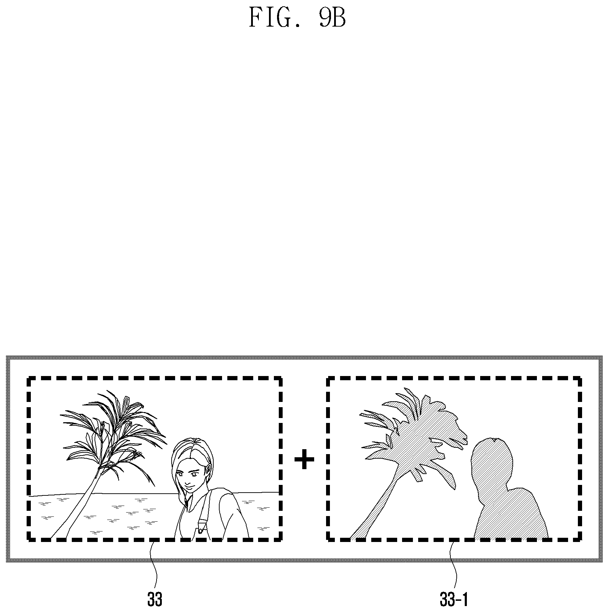

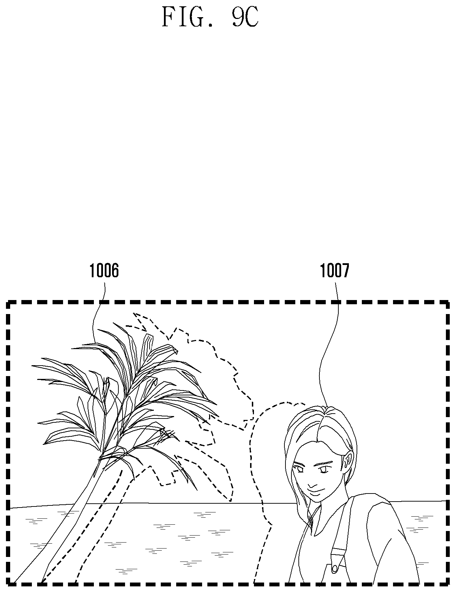

FIGS. 9A, 9B, and 9C are diagrams illustrating an example of moving an object by using depth information according to various embodiments.

Referring to FIG. 9A, a beach image 33 including an object of a tree 1006 and an object of a person 1007 is illustrated. The user may touch the tree 1006 and the person 1007 and move the them in opposite directions.

Referring to FIG. 9B, the electronic device 101 may change locations of the tree 1006 and the person 1007 by using both the image 33 and depth information 33-1. The electronic device 101 may update the depth information 33-1 in order to maintain the relationship and perspective between the objects. Further, the electronic device 101 may identify lighting characteristic information of the image 33.

Referring to FIG. 9C, when the user removes the touch from the tree 1006 and the person 1007, the electronic device 101 may identify the locations and sizes of the tree 1006 and the person 1007 while the touch is removed as the final locations and sizes. The electronic device 101 may change a lighting effect within the image, based on the final locations and sizes of the tree 1006 and 1007, and the identified lighting characteristic information. The electronic device 101 may assign a lighting effect corresponding to the change in the locations and the sizes of the tree 1006 and the person 1007 to generate an edited image (for example, a second edited image) in which the object moves.

As an example, after editing and generating the image, the electronic device 101 may provide a short cut reality function of generating gif data that makes the user see motion of the object for a predetermined time, based on the original image or the edited image. In order to make the recognized object naturally move, the image generation model may learn a direction vector in advance.

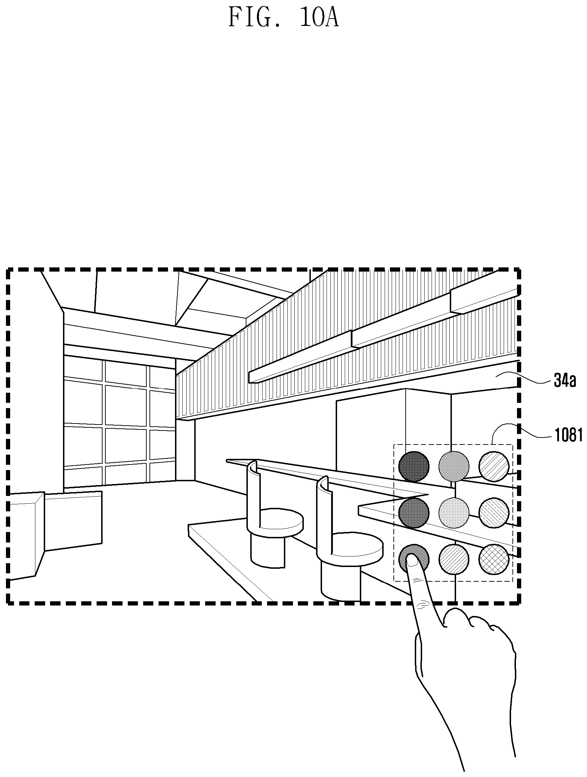

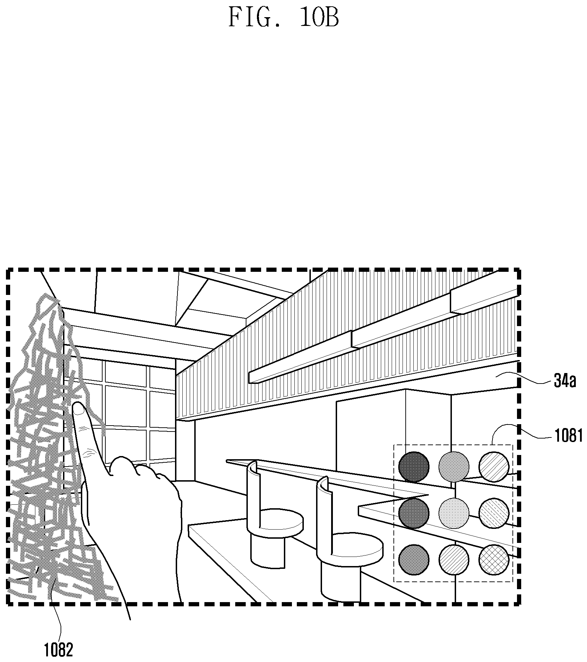

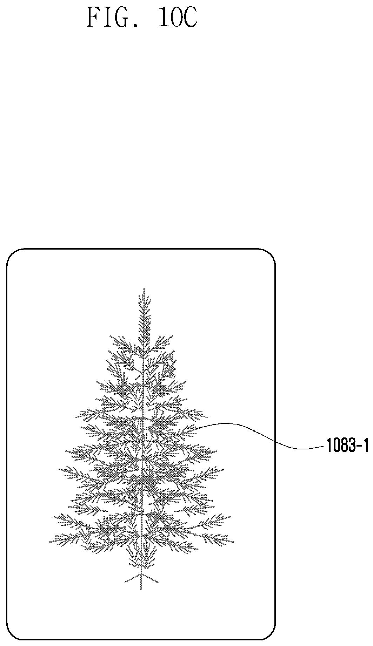

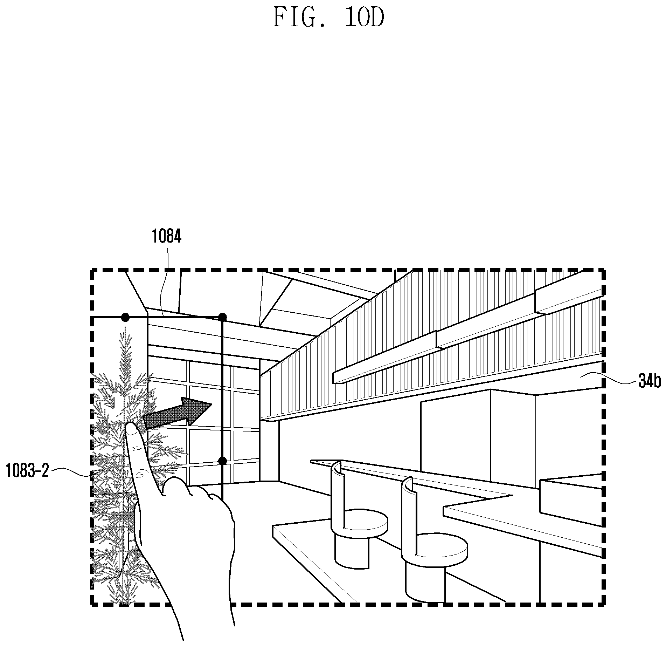

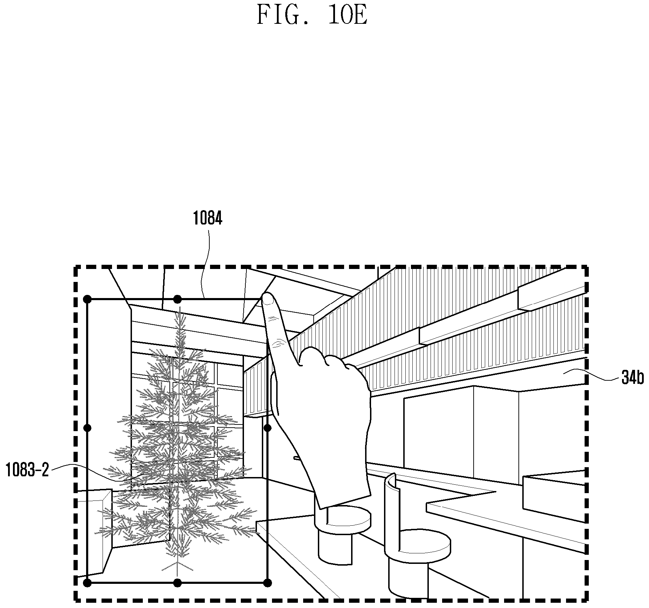

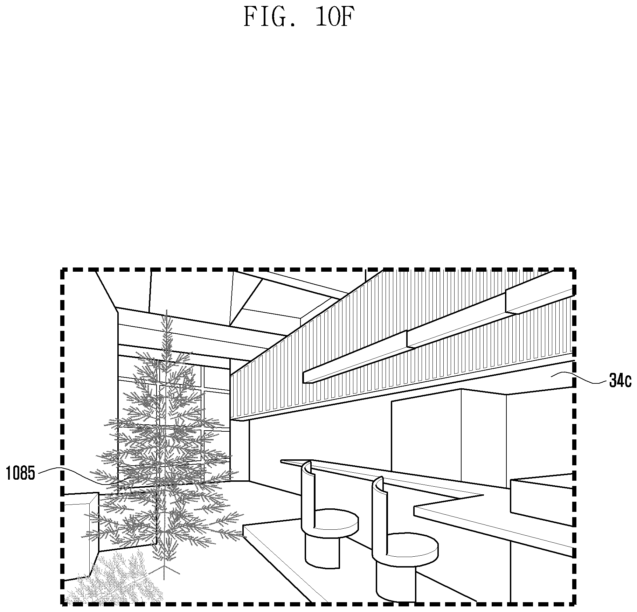

FIGS. 10A, 10B, 10C, 10D, 10E, and 10F are diagrams illustrating an example of adding and moving an object according to various embodiments.

Referring to FIG. 10A, the electronic device 101 may display an image 34a (for example, the original image) and receive a user input in the displayed image 34a. As an example, the electronic device 101 may display a UI 1081 for selecting a color.

Referring to FIG. 10B, the electronic device 101 may receive an input of a drawing in the image 34a. The electronic device 101 may determine a drawing element according to continuity based on an input time point, a color of the drawing, and/or an input location. When it is determined that the drawing element is an input for adding the object, the electronic device 101 may identify the object which the user desires to add based on a shape of the input drawing and information on the identified image. As an example, when receiving an input of a green drawing element 1082 of which an entire shape is a triangle in an indoor image, the electronic device 101 may determine the input drawing element 1082 as an object of a tree or a Christmas tree.

Referring to FIG. 10C, the electronic device 101 may generate a preliminary object image 1083-1 for the object. The electronic device 101 may generate the preliminary object image 1083-1 including the entire shape of the object. The object identified by a user input may be generated in a completed object shape regardless of the shape displayed on the display 160.

Referring to FIG. 10D, the electronic device 101 may arrange an object 1083-2 generated based on the generated preliminary object image 1083-1 to match other objects in the original image 34a and reflect lighting characteristic information to generate a first edited image 34b. As an example, only a portion of the object 1083-2 added to the first edited image 34b, rather than the entire shape thereof, may be displayed according to the location in the image 34d. The electronic device 101 may acquire depth information of the added object 1083-2 from the first edited image 34b.

The electronic device 101 may receive an object selection command from the user. For example, when receiving the object selection command from the user, the electronic device 101 may display an indicator 1084 of displaying an area of the selected object 1083-2.

Referring to FIG. 10E, the electronic device 101 may receive a command of moving the selected object 1083-2. The electronic device 101 may change the location of the object 1083-2 including the indicator 1084 according to a user command and update depth information of the moved object 1083-2, based on the change in the location of the object 1083-2. As an example, the user may adjust the size of the object 1083-2 through the indicator 1084. The electronic device 101 may update depth information of the object 1083-2, based on the changed location and/or size.

Referring to FIG. 10F, the electronic device 101 may generate a second edited image 34c including an object 1085 of which the location has moved. According to an embodiment, the electronic device 101 may generate the second edited image 34c by using the updated depth information. The electronic device 101 may display an entire shape of the object 1085 according to the moved location of the object. The electronic device 101 may display the entire shape of the moved object 1085 by using the generated preliminary object image 1083-1. According to an embodiment, the electronic device 101 may change a lighting characteristic according to movement of the object 1085.

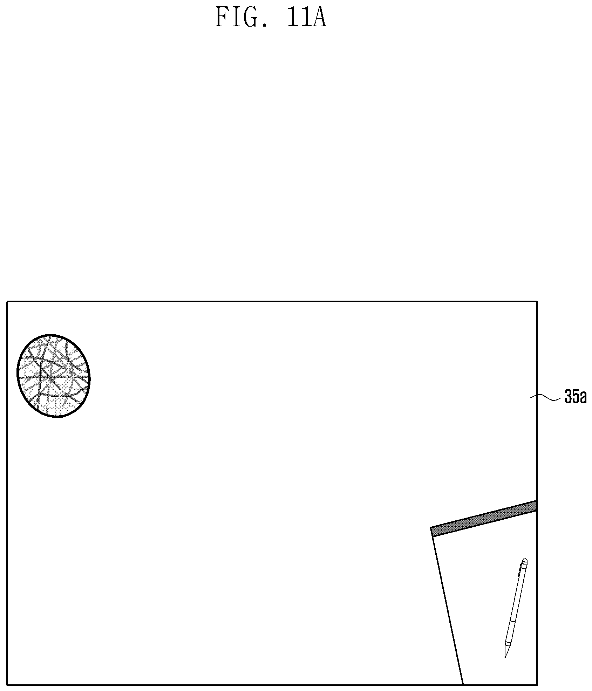

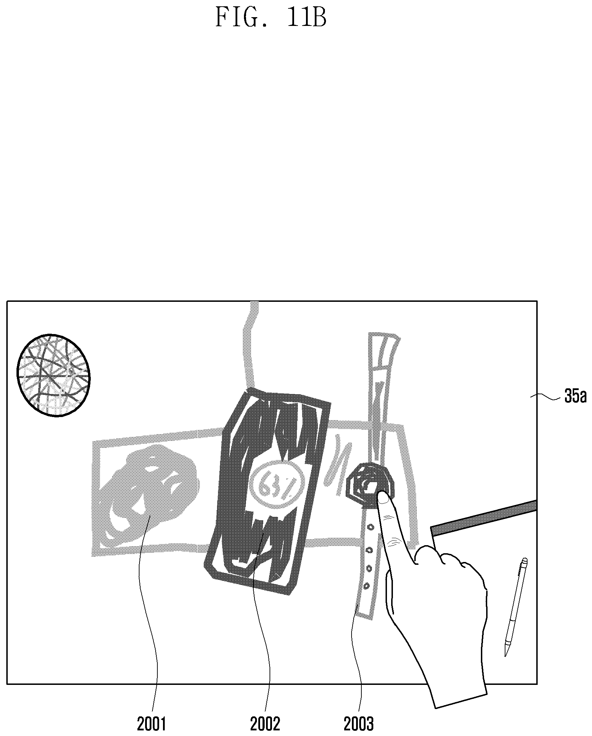

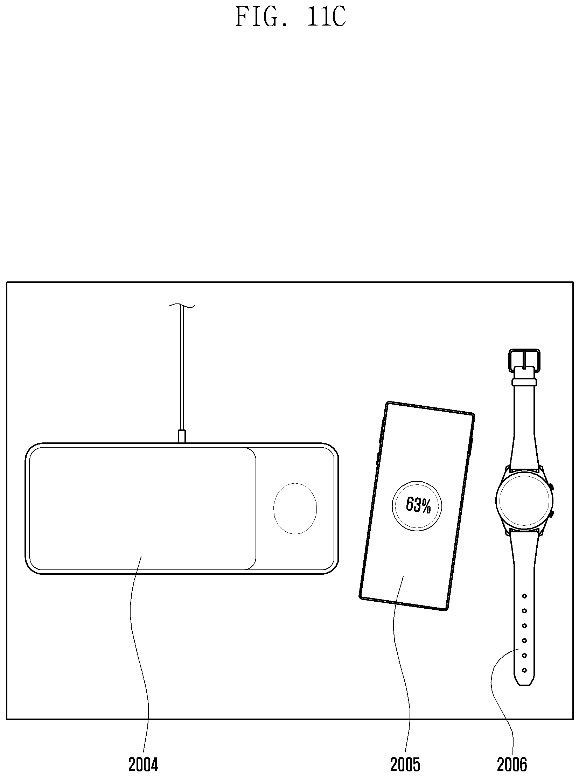

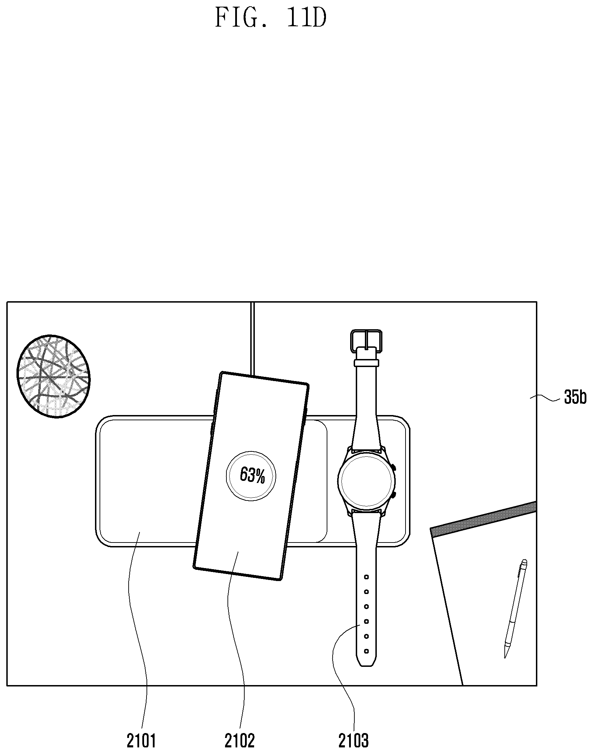

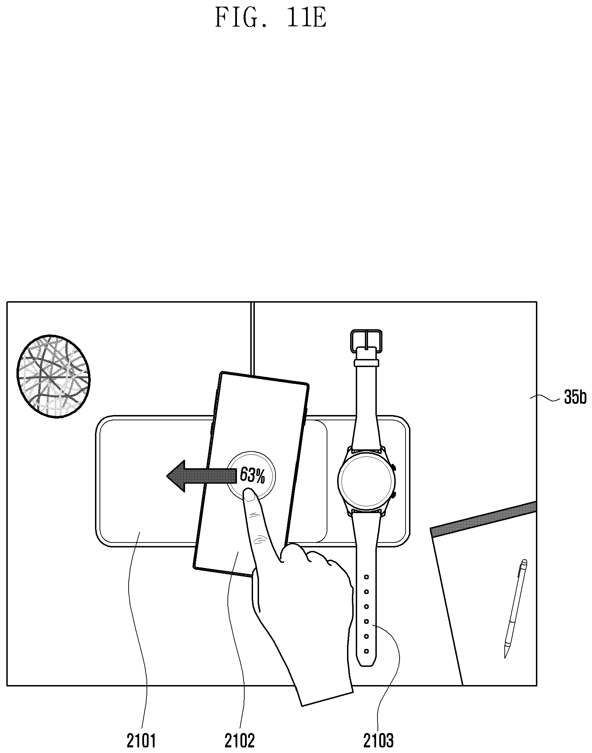

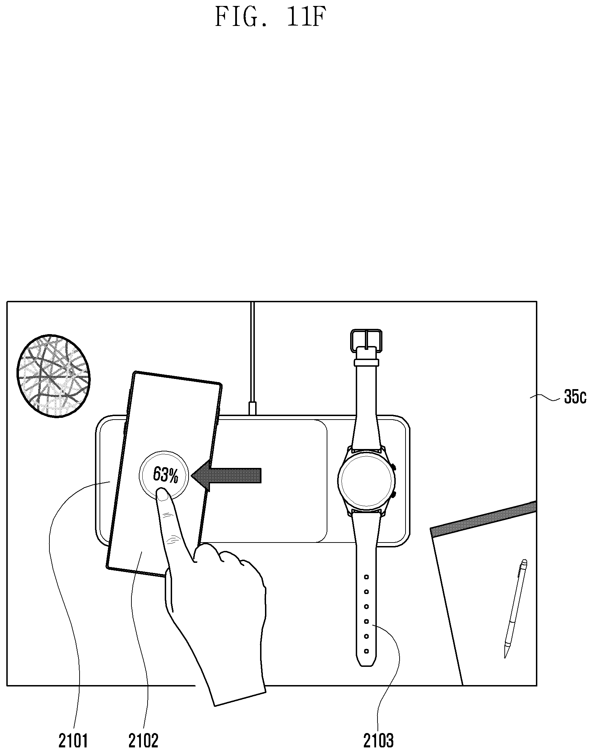

FIGS. 11A, 11B, 11C, 11D, 11E, and 11F are diagrams illustrating an example of adding and moving a plurality of objects according to various embodiments.

Referring to FIG. 11A, the electronic device 101 may display an image 35a (for example, the original image) and receive a user input in the displayed image 35a.

Referring to FIG. 11B, the electronic device 101 may receive an input of a drawing in the image 35a. When it is determined that the input drawing is an input for adding the object, the electronic device 101 may identify an object which the user desires to add based on a shape of the input drawing and information on the identified image. The electronic device 101 may receive an input of a plurality of drawing elements 2001, 2002, and 2003. The electronic device 101 may determine whether the plurality of drawing elements 2001, 2002, and 2003 is included in one object or configures individual objects. For example, the electronic device 101 may determine whether the plurality of drawing elements is a plurality of drawing elements 2001, 2002, and 2003 included in one object or a plurality of drawing elements 2001, 2002, and 2003 configuring individual objects according to colors, locations, and continuity of the input drawings.

Referring to FIG. 11C, the electronic device 101 may generate preliminary object images 2004, 2005, and 2006 for the object. When it is determined that the plurality of drawing elements is a plurality of drawing elements 2001, 2002, and 2003 configuring individual objects (for example, a wireless charger, a smartphone, and a smart watch), the electronic device 101 may generate preliminary object images 2004, 2005, and 2006 including entire shapes of the respective objects.

Referring to FIG. 11D, the electronic device 101 may arrange a plurality of objects 2101, 2102, and 2103 generated based on the plurality of generated preliminary object images 2004, 2005, and 2006 to match the original image and reflect lighting characteristic information to generate a first edited image 35b. Only portions of the plurality of objects 2101, 2102, and 2103 added to the first edited image 35b, rather than the entire shapes thereof, may be displayed according to locations thereof. The electronic device 101 may acquire depth information of the plurality of added objects 2101, 2102, and 2103 from the first edited image 35b.

Referring to FIG. 11E, the electronic device 101 may receive a movement command for the object 2102 (for example, the smartphone) selected from the plurality of objects 2101, 2102, and 2103 and change the location of the selected object 2102 according to the user command as illustrated in FIG. 11F.

The electronic device 101 may calibrate the first object 2101 (for example, the wireless charger) according to movement of the selected object 2102. As an example, a hidden area of the first object 2101 may be changed according to movement of the selected object 2102 on the first object 2101. The electronic device 101 may calibrate the first object 2101, based on the preliminary object image 2004 of the first object 2101 in consideration of the moved location of the selected object 2102. The electronic device 101 may generate a second edited image 35c in which the selected object 2102 moves and the first object 2101 is calibrated. As an example, the electronic device 101 may display the first object 2101 including the hidden part by using the preliminary object image 2004 for the first object 2101 without any separate in-painting process for generating a part of the first object 2101 hidden by the existing location of the second object 2102.

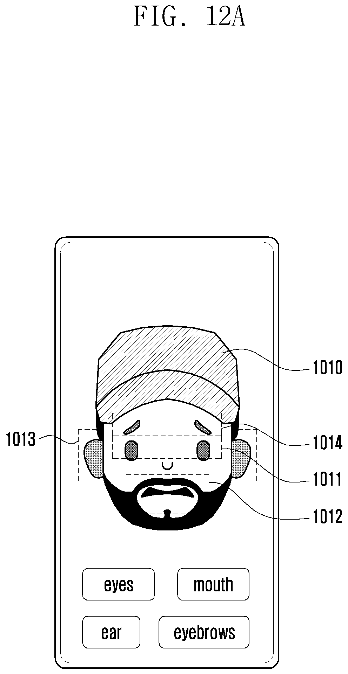

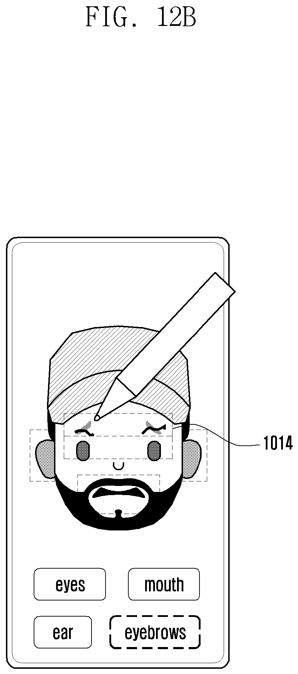

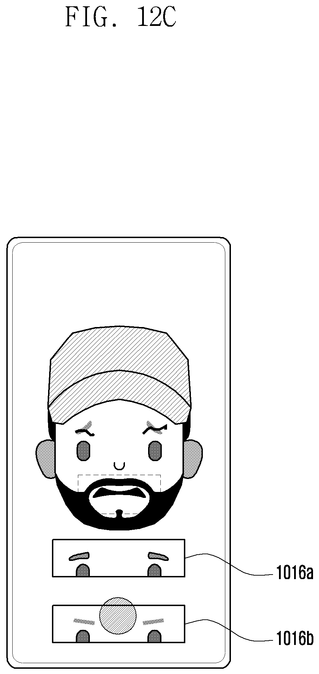

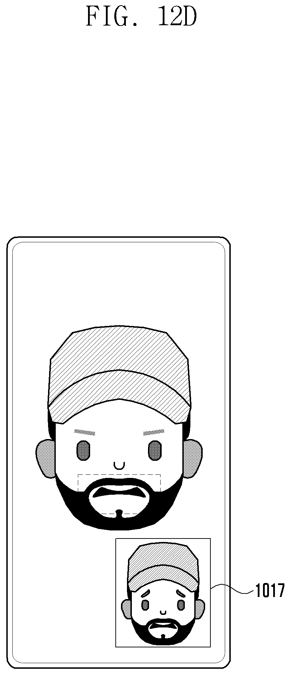

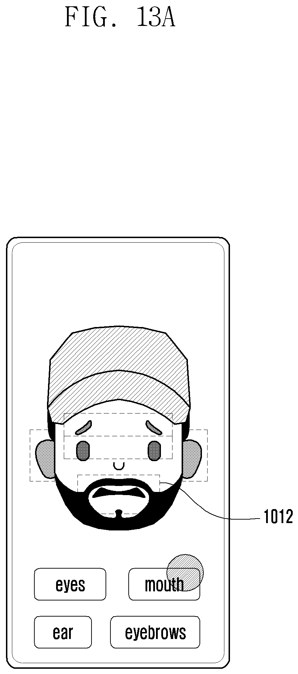

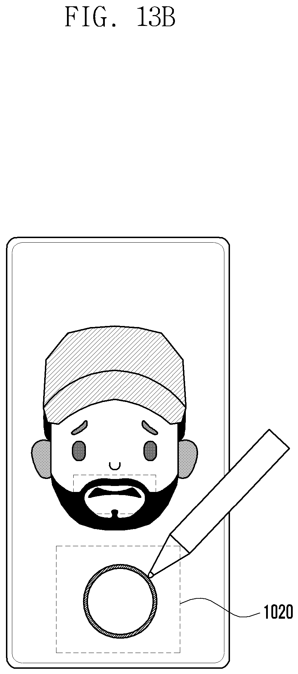

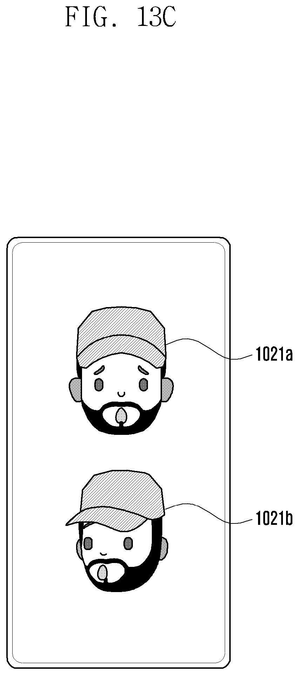

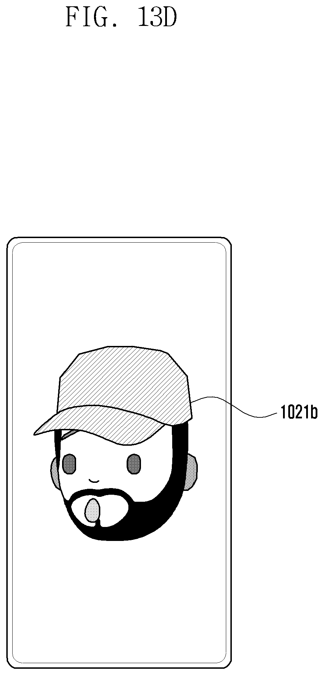

FIGS. 12A, 12B, 12C, 12D, 13A, 13B, 13C, and 13D are diagrams illustrating an example of changing a shape of a partial area of an object according to various embodiments.

Referring to FIG. 12A, as an example, the electronic device 101 may display an image including a face 1010. The electronic device 101 may analyze a main part of the face 1010 and display information on the analyzed main part. For example, the electronic device 101 may analyze an eye part 1011, a mouth part 1012, an ear part 1013, and an eyebrow part 1014 and display the eyes, the mouth, the ears, and the eyebrows.

Referring to FIG. 12B, the user may input a drawing onto one or more parts of the face 1010. As an example, the user may input a drawing for changing the shape of the eyebrows into the eyebrow part 1014. The electronic device 101 may display the input drawing on the face 1010. Further, the electronic device 101 may indicate display information corresponding to the part to which the drawing is input by using highlight or the like.

Referring to FIG. 12C, the electronic device 101 may generate a plurality of images for the part to which the drawing is input, based on the input drawing. The electronic device 101 may generate a plurality of images by using the preliminary object generation model 340 (e.g. preliminary object generation model 340 of FIG. 3). The electronic device 101 may generate a shape of the drawing and the input part as a prompt and input the generated prompt into the preliminary object generation model 340 to generate an image. As an example, the electronic device 101 may generate a prompt of "straight lined eyebrows" and generate a plurality of eyebrow images 1016a and 1016b by using the preliminary object generation model 340. The electronic device 101 may display the plurality of generated eyebrow images 1016a and 1016b on the display 160. The user may select one of the plurality of displayed eyebrow images 1016a and 1016b.

Referring to FIG. 12D, the electronic device 101 may display a completed face to which the second eyebrow image 1016b selected by the user is applied on the display 160. The electronic device 101 may display the original image 1017 together with the edited image.

Referring to FIG. 13A, the electronic device 101 may analyze a main part of the face 1010 and display information on the analyzed main part. For example, the electronic device 101 may analyze an eye part 1011, a mouth part 1012, an ear part 1013, and an eyebrow part 1014 and display the eyes, the mouth, the ears, and the eyebrows. The user may select a part to be edited. As an example, as illustrated in FIG. 13A, the user may select the mouth part 1012.

Referring to FIG. 13B, the electronic device 101 may display an indicator in the selected mouth part 1012 in the face 1010 and display an area 1020 to receive an input of a drawing in one area of the display 160. When the user inputs a drawing in a shape of "O", the electronic device 101 may generate a prompt, based on the shape of the input drawing. For example, the electronic device 101 may generate a prompt of "mouth shape like letter O" and input the prompt to the preliminary object generation model 340.

Referring to FIG. 13C, the preliminary object generation model 340 may generate a plurality of face images 1021a and 1021b in which the mouth shape is edited based on the input prompt. The electronic device 101 may display the plurality of generated face images 1021a and 1021b on the display 160. The user may select one face image from among the plurality of face images 1021a and 1021b. For example, the user may select the second face image 1021b.

Referring to FIG. 13D, the electronic device 101 may display the selected second face image 1021b as an edited image.

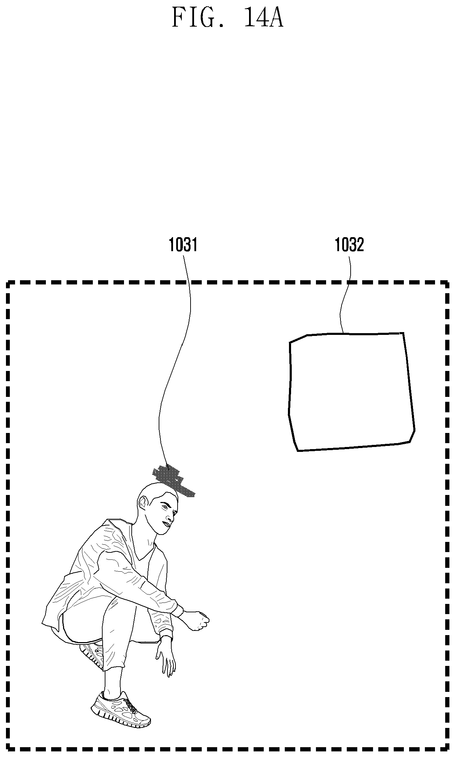

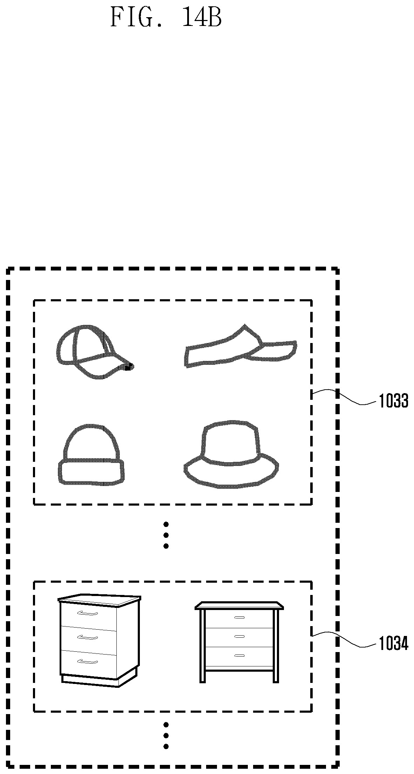

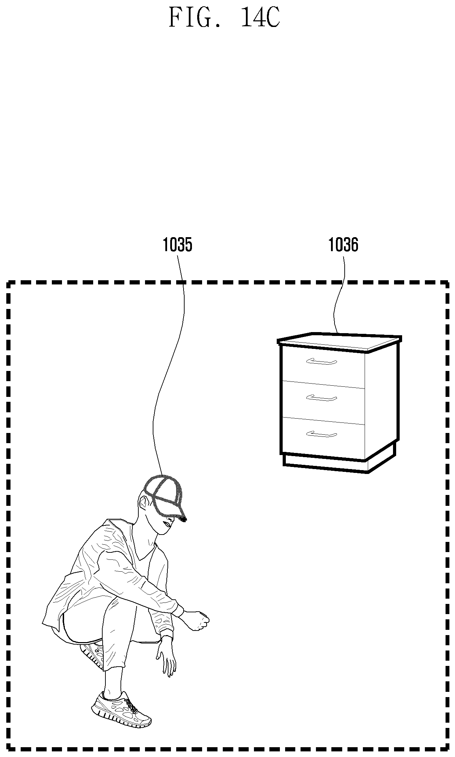

FIGS. 14A, 14B, and 14C are diagrams illustrating an example of adding an object by using other information according to various embodiments.

Referring to FIG. 14A, an indoor image including a person is illustrated. The user may input a green drawing 1031 into a persons' head area and input a brown rectangle drawing 1032 into one area. The electronic device 101 may determine attributes of the drawing, based on information on the image, information on the object, a shape of the input drawing, a color of the drawing, a drawing area, and/or the relationship between the drawing and the object. For example, the electronic device 101 may determine an object of the green drawing 1031 input into the person's head area as a green hat and determine an object of the brown rectangle drawing 1032 input into one area as brown furniture. The electronic device 101 may generate preliminary object images, based on the determined attributes of the drawings.

Referring to FIG. 14B, the electronic device 101 may generate preliminary object images by using another image. For example, the electronic device 101 may extract an object having attributes which are the same as those of the determined drawing in an image searched in a web, an image of a storage space (for example, memory, cloud server, or the like) connected to a user account, an image related to a shopping list, and/or an image related to a list of interest. As an example, the electronic device 101 may extract a plurality of green hats 1033 and a plurality of pieces of brown furniture 1034 and display the same on the display 160. The user may select one of the plurality of displayed green hats 1033 and select one of the pieces of the plurality of brown furniture 1034.

Referring to FIG. 14C, the electronic device 101 may add the green hat 1035 selected by the user to the part (for example, the person's head part) into which the green drawing is input and add the brown furniture 1036 selected by the user to the part (for example, the one area) into which the brown drawing is input. The electronic device 101 may generate and display an edited image (for example, first edited image) to which the object is added.

For example, the original image captured at wide angle reflects a view angle corresponding thereto, and when the corresponding object moves to another location within the image and the existing view angle is maintained, an awkward image different from the real situation may be generated according to a characteristic of the original image and a characteristic of the object shape. When generating a preliminary image of the separated and extracted object (for example, furniture), the electronic device 101 may analyze a space within the original image to additionally generate a preliminary object image of the object to match another view angle. As an example, when the generated object moves to another location, if it is determined that the view angle of the object at the moved location is not realistic through the image analysis model, the electronic device 101 may additionally generate a preliminary object image to make the moved object shown at the realistic view angle.

Further, the electronic device 101 may be implemented as an augmented reality (AR), a virtual reality (VR), or a mixed reality (MR) device. The electronic device 101 implemented as the AR, the VR, or the MR device may provide a simulation function of changing and showing a color and/or texture of the object from the user's point of view. The electronic device 101 may capture the image at a specific time point and divide the image (or group objects) to allow the user to select the object. For example, the electronic device 101 may receive a user input (for example, a 2D or a 3D drawing) of adding the object to the two-dimensional (2D) original image or the three-dimensional (3D) original image in a virtual space and generate a preliminary object image for the added object and/or the existing object as 3D image information. For example, when the user moves in the virtual space or moves the object in the virtual object, the electronic device 101 may provide a virtual space reflecting movement of the user or the object by using the preliminary object image generated as the 3D image information.

For example, the electronic device 101 may display, in a thumbnail form, a product which is the same as/similar to the object selected by the user from a shopping list through a link with online shopping. According to an embodiment, the electronic device 101 may display a UI for selecting a color and/or texture in the 3D space. When the user selects a specific color and/or texture displayed in the UI and drags and moves the same to the location of the object, the electronic device 101 may generate an image of the object to which the selected color and/or texture are applied. The electronic device 101 may display a 3D modeling result of the object to which the selected color and/or texture are applied using the image editing model.

When a time point viewed at which a wearer views is similar to a time point at which a task is requested, the electronic device 101 may adjust and display transparency of the generated result. As an example, when the time point at which the wears views is different from the time point at which the task is requested, the electronic device 101 may display a message indicating that the task requested by the user has been completed in one area of the screen.

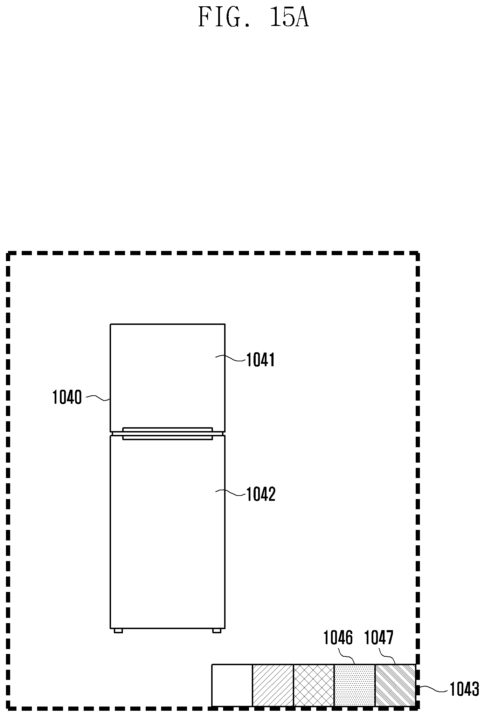

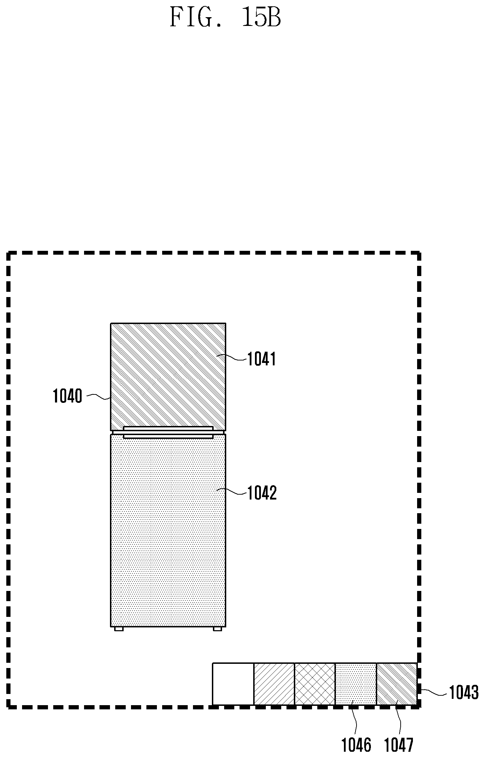

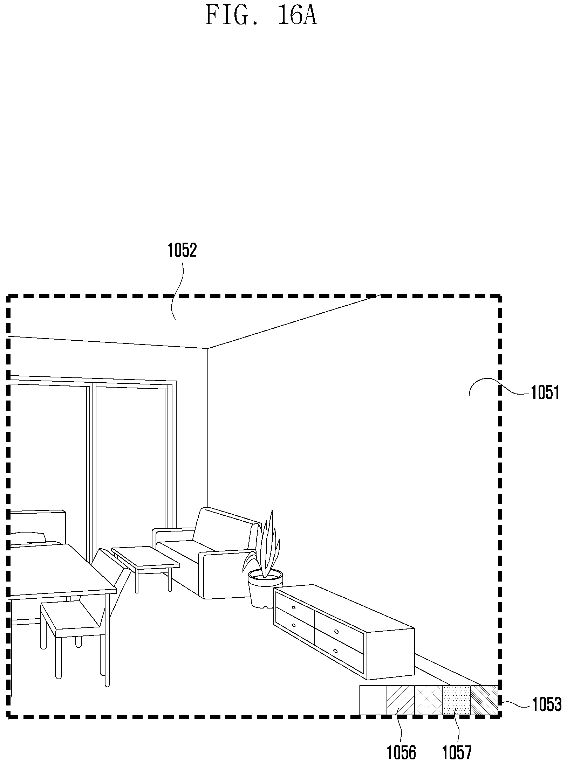

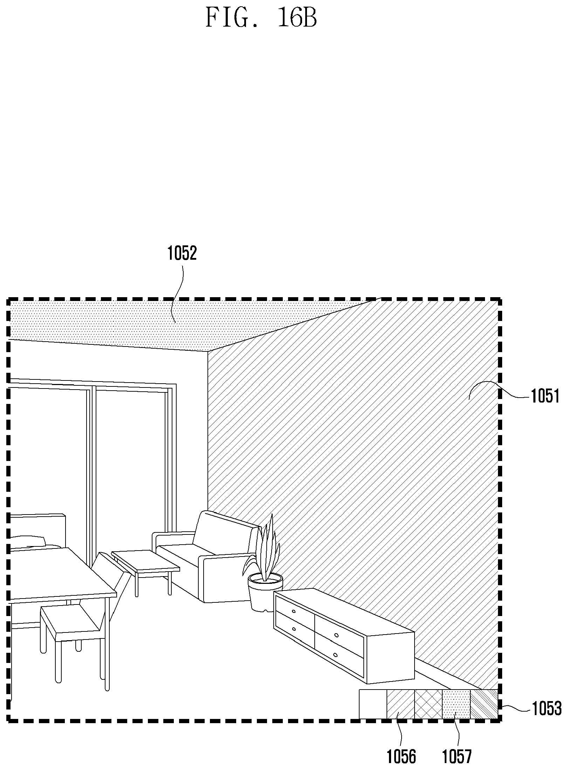

FIGS. 15A, 15B, 16A, and 16B are diagrams illustrating an example of changing a color of an area within an image according to various embodiments.

Referring to FIG. 15A, an image including a refrigerator 1040 as an object (for example, a subject) is illustrated. The user may color sides of the refrigerator. When an editing operation for the image is performed, the electronic device may provide a color palette in a UI form. The user may select a color and draw a user input into the image by using a finger or a pen. For example, the electronic device 101 may display a UI 1043 including types of colors to color and color the color selected by the user in the area into which the drawing is input. For example, the user may input a drawing for coloring an upper side 1041 of the refrigerator 1040 with a second color 1047 and input a drawing for coloring a lower side 1042 of the refrigerator 1040 with a first color 1046. The electronic device 101 may analyze an image area (for example, the upper side 1041 or the lower side 1042) including the drawing and determine an area to color. Further, the electronic device 101 may color the determined area with the determined color (for example, the first color 1047 or the second color 1046).

Referring to FIG. 15B, the refrigerator 1040 having the upper side 1041 colored with the second color 1047 and the lower side 1042 colored with the first color 1046 is illustrated. The electronic device 101 may identify an entire shape of the colored object (for example, refrigerator 1040) and generate a preliminary object image. The electronic device 101 may provide the generated preliminary object image to make the preliminary object image editable. If the refrigerator 1040 moves to another area, the electronic device 101 may generate a background area in which the refrigerator 1040 was located. The generating of the background area may be, for example, filling an empty space with a color which is the same as that of surrounding spaces. For example, the electronic device 101 may generate a preliminary object image for the background as well as the preliminary object image for the specific object (for example, the refrigerator 1040). The preliminary object image for the background may include image information for the generated background. When the refrigerator 1040 moves within the image, the generated may not be separately performed, and an edited image may be provided using the preliminary object image for the background.

Referring to FIG. 16A, an indoor image is illustrated. The user may color a wall. For example, the electronic device 101 may display a UI 1053 including types of colors to color and color an area into which a drawing is input with a color selected by the user. For example, the user may input a drawing for coloring a lateral side 1051 with a first color 1056 and input a drawing for coloring ceiling 1052 with a second color 1057. The electronic device 101 may analyze an image area (for example, the lateral side 1051 or the ceiling 1052) including the drawing and determine an area to color. Further, the electronic device 101 may color the determined area with the determined color (for example, the first color 1056 or the second color 1057).

Referring to FIG. 16B, an indoor image including the lateral side 1051 colored with the first color 1056 and the ceiling 1052 colored with the second color 1057 is illustrated. If another object moves and thus hidden areas of the lateral side 1051 and/or the ceiling 1052 are exposed, the electronic device 101 may generate a background area (for example, the hidden area) in which the other object was located using a preliminary image object generated for the background.

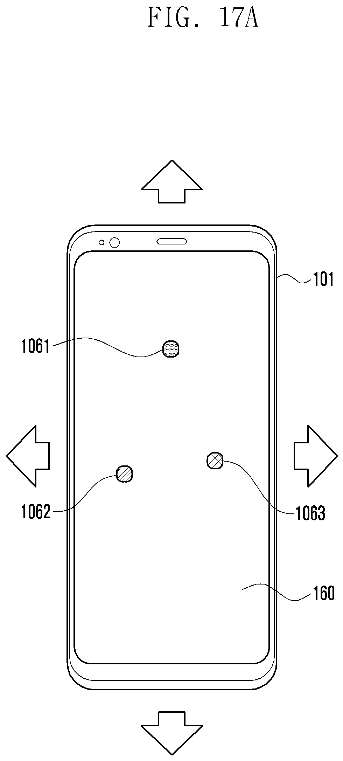

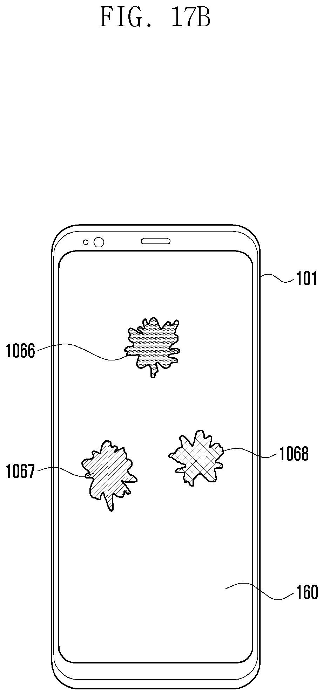

FIGS. 17A and 17B are diagrams illustrating an example of editing an image by motion of an electronic device according to various embodiments.

Referring to FIG. 17A, an electronic device 101 receiving an input of colors 1061, 1062, and 1063 in different colors from the user is illustrated. The electronic device 101 may receive the objects colors 1061, 1062, and 1063 in specific colors by the display 160 through a user input. The electronic device 101 may generate a new object, based on a figure drawn by a user input. Accordingly, the electronic device 101 may generate an image, based on a figure including simple dots and lines. The electronic device 101 may provide a random art effect through a sensor (for example, the sensor module 176 of FIG. 1). For example, the electronic device 101 may detect shaking of the electronic device 101 through the sensor and provide various effects, based on the detected shaking. For example, the sensor may include a gravity sensor, an acceleration sensor, a gyro sensor, and/or a geomagnetic sensor.

Referring to FIG. 17B, the electronic device 101 may provide color-running effects 1066, 1067, and 1068 around the input color areas, based on a direction and a speed of movement of the electronic device 101 detected through the sensor. The electronic device 101 may identify a coloring drawing input for the color-running area and generate a preliminary object image, based on the identified coloring drawing input. For example, the electronic device 101 may determine that the drawing input through the sensor (for example, the sensor module 176 of FIG. 1) is an input of modifying the object or the background included in the original image.

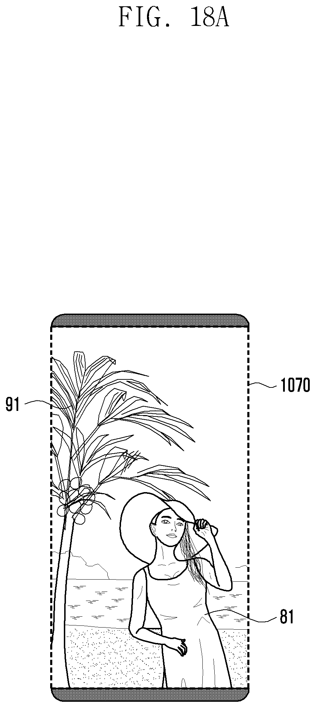

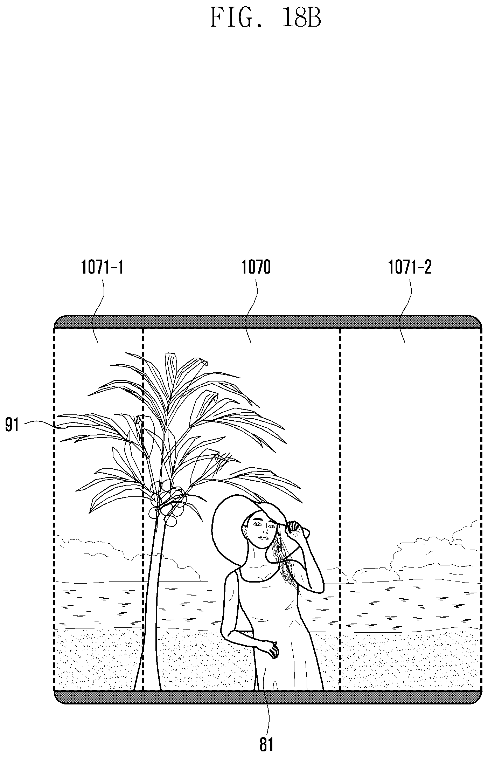

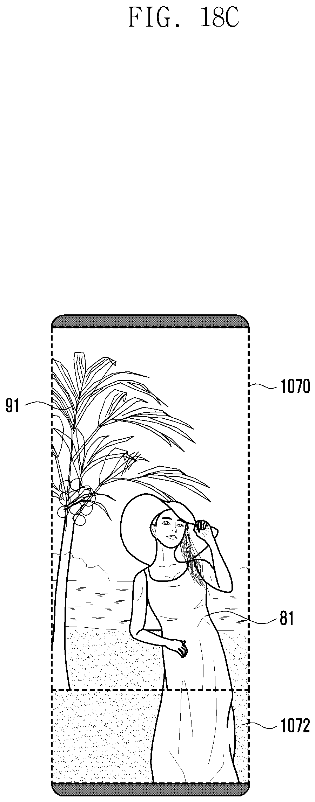

FIGS. 18A, 18B, and 18C are diagrams illustrating an example of displaying images in various sizes by using a preliminary object image according to various embodiments.

Referring to FIG. 18A, a first display area 1070 for displaying a plurality of objects generated based on a preliminary object image is illustrated. The electronic device 101 may display an image including at least a part of the preliminary object image on the display area 1070 in various sizes and/or forms. For example, the electronic device 101 may include a rollable display or a foldable display. In the case of the rollable display, the physical size of the display may be changed in real time. As described above, the electronic device 101 may generate a preliminary object image for an object (including a background) included in the image. Accordingly, although the size of the display is changed, the electronic device 101 may display an image corresponding to the size of the display in real time.

Since the generated preliminary object image includes entire parts as well as a part shown on the display 160, the image may be displayed in real time to fit the changed size of the screen of the rollable form factor. For example, when generating the preliminary object image, the electronic device 101 may generate a prompt for generating the preliminary object image having the maximum resolution and size of the image which can be displayed based on the type of the form factor (for example, rollable or foldable), and input the generated prompt into the preliminary object generation model. For example, the prompt may include information of "Create the image at a resolution of 2272x1984, and perform out-painting on the extension area at the bottom".

As illustrated in FIG. 18A, as an example, the electronic device 101 may generate preliminary object images for a person 81 and a tree 91 and display a part (for example, a first part) of the person 81 and a part (for example, a first part) of the tree 91 according to an area (or size) 1070 of a current first display. However, although not displayed on the display of FIG. 18A, the preliminary object image of the person 81 may include another part (for example, a second part) and the preliminary object image of the tree 91 may include another part (for example, a second part).

Referring to FIG. 18B, the display area of the electronic device 101 may extend in a left and right direction. For example, the display 160 may be a rollable display or a foldable display. The display area may extend to an area including a second display area 1071-1 in a left direction of the first display area 1070 and a third display area 1071-2 in a right direction. The electronic device 101 may display, in the second display area 1071-1 and the third display area 1072-2, image parts which were not previously displayed, by using preliminary object images generated according to extension of the display area. For example, the electronic device 101 may display, in the second display area 1071-1, the second part of the tree 91 which is not displayed in the first display area 1070.

Referring to FIG. 18C, the display area of the electronic device 101 may extend in a downward direction. The display area may extend to an area including a fourth display area 1072 in a downward direction of the existing first display area 1070. The electronic device 101 may display, in the fourth display area 1072, an image part which was not previously displayed, by using a preliminary object image generated according to extension of the display area. For example, the electronic device 101 may display, in the fourth display area 1072, the second part of the person 81 which is not displayed in the first display area 1070.

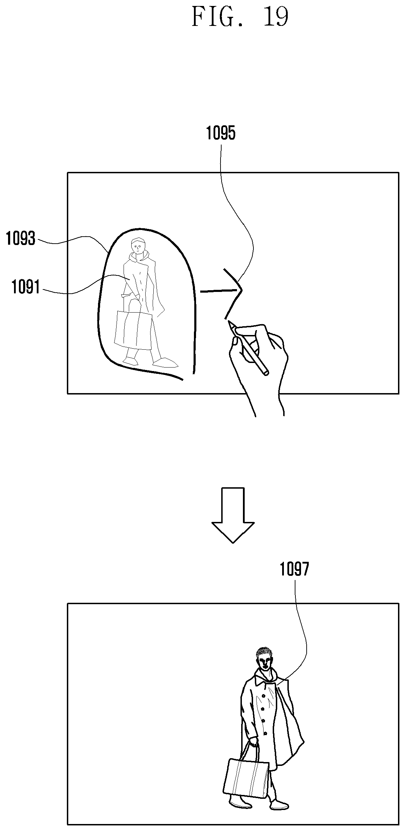

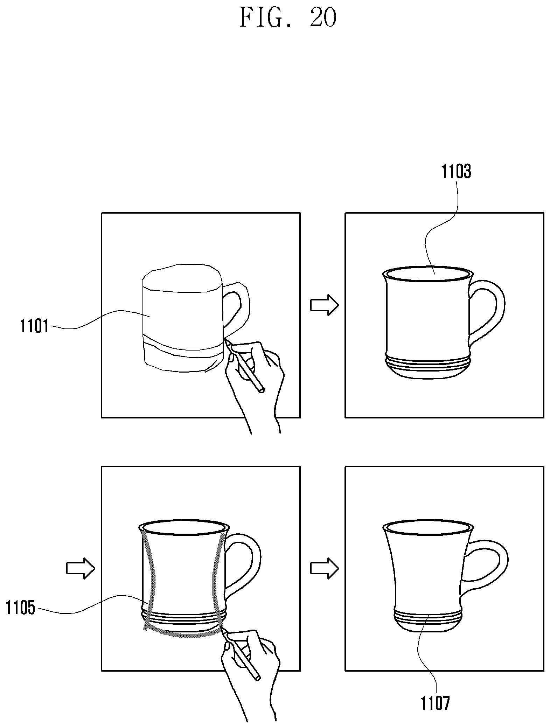

FIGS. 19 and 20 illustrate examples of generating an image based on a drawing according to various embodiments.

Referring to FIG. 19, an example is illustrated in which an image is generated based on a user's designation of the location of an object in an image. For example, a drawing for image generation may include a sketch and a control input (or, a control drawing). Based on the control input received via the drawing, the electronic device 101 may provide an additional function related to image generation.

According to an example, the sketch may include a human-shaped drawing 1091, and the control input may include a circular drawing 1093 and/or an arrow shape 1095. When the user inputs the circular drawing 1093 around the human-shaped drawing 1091 and a drawing of the rightward arrow shape 1095 in an area proximate to the right of the circular drawing 1093, the electronic device 101 may recognize this as a control input to move the human-shaped drawing 1091 inside the circular drawing 1093 in the direction of the arrow. The electronic device 101 may move an object of a person 1097 to the right to generate an image.

According to an example, a second edited image may be generated in which an object is moved by a control input via a drawing in a first edited image. For example, when a user inputs the human-shaped drawing 1091, the electronic device 101 may determine the input to be a user input to add an object. Based on the inputted human-shaped drawing 1091, the electronic device 101 may generate a first edited image, which includes an object of a person 1097, at a location where the human-shaped drawing 1091 was inputted. When the user inputs the circular drawing 1093 around the object of the person 1097 and inputs a drawing in the rightward arrow shape 1095 in an area proximate to the right of the circular drawing 1093, the electronic device 101 may recognize this as a control input to move the object of the person 1097 inside the circular drawing 1093 in the direction of the arrow. The electronic device 101 may generate a second edited image in which the object of the person 1097 has been moved to the right.

The electronic device may provide the user with a predetermined pattern (e.g., a circle drawing, an arrow drawing, etc.) and identify an attribute of the drawing based on the input drawing and the predetermined pattern. For example, the predetermined pattern may distinguish between types of objects (or attributes of drawings) and between control commands.

For example, the type of control input may be distinguished by the shape or size of a control drawing. In the example described above, the distance the object is moved may be determined based on the length of the arrow. For example, a selected object may be moved by the length of the arrow, or may be moved by a predetermined distance proportional to the length of the arrow.

Referring to FIG. 20, an example of changing an object image is illustrated. For example, inputs to change an object may include an input to change the size of the object, an input to change the shape of the object, an input to change the color of the object, and/or an input to add color to the object. The inputs to change the object may include a control input.

According to an example, the electronic device 101 may receive an input of a cup-shaped drawing 1101 (or sketch) from a user. The electronic device 101 may identify whether the user's input is an input to add an object (e.g., to generate an image). When the user input is identified as an input to add an object, the electronic device 101 may identify an attribute of the drawing 1101. When the electronic device 101 identifies the attribute of the drawing 1101 indicating the drawing 1101 as a drawn sketch of a cup, the electronic device 101 may generate an image that includes an object of a first cup 1103.

For example, the electronic device 101 may receive an input of a line-shaped drawing 1105 on the object of the first cup 1103. The electronic device 101 may determine the line-shaped drawing 1105 as a control input to change an object. According to an example, the electronic device 101 may determine the line-shaped drawing 1105 as a control input to change the shape of the object of the first cup 1103. The electronic device 101 may edit the image including the object in the first cup 1103 into an image including an object of a second cup 1107 with the shape changed based on an attribute of the control input.

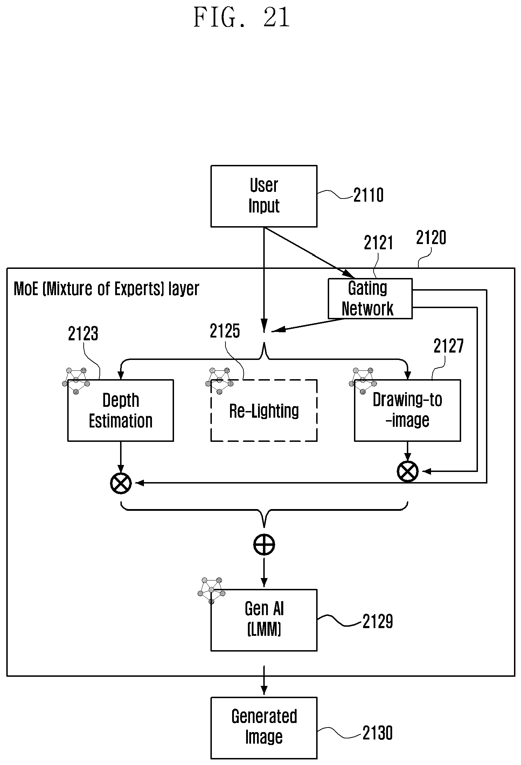

FIG. 21 illustrates a mixture of experts (MoE) layer according to various embodiments.

Referring to FIG. 21, an artificial intelligence-based image editing model of the electronic device 101 may include an MoE layer structure. The electronic device 101 may transmit a user's drawing input 2110 to an MoE layer 2120. For example, the MoE layer 2120 and/or a gating network 2121 may determine the type of drawing input 2110 (e.g., a sketch, text, or a control input). Based on the result of the determination, the gating network 2121 may select which expert (e.g., depth estimation 2123, re-lighting 2125, drawing-to-image 2127, etc.) to use. Among the experts, only the expert selected by the gating network 2121 may be activated. The drawing input 2110 may be transmitted to the activated expert.

In an example, the depth estimation 2123 may analyze the depth of an object included in an image to obtain depth information. The re-lighting 2125 may analyze lighting characteristics of the image to obtain information about the lighting characteristics. The drawing-to-image 2127 may analyze the input drawing to obtain information about a preliminary object image.

In an example, the MoE layer 2120 may apply a weight of each expert, which is output from the gating network 2121, to the output result of each expert. The output result of each expert, to which the weight has been applied, may be transmitted to a generative artificial intelligence (Gen AI) model 2129. An input transmitted to the Gen AI model 2129 may vary depending on the number of activated experts. According to an example, the Gen AI model 2129 may include a large multimodal model (LMM), a large language model (LLM), a large vision model (LVM), or the like. In an example, the LLM may be implemented as an element separate from the Gen AI model 2129. For example, the LLM may analyze a text drawing. The Gen AI model 2129 may generate a preliminary object image based on information about the type of drawing input 2110 and/or the text drawing analyzed by the LLM, and may generate an edited image (generated image) 2130 including the preliminary object image.

For example, the experts of the MoE layer 2120 may be selectively used depending on the type of input data. The experts of the MoE layer 2120 may be modularized, and may be added and removed as needed. When an artificial intelligence-based image editing model is implemented using an MoE layer, the overall size of the model may increase, but a small number of experts are actually used during the inference process, and thus the data may be processed quickly.

According to an example, the artificial intelligence-based image editing model including the MoE layer 2120 may be included in one artificial intelligence computing module contained in a separate server (e.g., the server 108 in FIG. 1) or may be included in different artificial intelligence computing modules. The classification, use, connection, operational sequence, etc. of the artificial intelligence-based image editing model including the MoE layer 2120 may be varied in numerous ways.

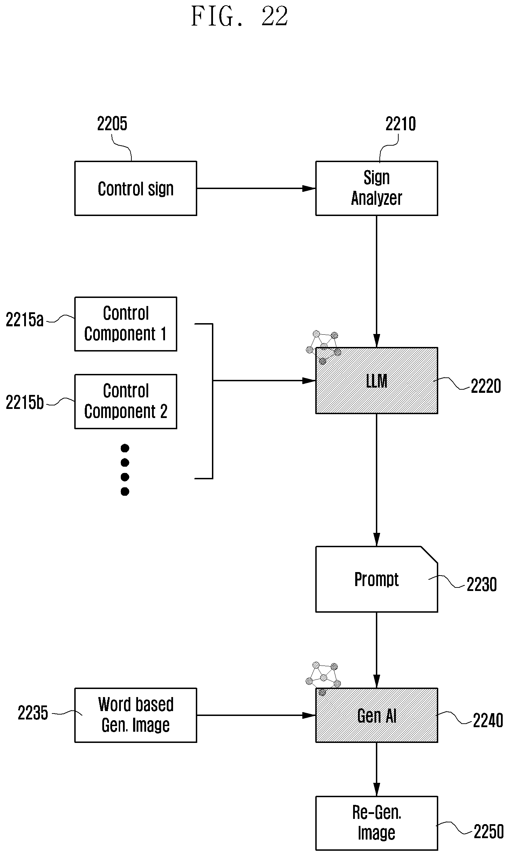

FIG. 22 illustrates operations for processing a text input according to various embodiments.

Referring to FIG. 22, a process for generating an image by using an LLM and a Gen AI model is illustrated. In an example, the electronic device 101 may receive a drawing (e.g., a sketch, text, a control input, etc.) from a user. The received drawing may include a control sign (or a control input) 2205. The received drawing may be transmitted to a sign analyzer 2210. The sine analyzer 2210 may determine whether the transmitted drawing is the control sine 2205 or whether the delivered drawing includes the control sign 2205. In an example, the drawing may include the control sign 2205, an object-specifying word for image generation, and/or various object description words. When the drawing is (or includes) the control sign 2205, the sign analyzer 2210 may transmit the drawing and/or the result of the determination to an LLM 2220. The LLM 2220 may receive at least one control element 2215a or 2215b. In an example, the control elements 2215a and 2215b may be elements indicating a control type (e.g., move, change, composite, etc.). In an example, the control elements 2215a and 2215b may include object description words (e.g., object characteristic keywords such as color, shape, or texture).

For example, the LLM 2220 may identify the type of control sign 2205, based on the transmitted control sign 2205 and the control elements 2215a and 2215b. In an example, the LLM 2220 may adaptively determine the control sign 2205 based on the type of object descriptor word (e.g., color, shape, or texture). The LLM 2220 may output a prompt 2230 based on the object description word and/or the control signal.

According to an example, when a new image is generated based on the drawing, the prompt 2230 may be transmitted as an input to generative artificial intelligence models 2240, 340, and 315, and the generative artificial intelligence model 2240 may output an image (e.g., a first edited image) 2235 generated based on the prompt 2230.

According to an example, to change (or edit) the generated image (e.g., the first edited image) 2235, the prompt 2230 may be transmitted as an input to the generative artificial intelligence model 2240 along with the image 2235 (e.g., the first edited image) generated from the object-specifying word and the object description word. The generative artificial intelligence model 2240 may change the previously generated image 2235 based on the prompts 2230 into a different type of image (e.g., a second edited image) and output the different type of image.

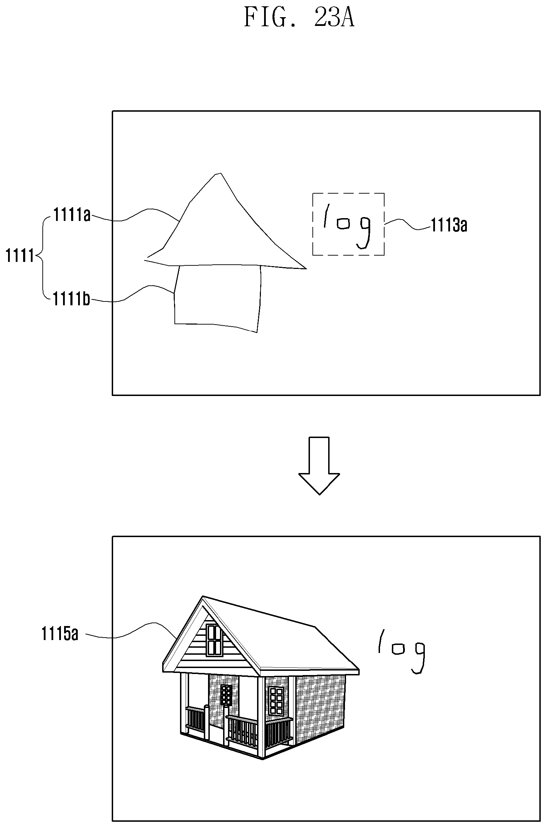

FIGS. 23A, 23B, 23C, 23D, 23E, 24A, 24B, 25A, 25B, 25C, 26A, 26B, 27A, 27B, 28, 29, 30A, 30B, 30C, 30D, and 31 illustrate examples of generating and/or changing an image based on an attribute of an input drawing (e.g., a sketch, handwritten text, or a predefined pattern drawing) and/or a control function based on the drawing according to various embodiments.

For example, the electronic device 101 may generate an object based on a sketch and text (e.g., a word, a phrase, or a sentence handwritten by a user). The electronic device 101 may receive input a sketch and text as drawings from the user. The electronic device 101 may additionally use the input text to identify an attribute of the sketch. The electronic device 101 may generate or change an object based on the identified attribute of the sketch. As described above, an object herein may include a thing, a person, and/or a background. For example, the background may be an object such as the ocean, a mountain, sky, or river behind the thing or the person.

Referring to FIG. 23A, in an example, a triangle 1111a and a rectangle 1111b may be inputted, and the text "log" 1113a may be inputted. The electronic device 101 may group the drawing elements of the triangle 1111a and the rectangle 1111b, and may identify, based on the shape of the grouped sketch, an attribute of a sketch which is a house 1111. The electronic device 101 may identify, based on the input text, the attribute of the sketch that is a log cabin, which is a subcategory of the house 1111. The electronic device 101 may generate an object of a log cabin 1115a based on the identified attribute.

According to an example, the electronic device 101 may select, from text (e.g., multiple words) surrounding the sketch, a part of the text associated with the sketch based on the meaning represented by the text. According to an example, the electronic device 101 may display an image of the object of the log cabin 1115a generated via the generation model, in place of the sketch, at the location where the sketch was input. According to an example, the electronic device 101 may continue to display the object on a screen until an additional user input regarding a surrounding text object reflected in the generated object image occurs, and may maintain the input text for a predetermine time, or may remove the text when displaying the object.

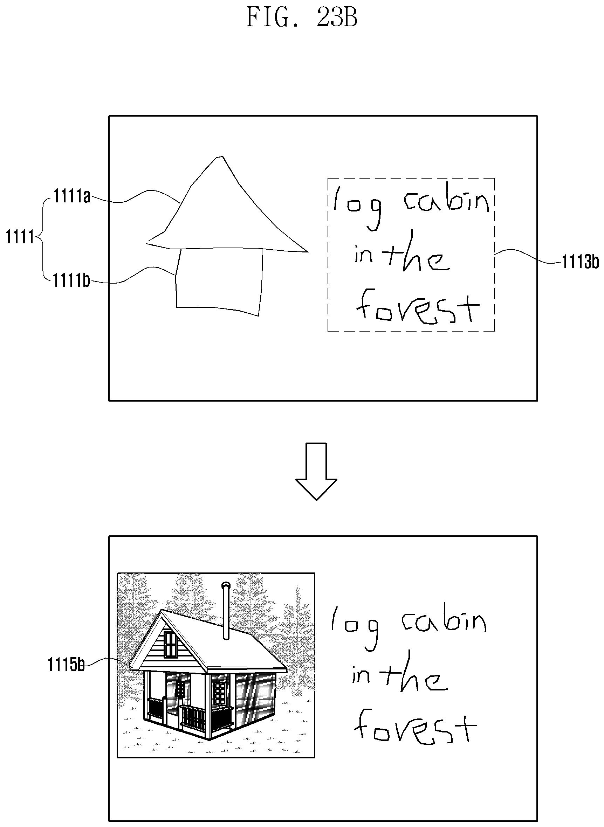

Referring to FIG. 23B, in an example, a triangle 1111a and a rectangle 1111b may be inputted, and the text "log cabin in the forest" 1113b may be inputted. The electronic device 101 may group the drawing elements of the triangle 1111a and the rectangle 1111b, and may identify, based on the shape of the grouped sketch, an attribute of a sketch which is a house 1111. Based on the input text, the electronic device 101 may identify attributes of the sketch which is a log cabin, which is a subcategory of the house 1111, and "in the forest". According to an example, the electronic device 101 may identify "log cabin" in the text as an attribute of a sketched object, and may identify "in the forest" as an attribute of the background of an image. The electronic device 101 may generate an image representing a log cabin 1115b in the forest based on the identified attributes. The electronic device 101 may generate, based on the text attributes, a background image that is not included in a sketch drawing shape.

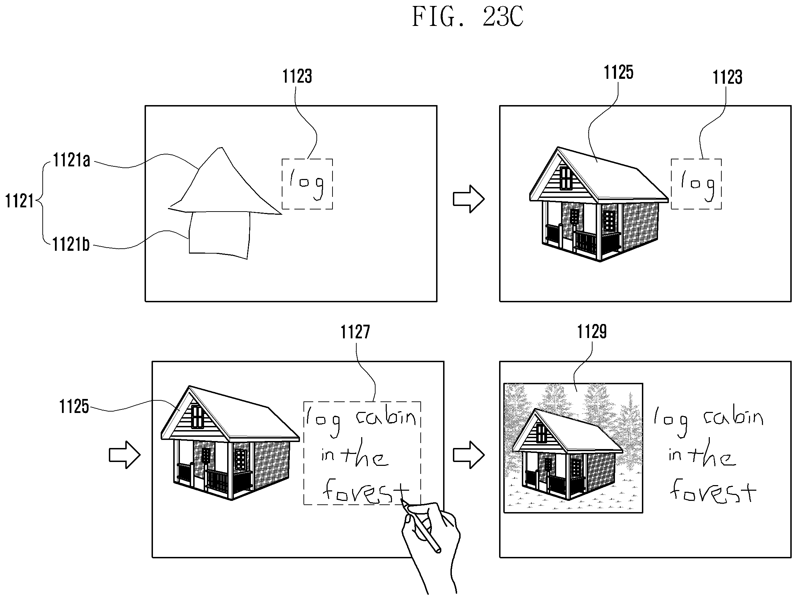

Referring to FIG. 23C, in an example, a triangle 1121a and a rectangle 1121b may be inputted, and the text "log" 1123 may be inputted. The electronic device 101 may group the drawing elements of the triangle 1121a and the square 1121b, and may identify an attribute of a sketch which is a house 1121, based on the shape of the grouped sketch. Based on the input text, the electronic device 101 may identify an attribute of a sketch that is a log cabin, which is a subcategory of the house 1121. The electronic device 101 may generate an object of a log cabin 1125 based on the identified attributes. According to an example, the electronic device 101 may receive changed text of "log cabin in the forest" 1127 at the location where the text "log" 1123 was input. In an example, the electronic device 101 may receive an input that modifies the text "log" 1123 into the test "log cabin in the forest" 1127 by adding "cabin in the forest". Based on the changed text, the electronic device 101 may identify changed attributes called "log cabin", which is a subcategory of the house, and "in the forest". The electronic device 101 may change the displayed object of a log cabin 1125 to an object of a log cabin 1129 in the forest, based on the changed attributes. According to an example, the electronic device 101 may change the displayed object of the log cabin 1125 into an object of the log cabin 1129 in the forest. According to an example, the electronic device 101 may generate an object of the log cabin 1129 in the forest and change the displayed object of the log cabin 1125 into the generated object of the log cabin 1129 in the forest. According to an example, the electronic device 101 may generate an image of the log cabin 1129 in the forest by adding a forest background image to an image of the log cabin 1125. The electronic device 101 may separately store the previously generated object of the log cabin 1125.

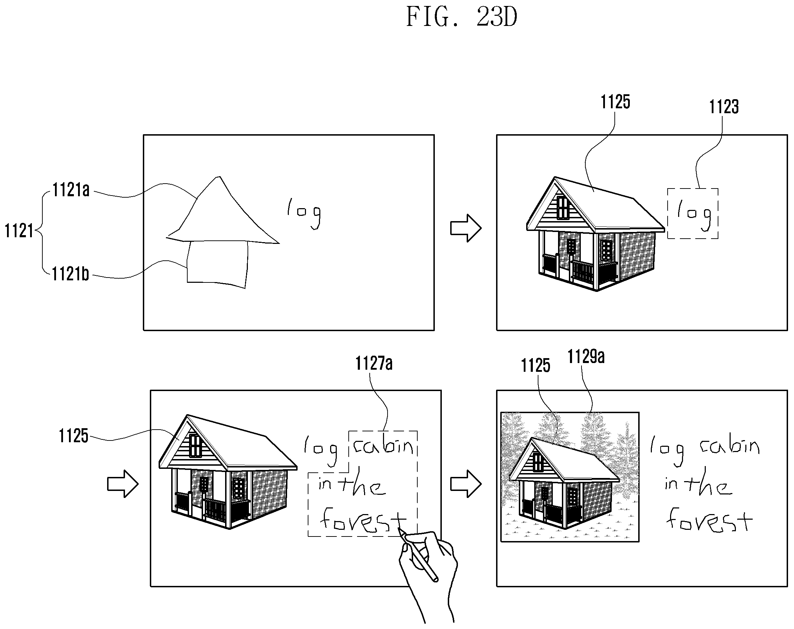

Referring to FIG. 23D, in an example, a triangle 1121a and a rectangle 1121b may be inputted, and the text "log" 1123 may be inputted. The electronic device 101 may group the drawing elements of the triangle 1121a and the square 1121b, and may identify an attribute of a sketch which is a house 1121, based on the shape of the grouped sketch. Based on the input text, the electronic device 101 may identify an attribute of a sketch that is a log cabin, which is a subcategory of the house 1121. The electronic device 101 may generate an object of a log cabin 1125 based on the identified attribute. According to an example, the electronic device 101 may receive an input for modify the text "log" 1123 into the test "log cabin in the forest" 1127a with the text "cabin in the forest" added to the text "log" 1123. The electronic device 101 may identify an added attribute of "in the forest", based on the modified text. Based on the added attribute, the electronic device 101 may change the displayed object of the log cabin 1125 into an object obtained by adding a forest background to the displayed object of the log cabin 1125. In other words, the electronic device 101 may generate an object of a log cabin 1129a in the forest by adding the forest background while maintaining the displayed object of the log cabin 1125.

Referring to FIG. 23E, in an example, after a triangle 1131a, a rectangle 1131b, and the text "log" 1133 are input, a control command may be inputted. Based on an input drawing and a predetermined pattern, the electronic device 101 may identify an attribute of the drawing. In an example, when a circular drawing 1135 is input around a sketch including the triangle 1131a and the rectangle 1131b, the electronic device 101 may recognize this as a control command to identify the sketch within the circular drawing 1135 (or to generate a preliminary object image). The electronic device 101 may group the drawing elements of the triangle 1131a and the rectangle 1131b and identify an attribute of the sketch which is a house 1131, based on the shape of the grouped sketch. Based on the input text, the electronic device 101 may identify an attribute of the sketch that is a log cabin, which is a subcategory of the house 1131. The electronic device 101 may generate an object of a log cabin 1137 based on the identified attribute. The electronic device may generate the object of the log cabin 1137 based on the attributes of the input sketch, text, and circular drawing. The electronic device may generate the object of the log cabin 1137 based on the input sketch and the objects (e.g., the text, the circular drawing, etc.) that are input around the sketch area.

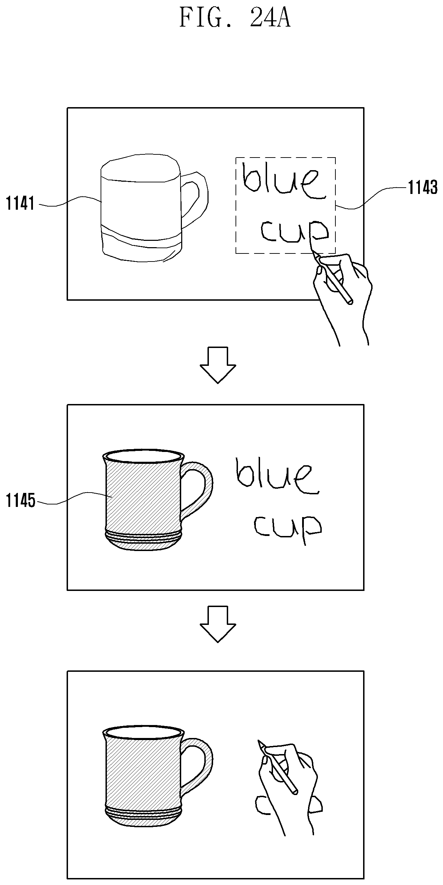

Referring to FIG. 24A, in an example, a sketch of a cup shape 1141 may be inputted, and the text "blue cup" 1143 may be inputted. The electronic device 101 may identify, based on the shape of the sketch, an attribute of the sketch corresponding to a cup, and may identify, based on the input text, an additional attribute (e.g., a color attribute) of the sketch corresponding to a blue cup. The electronic device 101 may generate an object of a blue cup 1145 based on the identified attributes. The electronic device 101 may store text information (e.g., location information) reflected in the generation of an image of the object of the blue cup 1145. According to an example, the electronic device 101 may receive an input to modify the text "blue cup" 1143.

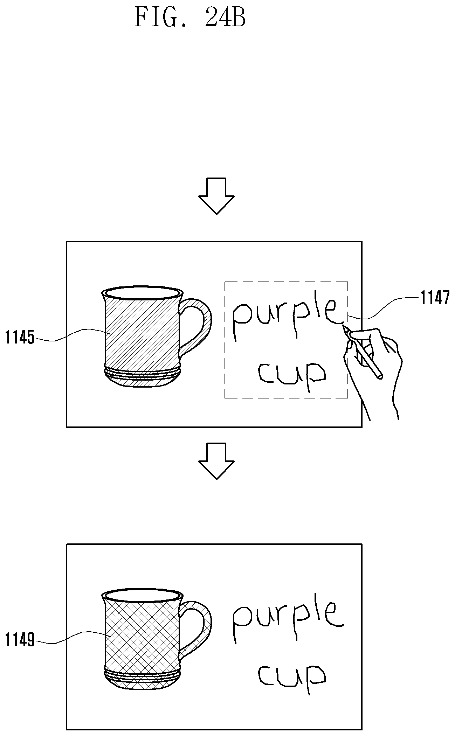

Referring to FIG. 24B, in an example, the electronic device 101 may receive an input that changes the text "blue cup" 1143, which is an attribute reflected in the generation of the image of the object of the blue cup 1145, into the text "purple cup" 1147. The electronic device 101 may identify a changed attribute, which, in this example is color (e.g., a purple cup), based on the changed text. The electronic device 101 may generate a purple cup object image based on the changed attribute. The electronic device 101 may change the object of the blue cup 1145 displayed on the screen into an object of a newly generated purple cup 1149. The electronic device 101 may display an image of the object of the newly generated purple cup 1149 in place of the image of the object of the blue cup 1145 at the location of the image of the object of the blue cup 1145 displayed on the screen, or additionally display the image of the object of the newly generated purple cup 1149 on the screen, and may provide a user with a user interface element for identifying whether to replace the image. Based on the user's selection, the generated image of the purple cup 1149 may be deleted, or may be displayed in place of the displayed existing image of the object of the blue cup 1145 at the location of the image of the object of the blue cup 1145.

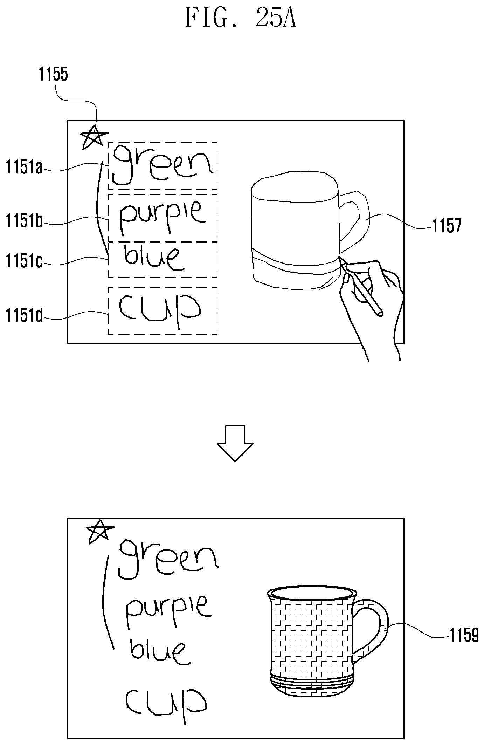

Referring to FIG. 25A, in an example, the text of "green" 1151a, "purple" 1151b, "blue" 1151c, and "cup" 1151d may be inputted, and a predetermined indicator (e.g., highlighting) may be inputted in the text "green" 1151a. For example, the predetermined indicator may be a control command to select at least one of multiple elements. In an example, the predetermined indicator may be, for example, a star shape 1155. A sketch of a cup shape 1157 may be inputted along with the text. The electronic device 101 may identify an attribute of the sketch, which is a cup, based on the shape of the sketch. The electronic device 101 may identify an additional attribute of the sketch, which is a green cup, based on the text, which having the displayed indicator, among the multiple types of input text. The electronic device 101 may generate an object of a green cup 1159 based on the identified attributes.

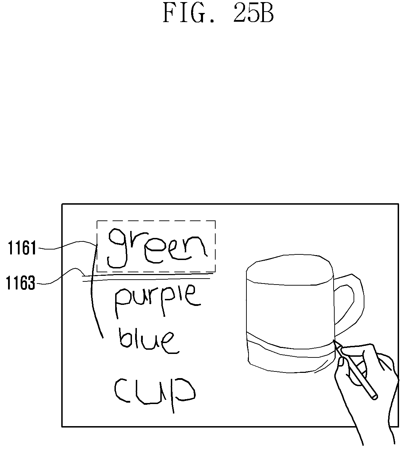

Referring to FIG. 25B, in an example, an indicator may be an underline 1163. The electronic device 101 may identify the underline 1163 drawn under the text "green" 1161 as a predetermined indicator, and may determine that an additional attribute of a sketch is a green cup.

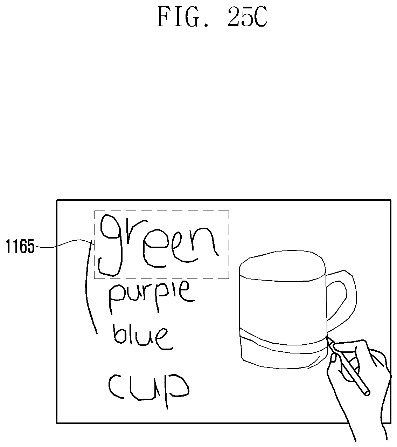

Referring to FIG. 25C, in an example, an indicator may be the size of text. The size of the text "green" 1165 may be larger than the size of the text of "purple" and "blue". Based on the size of the text "green" 1165, the electronic device 101 may determine that an additional attribute of the sketch is a green cup. In an example, indicators may include a symbol, a shape, a check, an arrow, a highlight, a text color, a text thickness, and/or a text border.

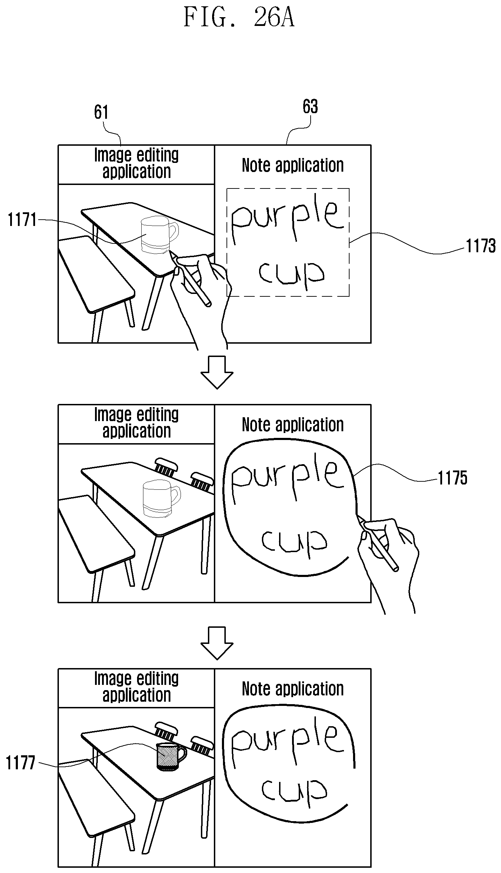

Referring to FIG. 26A, the electronic device 101 is illustrated on which multiple applications 61 and 63 are executed. According to an example, the multiple applications 61 and 63 may include an image-related application 61 and a text input application 63. For example, the electronic device 101 may display the multiple applications 61 and 63 on multiple displays. For example, the electronic device 101 may split a screen and display the multiple applications 61 and 63 on the split screens. For example, the electronic device 101 may display one application 61 and display another application 63 as a pop-up window. For example, the electronic device 101 may alternately display the multiple applications 61 and 63 in sequence. For example, the electronic device 101 may display an image in the first application 61 (e.g., an image editing application) and receive a sketch drawing on the image. Text may be received on the second application 63 (e.g., a note application). According to an example, the electronic device 101 may receive a sketch of a cup shape 1171 via the first application 61 and receive the text "purple cup" 1173 via the second application 63. The electronic device 101 may receive a control input via the second application 63. In an example, the control input may be a circular drawing 1175, wherein the circular drawing 1175 may be a control command to identify a sketch (or to generate a preliminary object image). In an example, the control input may be performed based on a specific menu selection or may be distinguished based on a predefined drawing pattern. The electronic device 101 may identify an attribute of the sketch, which is a cup, based on the shape of the sketch, and may identify an additional attribute of the sketch, which is a purple cup, based on the text. The electronic device 101 may generate an object of a purple cup 1177 based on the identified attributes. The electronic device 101 may display, in the first application 61, an image with the object of the purple cup 1177 added.

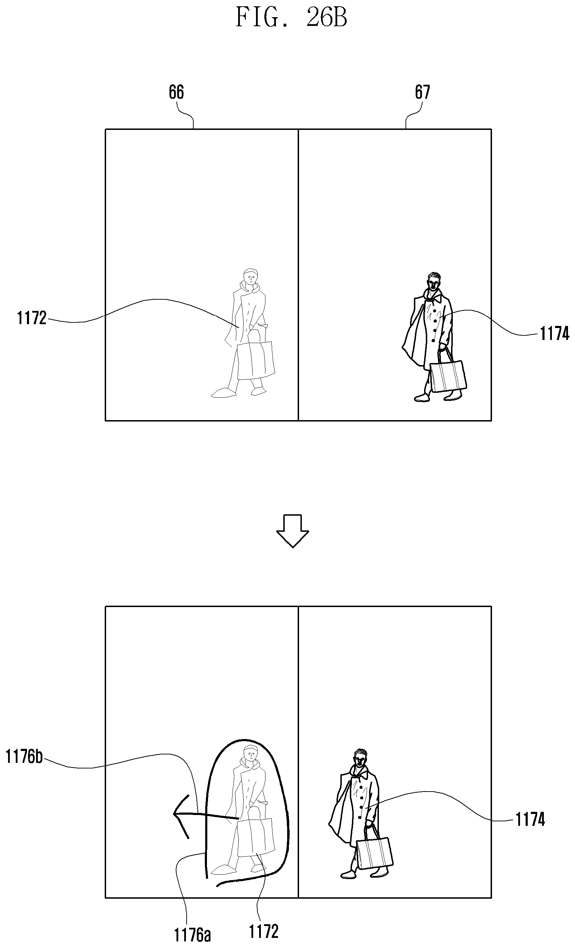

Referring to FIG. 26B, the electronic device 101 including multiple screens 66 and 67 is illustrated. In an example, the multiple screens 66 and 67 may each be displayed on a separate display 160 (e.g., display 160 in FIG. 2). According to an example, the multiple screens 66 and 67 may be screens into which the one display 160 are split. According to an example, the multiple screens 66 and 67 may be separate applications.

According to an example, the electronic device 101 may receive a sketch of a human shape 1172 via the first screen 66. The electronic device 101 may generate an object of a person 1174 in real-time based on characteristics of the sketch received via the first screen 66 and display the generated object on the second screen 67. According to an example, when a user inputs a circular drawing 1176a around the humane-shaped sketch 1172 displayed on the first screen 66 and inputs a drawing of a leftward arrow 1176b in a left area proximate to the circular drawing 1176a, the electronic device 101 may recognize this as a control input to move the object of the person in the circular drawing 1176a in the direction of the arrow. The electronic device 101 may move the object of the person 1174 displayed in real time on the second screen 67 to the left.

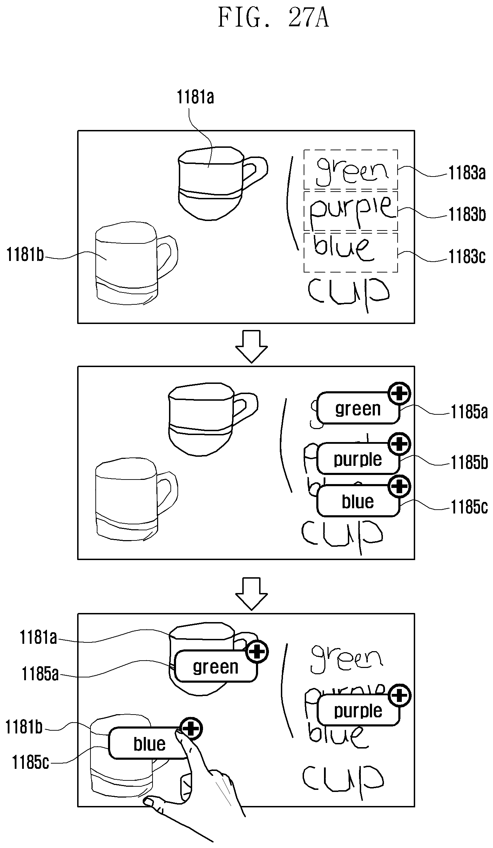

Referring to FIG. 27A, in an example, sketches of a first cup shape 1181a and a second cup shape 1181b may be inputted, and the text of "green" 1183a, "purple" 1183b, "blue" 1183c, and "cup" may be inputted. The electronic device 101 may identify attributes of the sketches, which are a first cup and a second cup, based on the shape of the sketches. The electronic device 101 may identify the multiple types of input text and generate items controlled by a user. According to an example, the electronic device 101 may identify the text of "green" 1183a, "purple" 1183b, and "blue" 1183c as an attribute of a cup. The electronic device 101 may generate control items 1185a, 1185b, and 1185c corresponding to the "green" 1183a, the "purple" 1183b, and the "blue" 1183c, respectively. Each of the control items may be moved by the user. According to an example, the first control item 1185a corresponding to the attribute "green" 1183a may be moved to the sketch of the first cup shape 1181a, and the third control item 1185c corresponding to the attribute of "blue" 1183c may be moved to the sketch of the second cup shape 1181b.

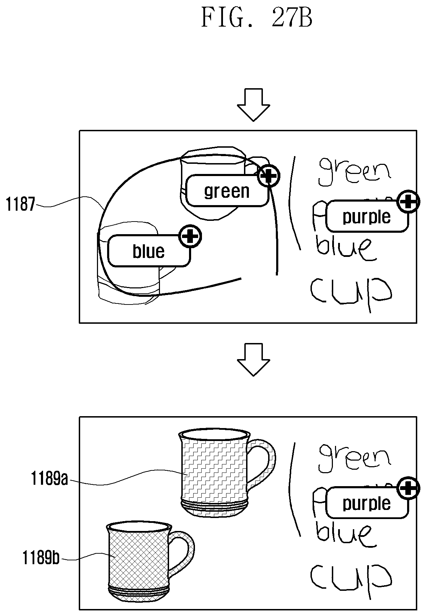

Referring to FIG. 27B, the electronic device 101 may receive a control input in a sketch area. In an example, the control input may be a circular drawing 1187, and the circular drawing 1187 may be a control command to identify a sketch (or to generate a preliminary object image). The electronic device 101 may identify additional attributes of the sketches based on the attributes corresponding to the control items moved to sketch locations. In an example, the electronic device 101 may identify an additional attribute of the sketch of the first cup shape 1181a as a green cup, and an additional attribute of the sketch of the second cup shape 1181b as a blue cup. The electronic device 101 may generate an object of a first cup 1189a in green color and an object of a second cup 1189b in blue color, based on the identified attributes.

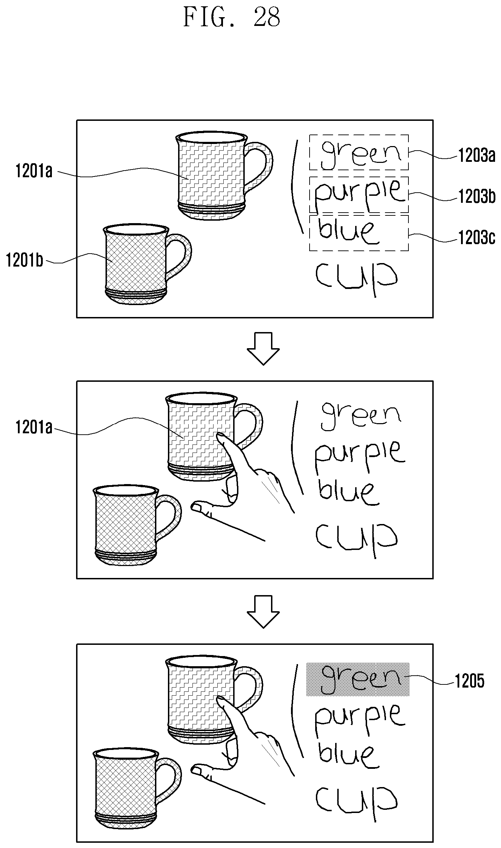

Referring to FIG. 28, in an example, a screen, on which generated objects of a first green cup 1201a and a second blue cup 1201b and the text of "green" 1203a, "purple" 1203b, and "blue" 1203c are displayed, are illustrated. The objects of the first green cup 1201a and the second blue cup 1201b may be objects generated (or, changed) based on the input text of "green" 1203a and "blue" 1203c. The electronic device 101 may include attribute information corresponding to the generated objects. According to an example, the electronic device 101 may receive an input selecting the object of the first green cup 1201a. The electronic device 101 may determine an attribute of the green color corresponding to the object of the first green cup 1201a. The electronic device 101 may determine a text attribute and text location information used when generating the object of the first green cup 1201a. The electronic device 101 may display an indicator 1205 in the text area of green 1203a corresponding to the text representing the attribute of the first green cup 1201a selected by the user. In an example, the indicator 1205 may be a mark which indicates the text of an attribute corresponding to the selected object.

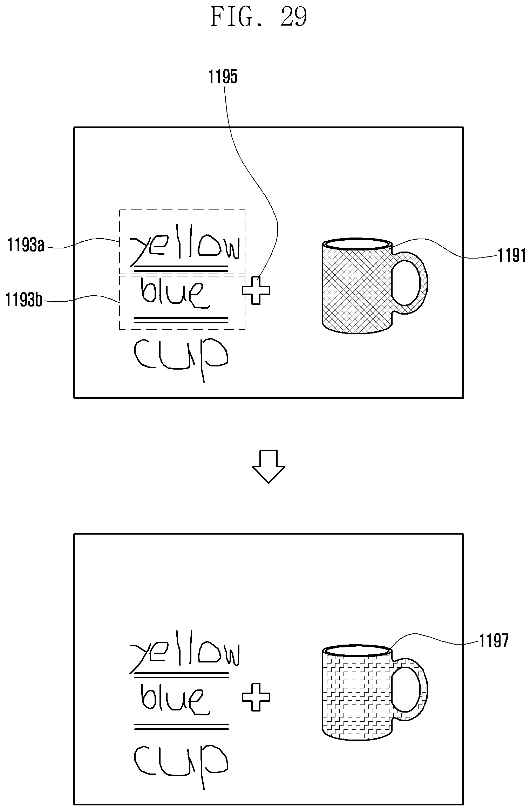

Referring to FIG. 29, the electronic device 101 may change (or generate) an object with multiple attributes. In an example, the text of "yellow" 1193a and "blue" 1193b may be inputted. In an example, when there are in addition to an object-specifying word and various object description words (or, object attribute words) that have been input for image generation, the object description words may be selected interchangeably. The number of object description words that can be selected may be unlimited.

In the text of "yellow" 1193a and "blue" 1193b, a selection control indicator may be inputted, and an object description word control indicator 1195 may be inputted. In an example, the selection control indicator may be a control command to select at least one element from among multiple elements, and may include, for example, a symbol, a star, a shape, a check, an arrow, a highlight, an underline, a text size, a color of the text, a text thickness, and/or a text border. The object description word control indicator 1195 may be a command to select an object. The object description word control indicator 1195 may be a control command to sum selected elements, and may include a plus sign. For example, depending on the types object description words (e.g., color, shape, or texture), the object descriptor control indicator 1195 may operate adaptively. Along with the text, an image (or, an object, a sketch) of a cup shape 1191 may be inputted. The electronic device 101 may identify additional attributes of yellow 1193a and blue 1193b as attributes of the image of the cup shape 1191 based on the selection control indicator. The electronic device 101 may identify an additional attribute of summing the yellow 1193a and the blue 1193b based on the object description word control indicator 1195. The electronic device 101 may identify green obtained by summing the yellow 1193a and the blue 1193b as an additional attribute of the cup-shaped image. The electronic device 101 may change (or generate), based on the identified attributes, the input image of the cup shape 1191 into an image of a cup shape 1197 in green color.

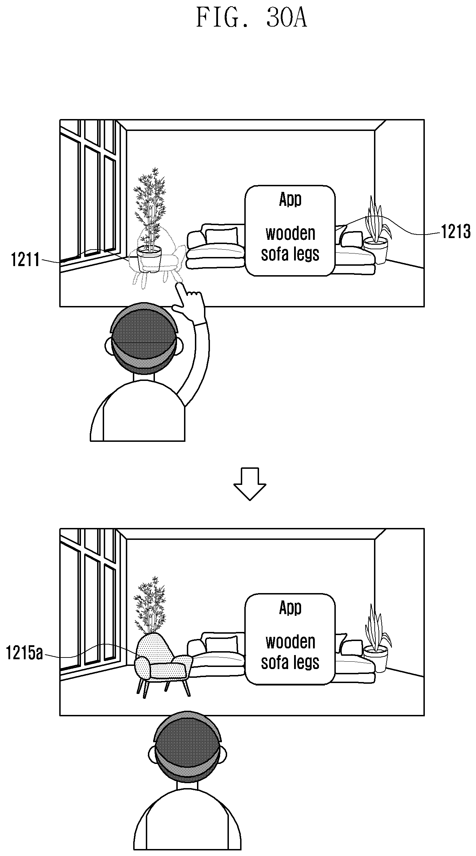

Referring to FIG. 30A, the electronic device 101, implemented as an AR, VR, or MR device, may receive a user input (e.g., a 2D or 3D sketch drawing) that adds an object to a two-dimensional (2D) original image or a three-dimensional (3D) original image in a virtual space, or an area corresponding to a real environment, and text that includes attribute information. In an example, the electronic device 101 may execute a text input application (e.g., a note application) and receive text via a virtual tool (e.g., a virtual pen) and/or gestures. In an example, the electronic device 101 may receive a sketch of a chair shape 1211 and the text "wooden sofa legs" 1213. The electronic device 101 may identify, based on the shape of the sketch, an attribute of the sketch which is a chair. The electronic device 101 may identify, based on the input text, an additional attribute (e.g., a material attribute or a shape attribute) of the sketch that is wooden sofa legs. Based on the identified attributes, the electronic device 101 may generate a 2D or 3D object of a chair 1215a including the wooden sofa legs. The electronic device 101 may display the generated 3D object.

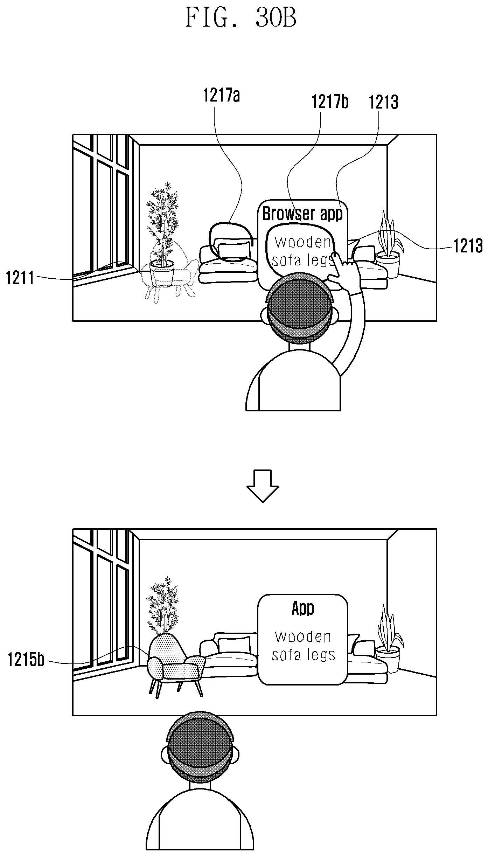

Referring to FIG. 30B, in an example, the electronic device 101 may execute a text input application and receive text via a virtual tool and/or gesture. In an example, the electronic device 101 may receive a sketch of a chair shape 1211 and the text "wooden sofa legs" 1213. The electronic device 101 may receive a control command. In an example, the electronic device 101 may receive a first circular drawing 1217a, which is input in a sofa area included in an image or an image corresponding to a real environment, and a second circular drawing 1217b, which is input in a text area. When the first circular drawing 1217a and the second circular drawing 1217b are input, the electronic device 101 may identify an attribute of the sketch in consideration of elements included in the first circular drawing 1217a and the second circular drawing 1217b. In an example, the electronic device 101 may identify, based on the shape of the sketch, an attribute of the sketch which is a chair. The electronic device 101 may identify an attribute (e.g., a color attribute, a material attribute, or a shape attribute) of a sofa for which the first circular drawing 1271a is received. The electronic device 101 may identify an additional attribute of the sketch in consideration of the identified attribute of the sofa and the text "wooden sofa legs" 1213. According to an example, the electronic device 101 may identify wooden sofa legs, a fabric which is the material of the sofa, and/or a pink color which is the color of the sofa, as additional attributes of the sketch. The electronic device 101 may generate, based on the identified attributes, a 2D or 3D object of a chair 1215b that includes wooden sofa legs, a fabric material, and a pink color. The electronic device 101 may add or display the generated 2D or 3D object to the displayed image.

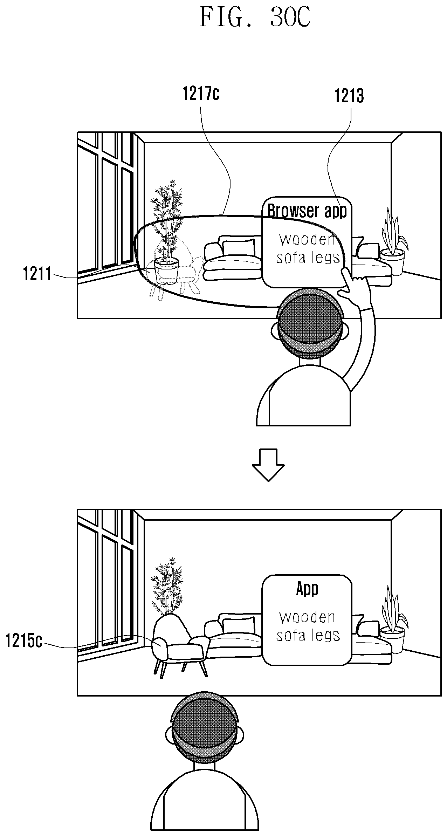

Referring to FIG. 30C, in an example, the electronic device 101 may execute a text input application and receive text via a virtual tool and/or gesture. According to an example, the electronic device 101 may receive a sketch of a chair shape 1211 and the text "wooden sofa legs" 1213. The electronic device 101 may receive a control command. In an example, the electronic device 101 may receive a circular drawing 1217c that includes a sofa area and text, which are included in the image. When the circular drawing 1217c is input, the electronic device 101 may identify an attribute of the sketch in consideration of elements included in the circular drawing 1217c. In an example, the electronic device 101 may identify, based on the shape of the sketch, an attribute of the sketch which is a chair. The electronic device 101 may identify an attribute (e.g., a color attribute, a material attribute, or a shape attribute) of a sofa and/or an attribute of the floor when the circular drawing 1271c is received. The electronic device 101 may identify an additional attribute of the sketch in consideration of the identified attribute of the area of the circular drawing 1271c and the text "wooden sofa legs" 1213. According to an example, the electronic device 101 may identify wooden sofa legs, a fabric which is the material of the sofa, a pink color which is the color of the sofa, and/or a white color which is the color of the floor, as additional attributes of the sketch. The electronic device 101 may generate, based on the identified attributes, a 2D or 3D object of a chair 1215c that includes wooden sofa legs, a fabric material, and a light pink color, which is a mixture of pink and white. The electronic device 101 may display the generated 2D or 3D object or add the 2D or 3D object to the displayed image.

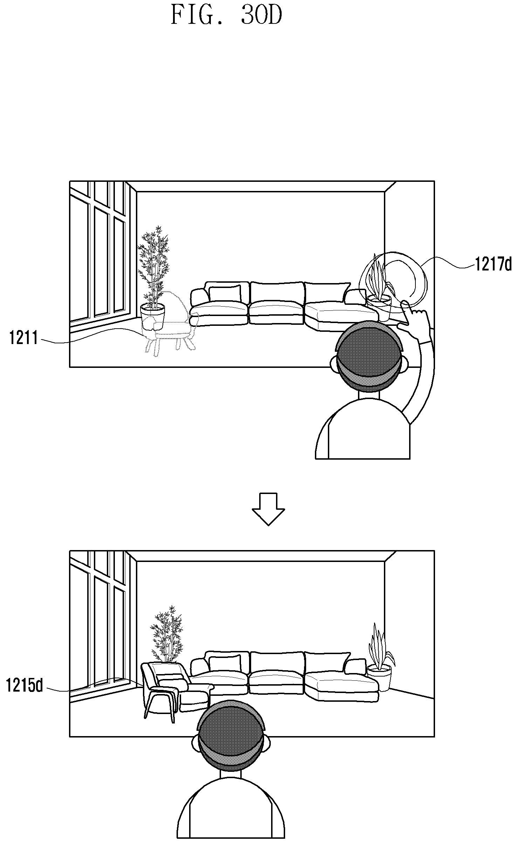

Referring to FIG. 30D, in an example, the electronic device 101 may execute a text input application and receive text via a virtual tool and/or gesture. According to an example, the electronic device 101 may receive a sketch of a chair shape 1211. The electronic device 101 may receive a control command. In an example, the electronic device 101 may receive a circular drawing 1217d on a plant included in an image. In an example, the circular drawing 1217d may include an emphasis attribute. In an example, when the circular drawing 1217d is received as a bold line and/or multiple consecutive times, the electronic device 101 may determine that the circular drawing 1217d includes an emphasis attribute. When the circular drawing 1217d including the emphasis attribute is input, the electronic device 101 may assign a weight to an element included in the circular drawing 1217d to identify an attribute of the sketch. In an example, the electronic device 101 may identify, based on the shape of the sketch, an attribute of the sketch which is a chair. The electronic device 101 may identify an attribute (e.g., a type attribute or a color attribute) of a plant for which the circular drawing 1217d is received. The electronic device 101 may assign a weight to the identified attribute of the plant to identify an additional attribute of the sketch. According to an example, the electronic device 101 may identify wooden sofa legs, a plant type, or a dark green color which is the color of a plant, as additional attributes of the sketch. The electronic device 101 may generate, based on the identified attributes, a 2D or 3D object of a solid wood chair 1215d that includes wooden sofa legs and a dark green color and is made of wood which is a type of plant. The electronic device 101 may display the generated 2D or 3D object or add the 2D or 3D object to the displayed image.

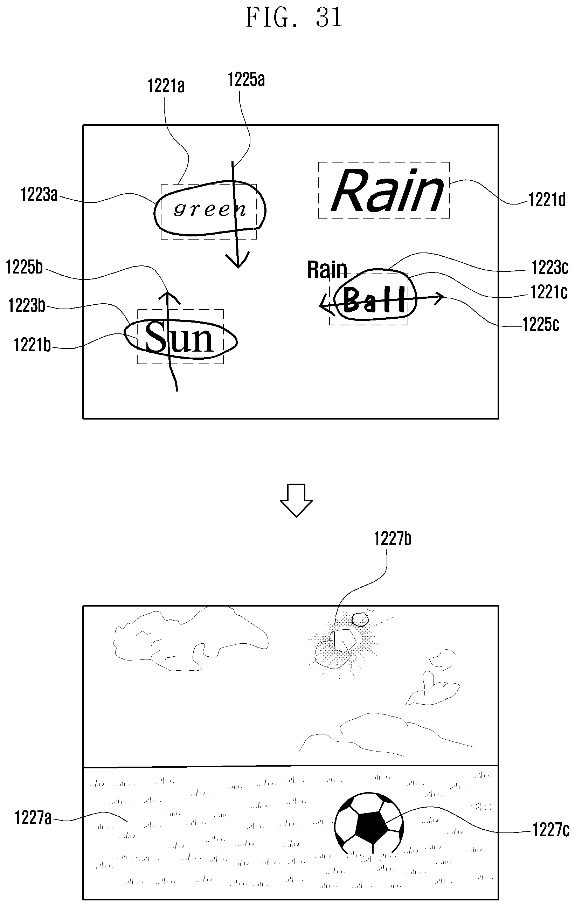

Referring to FIG. 31, in an example, a drawing input application may be executed. The drawing input application may receive a sketch and/or text. The electronic device 101 may receive various types of text (e.g., words (nouns)) via the drawing input application. According to an example, the electronic device 101 may receive the text of "green" 1221a, "sun" 1221b, "ball" 1223c, and "rain" 1221d at any locations on the drawing input application.

In an example, the electronic device 101 may receive selection control indicators on the text. For example, the selection control indicators may be control commands to select at least one element from among multiple elements, and may include circular drawings 1223a, 1223b, and 1223c. According to an example, a first circular drawing 1223a may be inputted for the text "green" 1221a among the input text, a second circular drawing 1223b may be inputted for the text "sun" 1221b, and a third circular drawing 1223c may be inputted for the text "ball" 1221c. The text of "green" 1221a, "sun" 1221b, and "ball" 1221c may be selected in response to the input of the selection control indicators. In an example, the electronic device 101 may accurately recognize the text to be selected based on the selection control indicators even when the text overlaps. The text selected by the selection control indicators may be generated as a prompt and transmitted to an artificial intelligence-based image editing model (e.g., a generative artificial intelligence model). According to an example, the artificial intelligence-based image editing model may generate an object of a grassland 1227a based on the text "green" 1221a, generate an object of sun 1227b based on the text "sun" 1221b, and generate an object of a ball 1227c based on the text "ball" 1221c.

According to an example, the artificial intelligence-based image editing model may generate objects corresponding to the selected text and generate an image in which the generated objects are automatically placed. According to an example, the electronic device 101 may receive placement control indicators on the text. For example, the placement control indicators may be control commands to determine placement location of the objects, and may include arrow drawings 1225a, 1225b, and 1225c. According to an example, a downward arrow drawing 1225a may be inputted for the text "green" 1221a among the input text, an upward arrow drawing 1225b may be inputted for the text "sun" 1221b, and a left-right horizontal arrow drawing 1225c may be inputted for the text "ball" 1223c. The artificial intelligence-based image editing model may generate an image in which the object of the grassland 1227a is placed at the bottom, the object of the sun 1227b is placed at the top, and the object of the ball 1227c is placed on a flat ground (e.g., the grassland 1227a) in response to the input of the placement control indicators.

In an example, the electronic device 101 may generate an image (or, object) that reflects attributes of surrounding text. The electronic device 101 may generate a first image by using an artificial intelligence-based image editing model (e.g., a generative AI model), based on a drawing by a user gesture input and some of text displayed around the drawing. The electronic device 101 may display the generated first image in place of the drawing at the location where the drawing has been displayed. When a user input occurs on text reflected in a prompt for generating the first image, the electronic device 101 may regenerate the first image to reflect modification of the text. In an example, the user input occurring on the text reflected in the prompt may include deleting text, adding text, and an additional drawing input (e.g., an underline, a circle, a check mark, etc.) corresponding to a control command for the modified text. In an example, the electronic device 101 may replace the first image with the regenerated image. In an example, the electronic device 101 may display the recreated image around the first image. In an example, the electronic device 101 may display the regenerated image by emphasizing (e.g., highlighting) a changed part of the first image.

In an example, the electronic device 101 may analyze an attribute of the modified text and determine whether to recreate the entire first image or to regenerate a part of the first image.

In an example, the electronic device 101 may assign a relatively high weight to emphasized text (e.g., a highlighted, underlined, checked, or sketched part) among surrounding text of a drawing and generate an image. In an example, the electronic device 101 may assign a relatively high weight to text that has a larger size than the surrounding text or text that is displayed on a screen without an obscured part.

In an example, when the electronic device 101 generates an image based on drawing attributes, the electronic device 101 may generate the image by reflecting attributes of not only surrounding text, but also sound information and information provided by a device that is connected in a multi-device environment. According to an example, when a user takes notes via a note application of the electronic device 101 while watching a lecture video played on a TV or tablet PC connected in a multi-device environment, the electronic device 101 may acquire sound (e.g., speech) information and/or image information corresponding to the time when the user takes notes and generate an object image. According to an example, when multiple applications are executed in an electronic device and/or multi-device environment and/or executed through a multi-screen function, the electronic device 101 may acquire information (e.g., text, images, sounds, etc.) provided by an application (e.g., a media player, a browser, or SNS) other than an application currently in use (e.g., note, gallery, or image editing) and reflect the acquired information in a prompt for generating an image. For example, the electronic device 101 may generate a sound prompt based on the acquired sound information and a visual prompt based on the acquired image information. The electronic device 101 may convert the sound prompt and/or the visual prompt into a text prompt and identify an attribute of the image.

According to an example, when there are multiple selected attributes, multiple selectable options related to the attributes, and/or the multiple selected attributes are contrary to each other, the electronic device 101 may display selectable candidates (e.g., text, thumbnail images, etc.) related to the attributes. According to an example, when the multiple selected attributes are contrary to each other, the electronic device 101 may, based on user input, select an area of an image in which the attributes are to be reflected, or position text corresponding to the attributes in the area of the image in which the attributes are to be reflected.

In an example, the electronic device 101 may determine text to be recommended for image generation from text data (e.g., notes) displayed around the drawing. The electronic device 101 may provide a UI (e.g., a control item) that allows the determined text to be reflected in the image generation.

According to an example, when displaying an object image corresponding to a drawing input, the electronic device 101 may generate and provide each candidate image reflecting different text when the image cannot be displayed as a single image (e.g., when the handwritten text expresses multiple topics that cannot be reflected in a single image, or expresses attributes that change over time).

According to an example, the electronic device 101 may share a generated object (or, an object image) and/or an image including the generated object with another device. When the electronic device 101 shares an object generated through an artificial intelligence-based image editing model (e.g., a generative AI model) and/or an image including the generated object with the other device, the electronic device 101 may also share data (e.g., a sketch, a generated object, surrounding objects, text, etc.) related to the generation of the object and/or image (e.g., store the data as metadata of the object and/or the image). When the electronic device 101 receives the object generated through the artificial intelligence-based image editing model (e.g., a generative AI model) and/or the image including the generated object, which are shared by the other device, the electronic device 101 may also receive the data (e.g., a sketch, a generated object, surrounding objects, text, etc.) related to the generation of the object and/or the image. When the electronic device 101 displays the shared object and/or image on a screen (or, in an AR environment or VR environment), the electronic device 101 may display at least one piece of related data around the object and/or the image.

According to an example, the electronic device 101 may receive a drawing and text in response to a user command and may give a visual effect (e.g., an effect to indicate key words using an emphasis mark such as a highlight or an underline) to the text. When an image is generated via an artificial intelligence-based image editing model based on a drawing input (e.g., a sketch or text) and when a visual effect is applied to text displayed around the drawing input, the electronic device 101 may extract the text with the visual effect and reflect the text in the image generation. In an example, the electronic device 101 may also apply the visual effect to a partial area of the image, which is related to the text with the visual effect, and may display the visual effect. According to an example, when text "pillar" reflected in the generation of an image is highlighted or underlined, the electronic device 101 may display the emphasis mark or the text together in the pillar area of the generated image.

For example, the electronic device 101 may display a visual effect (e.g., an emphasis effect using an indicator or the like) on text, which is related to a user-selected area on an image, among displayed text. According to an example, the electronic device 101 may receive an input selecting an object of a first cup in green color (e.g., the first green cup 1201a in FIG. 28). The electronic device 101 may determine an attribute of the green color corresponding to an object of the first green cup 1201a. The electronic device 101 may display an indicator (e.g., the indicator 1205 in FIG. 28) on the text "green" (e.g., the green 1203a in FIG. 28) among the text indicating attributes. In an example, the indicator 1205 may be a mark indicating the text of the attribute corresponding to the selected object.

In an example, when receiving an additional drawing input (e.g., changing the shape/color of an image object included in an image, deleting at least a part of an image object, adding an object) on the generated first image and then generating a second image reflecting an attribute of the additional drawing input, the electronic device 101 may display text related to the attribute of the additional drawing input around the image or add text related to the attribute of the additional drawing input to the displayed text. In an example, the electronic device 101 may process the text related to the attribute of the additional drawing input in light of the context of the displayed text and add the processed text to the displayed text.

In an example, the electronic device 101 may determine text to be recommended for image generation from text data (e.g., notes) displayed around a sketch. The electronic device 101 may provide a UI (e.g., a control item) that allows the determined text to be reflected in the image generation. In an example, the UI may be displayed with a graphical element to which text may be added in a floating form.

In an example, the electronic device 101 may analyze and extract image and/or text data included in a location and an area where a circular drawing is input, based on the size of the circular drawing, and reflect the image and/or text data in a prompt for image generation.

In an example, the electronic device 101 may determine whether to generate only an object image or both the object image and a background image, based on an attribute of text around a sketch. According to an example, a sketch of a tree shape and the text of "beach: and "palm tree" may be inputted. In an example, when only the text " palm tree" is selected, the electronic device 101 may generate only an object of a palm tree. In an example, when the text of "beach" and "palm tree" is selected, the electronic device 101 may generate an object of a palm tree with a beach background.

In an example, when an additional drawing is received on an image, the electronic device 101 may recreate the image to reflect the additional drawing attribute. The image into which the additional drawing is input may be an original image, or may be a generated image.

For example, when a drawing for changing some attributes (e.g., a door of a house) within an object (or, an object image) is input, the electronic device 101 may generate an object based on the changed attributes (e.g., generate a house that includes a door). In an example, the electronic device 101 may reflect, in a prompt, information to generate only areas corresponding to some attributes (e.g., generate only an area of the door) and to retain the remaining areas.

In an example, as an input means or an input device varies, the electronic device 101 may perform different operations with respect to a drawing received based on the input means/device. According to an example, when a drawing is received based on a gesture input using a hand, the electronic device 101 may generate an image. According to an example, when a drawing using a pen is received, the electronic device 101 may determine the drawing as a control input. According to an example, in a drawing tool, multiple selectable input means for drawing may be configured to perform different operations.

In an example, when generating an image, the electronic device 101 may generate and output a combination of descriptive speech related to the image, a sound effect related to a place represented in the image (e.g., the sound of waves at sea), and a sound related to an object included in the image (e.g., the sound of seagulls) together. When the electronic device 101 generates descriptive speech related to an image, the electronic device 101 may utilize information from a prompt that was used to generate the image. In an example, the electronic device 101 may generate and output descriptive text instead of speech.

In an example, when the electronic device 101 generates an image, the electronic device 101 may provide a link (e.g., a webpage), which includes information related to the image, around the image. For example, the link may correspond to a webpage that is found based on the content of surrounding text used to generate the image and/or discloses content related to the surrounding text. The link may be provided on the generated image. For example, when a user inputs a specific gesture on the generated image (e.g., double-touch), the electronic device 101 may provide a UI showing the content of the link. The electronic device 101 may summarize the content found on the web in relation to the generated image, and provide a UI showing the summarized content when the user inputs a specific gesture on the generated image.

In an example, when a specific area in the generated image is selected (e.g., the area is designated with a pen), the electronic device 101 may emphasize (e.g., highlight) text related to the selected area (or involved in the generation of the area).

For example, different images may be generated depending on a method by which a circular drawing is inputted around a sketch. In an example, only a sketch and text included in a circular drawing may be reflected in an image. In an example, when a circular drawing is made once, an image is generated, and when the circular drawing is repeatedly made to overlap (e.g., is made to overlap three times), a video is generated. When a circular drawing is made once, only the content (text) of the corresponding page may be in an image, and when a circular drawing is made to overlap twice, the content of at least one other page in the document may also be reflected. The more circular drawings are made to overlap, the more sophisticated the image may be generated.

In an example, the differences between previously input drawings and/or images and a currently generated image may be reflected in an image. For example, parts that are different from other drawings/images may be highlighted. When text includes changes over time as part of a topic, a video which shows the changes between the drawings/images (e.g., highlighting and playing the changes) may be generated and presented.

For example, a drawing may be inputted on a specific page of a note, a memo, or a document. Each page may include handwritten text. In an embodiment, when a user makes a drawing on a specific page, text on the page may be reflected in an image. According to an embodiment, when a user makes a drawing on a specific page, the electronic device 101 may identify other pages that include text, drawings, and/or images associated with the page, and may reflect the text, the drawings, and/or the images included in the identified pages in an image.

In an example, when the text is handwritten in multiple languages, including first and second languages, the electronic device 101 may generate multiple images per language. For example, the electronic device 1010 may translate the second language into the first language and use the same as a prompt, metadata, and/or tagging information.

For example, an image reflecting content/topic represented by a drawing of an object, which a user input on a touchscreen by using a hand and a pen, may be generated. The drawing of the object, input by the user, may include a shape of a thing, a shape of a person, and/or text. When a specific form of drawing (e.g., circle, square, or arrow) is identified around the drawing of the object input by the user, the electronic device 101 may generate an image by using drawings of objects designated by the specific form of drawing. The generated image may be generated in an empty space on a screen/page, and may be generated in a size appropriate to the size of the empty space. An area in which the generated image is located may be an empty space on the screen/page, or may be an area designated by the user's hand or a pen.

In an AR and/or VR environment (e.g., where an electronic device is an XR device), an image may be generated based on an object in a video corresponding to a real environment (e.g., information acquired by a camera), a drawing input for background modification, and text contained in an application (e.g., a note app, a browser app, or an SNS app) running on the electronic device 101 (e.g., a visual wearable device).

In an example, in an AR and/or VR environment, when an image is generated based on a drawing object and surrounding text input from a real environment or an application, the electronic device 101 may extract elements such as shape, color, and design of surrounding objects (e.g., furniture, room style, etc.) included in a video corresponding to the real environment or depth values of objects in the real environment, and reflect the extracted elements or depth values in a prompt for image generation to generate an image that matches the real environment.

In an example, when an image is generated in an AR and/or VR environment, the electronic device 101 may extract an information characteristic of a real environment area in which a drawing object is located and incorporate them into the prompt for generating the image. For example, the real environment area information characteristic may include depth information of the real environment.

In an example, when an image is generated in an AR and/or VR environment, elements that represent characteristics such as the shape/style/color/design of another image or a UI included in at least one executed application may be extracted. The electronic device 101 may reflect the extracted data in a prompt and generate an image that matches the content or UI characteristics provided by the executed application.

In an example, when an image is generated in an AR and/or VR environment, the electronic device 101 may select an object for reference. For example, the object for reference may include an image displayed on a screen within an executed application, text, and/or an object included in the real environment. The electronic device 101 may receive a gesture or a drawing (e.g., a circle) corresponding to a control command related to the object for reference. The electronic device 101 may differently set the degree of reflection depending on the input characteristics of the control command related to the object for reference. For example, when a circular gesture or drawing is received on the object for reference, the electronic device 101 may generate a prompt for generating an image by reflecting the weight of an object characteristic relatively more when a large number of circles are drawn and reflecting the weight relatively less when a small number of circles are drawn.

In an example, when an image is generated in an AR and/or VR environment, if a drawing in the shape of a hat on a real person's head is received, the electronic device 101 may generate a 3D image (e.g., a person wearing the hat) that includes the has-shaped drawing and information about the person related to with the drawing. The electronic device 101 may provide a function to rotate the generated 3D image.

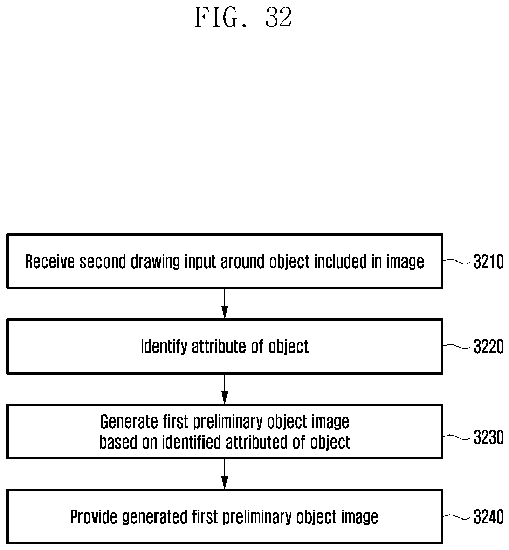

FIG. 32 is a flowchart illustrating an image editing method according to various embodiments.

In the following embodiments, operations may be performed sequentially, but are not necessarily performed sequentially. For example, the order of the operations may be changed, and at least two operations may be performed in parallel.

According to an embodiment, it can be understood that operations 3210 to 3240 are performed by a processor (e.g., the processor 120 in FIG. 2) of an electronic device (e.g., the electronic device 101 in FIG. 2).

Referring to FIG. 32, the electronic device 101 may receive a second drawing input around an object included in an image (3210). For example, the object may include at least one drawing element received by a first drawing input. In an example, the first drawing input may include a drawing (e.g., a sketch or text) that generates the object, and the second drawing input may include a drawing (e.g., control input) that controls the object.

For example, the electronic device 101 may identify an attribute of the object (3220). In an example, the electronic device 101 may identify the attribute of the object when the second drawing input is determined as a control command, based on the object and the second drawing input. The electronic device 101 may identify the type of control command based on the second drawing input. For example, the control command may include a command to identify a sketch (or generate a preliminary object image), move an object, select at least one of multiple elements (or attributes), sum the selected elements, and/or determine a placement location of the object. The electronic device 101 may identify the attribute of the object based on at least one of the shape of the at least one drawing element and the relationship between the drawing elements. For example, an image may include text. The electronic device 101 may additionally use the text to identify the attribute of the object.

For example, the electronic device 101 may generate a first preliminary object image based on the identified attribute of the object (3230). When the identified type of control command is a command to generate the first preliminary object image, the electronic device 101 may provide the generated first preliminary object image to replace the at least one drawing element. In an example, the first preliminary object image may be generated based on image information of an object of the same type as that of an object included in another image. In an example, the electronic device 101 may generate multiple first preliminary object images.

For example, the electronic device 101 may provide the generated first preliminary object image (3240). In an example, when multiple first preliminary object images are generated, the electronic device 101 may provide the multiple generated first preliminary object images and receive a selection command from a user.

For example, the electronic device 101 may receive a third drawing input including additional text in an area of text. The electronic device 101 may identify a modified attribute of the object based on the text and the additional text. The electronic device 101 may generate a second preliminary object image based on the modified attribute of the object, and may provide the generated second preliminary object image. For example, the electronic device 101 may receive a fourth drawing input that modifies the text. The electronic device 101 may identify a modified attribute of the object based on the modified text. The electronic device 101 may generate a third preliminary object image based on the modified attribute of the object, and may provide the generated third preliminary object image.

According to an example, the electronic device 101 may receive a first user input on a displayed original image (e.g., the original image 11 in FIG. 5) (3210). The electronic device 101 may identify a first object based on a shape drawn by the first user input, and may identify whether the first user input is an input which adds the first object (3220). For example, the user's input may be an input that adds an object, an input that modifies an object, or a control input. The input that adds an object may include an input that adds a new thing and/or person. The inputs that modify an object may include an input that changes the size or shape of the object, an input that changes color, and/or an input that adds color. The control input corresponds to a command related to image editing, and may include an input that changes the location of an object and/or an input that adds information about the object. In other words, the electronic device 101 may identify whether the user's input is an input that adds an object, an input that modifies an object, or a control input.

When the first user input is an input to add the first object, the electronic device 101 may request the generation of a first preliminary object image (e.g., the preliminary object image 25a in FIG. 5) that includes an attribute of the first object (3230). In an example, the electronic device 101 may request generation of a second preliminary object image (e.g., the preliminary object image 27a in FIG. 5) that includes an attribute of a second object. For example, the first object may be an object to be added, and the second object may be an object included in the original image. For example, the electronic device 101 may request the artificial intelligence-based computing device to generate a preliminary object image. The artificial intelligence-based computing device may be included in the electronic device 101, and the processor 120 may request the artificial intelligence-based computing device to generate the preliminary object image. In an example, the artificial intelligence-based computing device may be included in an external device (e.g., the server 108 in FIG. 1). The electronic device 101 may request, via a communication interface (e.g., the communication module 190 in FIG. 1), the artificial intelligence-based computing device to generate the preliminary object image.

The electronic device 101 may generate a first edited image (e.g., the first edited image 12 in FIG. 5) based on the first preliminary object image. The first edited image may be an image that includes a part (e.g., a first part) of the first object (e.g., the object 25b in FIG. 5) and is associated with the original image. In an example, the first edited image may include a part (e.g., a first part) of the second object (e.g., the object 27b in FIG. 5). The electronic device 101 may display the first edited image (3240).

When a second user input related to the first object is received on the first edited image, the electronic device 101 may display a second edited image (e.g., the second edited image 13 in FIG. 5) in which the size and/or location of the first object has been changed in response to the second user input, based on the first preliminary object image (3250). For example, an input related to the first object on the first edited image may be an input to move the first object. For example, the input to move the first object may be an input (e.g., a drag input) to move the first object to another location on the screen while being selected, or a control input. In an example, the control input may be an arrow-shaped input corresponding to the distance and direction of movement of the first object. In an example, when the input to move the first object on the first edited image is received, the electronic device 101 may display the second edited image in which the location of the first object has been changed based on the first preliminary object image. The electronic device 101 may acquire depth information of the first object based on the change in the location of the first object, and may display the first object based on the acquired depth information of the first object. Furthermore, the electronic device 101 may automatically change, based on the relationship with the first object, the location of the second object on the second edited image to a location different from the location of the second object on the first edited image.

In an example, a method for generating an image may include receiving a second drawing input around an object included in the image. The method may include identifying an attribute of the object when the second drawing input is determined to be a control command, based on the object and the second drawing input. The method may include generating a first preliminary object image, based on the identified attribute of the object. The method may include providing the generated first preliminary object image.

In an example, the object may include at least one drawing element received by a first drawing input.

In an example, the method may further include identifying the type of the control command. In the providing of the generated first preliminary object image, the generated first preliminary object image may be provided to replace the at least one drawing element, when the identified type of control command is a command to generate the first preliminary object image.

In an example, in the identifying of the attribute of the object, the attribute of the object may be identified based on at least one of the shape of the at least one drawing element and the relationship between the drawing elements.

In an example, the image may further include text. In the identifying of the attribute of the object, the attribute of the object may be identified by additionally using the text.

In an example, the method may further include receiving a third drawing input including additional text in an area of the text. The method may further include identifying a modified attribute of the object, based on the text and the additional text. The method may further include generating a second preliminary object image, based on the modified attribute of the object. The method may further include providing the generated second preliminary object image.

In an example, the method may further include receiving a fourth drawing input for modifying the text. The method may further include identifying a modified attribute of the object, based on the modified text. The method may further include generating a third preliminary object image, based on the modified attribute of the object. The method may further include providing the generated third preliminary object image.

In an example, the first preliminary object image may be generated based on image information of an object of the same type as that of the object, which is included in another image.

In an example, in the generating of the first preliminary object image, multiple first preliminary object images may be generated. In the providing of the generated first preliminary object image, the multiple generated first preliminary object images may be provided.

In an example, the method may further include identifying the type of the control command. In the providing of the generated preliminary object image, when the identified type of control command is a command to move an object, the object may be deleted, and the generated first preliminary object image may be displayed at a location different from a location where the object is displayed.

In an example, an electronic device may include a display configured to display an image, at least one processor including a processing circuit, and a memory configured to store instructions to be individually or collectively executed by the at least one processor. The instructions stored in the memory may be configured to cause the electronic device to receive a second drawing input around an object included in the image. The instructions may be configured to cause the electronic device to identify an attribute of the object when the second drawing input is determined to be a control command, based on the object and the second drawing input. The instructions may be configured to cause the electronic device to generate a first preliminary object image, based on the identified attribute of the object. The instructions may be configured to cause the electronic device to provide the generated first preliminary object image.

In an example, the object may include at least one drawing element received by a first drawing input.

In an example, the instructions may be configured to cause the electronic device to: identify the type of the control command; and provide the generated first preliminary object image to replace the at least one drawing element, when the identified type of control command is a command to generate the first preliminary object image.

In an example, the instructions may be configured to cause the electronic device to identify the attribute of the object, based on at least one of the shape of the at least one drawing element and the relationship between the drawing elements.

In an example, a non-transitory computer-readable storage medium recording a program for performing a method for generating an image may include receiving a second drawing input around an object included in the image. The storage medium may include identifying an attribute of the object when the second drawing input is determined to be a control command, based on the object and the second drawing input. In an example, the storage medium may include generating a first preliminary object image, based on the identified attribute of the object. In an example, the storage medium may include providing the generated first preliminary object image. In an example, a method for editing an image may receive a first user input on a first image (e.g., the original image 11 in FIG. 5). The method may identify whether the first user input is an input to add a first object (e.g., the object 25b in FIG. 5). When the first user input is an input to add the first object, the method may request generation of a first preliminary object image for the first object (e.g., the preliminary object image 25a in FIG. 5). The method may display a second image (e.g., the first edited image 12 in FIG. 5) associated with the first image and including the first object generated based on the first preliminary object image. When a second user input related to the first object is received on the second image, the method may display a third image (e.g., the second edited image 13 in FIG. 5) in which at least one of the size and location of the first object has been changed in response to the second user input, based on the first preliminary object image.

In an example, in the identifying whether the first user input is an input to add the first object, the first object may be identified based on a shape drawn by the first user input.

In an example, the first preliminary object image may be generated based on image information of an object of the same type as that of the first object, which is included in another image.

In an example, the first preliminary object image may include a first part and a second part of the first object. In the displaying of the second image, only the first part of the first object may be displayed. In the displaying of the third image, the first part and the second part of the first object may be displayed.

In an example, in the displaying of the third image, a lighting effect may be displayed based on a change in at least one of the size and location of the first object.

In an example, the method may identify a second object (e.g., the object 27b in FIG. 5) included in the first image, and may request generation of a second preliminary object image (e.g., the preliminary object image 27a in FIG. 5) for the second object. The second preliminary object image may include a first part and a second part of the second object. In the displaying of the second image, the second object generated based on the second preliminary object image may be displayed.

In an example, in the displaying of the third image, depth information of the first object that is greater than depth information of the second object may be acquired when the location of the first object is changed to be behind the second object. In the displaying of the third image, depth information of the first object that is less than depth information of the second object may be acquired when the location of the first object is changed to be in front of the second object. In the displaying of the third image, the first object and the second object may be displayed based on the depth information of the first object and the depth information of the second object.

In an example, in the displaying of the third image, when the location of the first object is changed to a location that overlaps an area in which the second object is located, only the first part of the second object, except for the second part of the second object that overlaps the first object, may be displayed if the depth information of the first object is less than the depth information of the second object. In the displaying of the third image, when the depth information of the first object is greater than the depth information of the second object, only the first part of the first object, except the second part of the first object that overlaps the second object, may be displayed.

In an example, the first image may include the first part of the second object and the second part of the second object. In the displaying of the third image, the first part among the first part and the second part of the second object may be displayed based on the relationship with the first object.

In an example, the first image may include the second object having a first size. In the displaying of the second image, the second object may be displayed with a second size different from the first size, based on the relationship with the first object.

In an example, in the identifying of the first user input, the first user input may be identified based on the type of input method of the first user input.

In an example, an electronic device 101 may include a display 160, at least one processor 120, and a memory 130 configured to store instructions to be executed by the at least one processor 120. The instructions may cause the electronic device 101 to, when receiving a first user input for adding a first object on a first image displayed on the display 160, request generation of first object image information including a first part and a second part of the first object. The instruction may cause the electronic device 101 to display, based on the first object image information, a second image, obtained by adding the first part of the first object to the first image, on the display 160. The instruction may cause the electronic device 101 to, when receiving a second user input related to the first object on the second image, display, based on the first object image information, a third image obtained by adding the second part of the first object to the second image.

In an example, the instructions may cause the electronic device 101 to use an artificial intelligence computing device to identify an attribute of the first object, including the type or characteristic of the first object, based on the shape formed by the first user input.

In an example, the instructions may cause the electronic device 101 to identify the relationship between the attribute of the first object and background information of the first image. The first object image information may include information of a new object related to the first object based on the relationship.

In an example, the background information of the first image may include at least one among place information, time information, and weather information.

In an example, the instructions may cause the electronic device 101 to display multiple objects of the same type as that of the first object, which are included in at least one of an image stored in the memory 130 and a found image. The instructions may cause the electronic device 101 to generate image information of the first object based on an image of one object selected from the multiple displayed objects.

In an example, the instructions may cause the electronic device 101 to select a second object according to a predetermined priority from among multiple objects included in the first image. The instructions may cause the electronic device 101 to request generation of second object image information including a first part and a second part of the selected second object.

In an example, the instructions may cause the electronic device 101 to automatically change the location of the second object on the third image to a location different from the location of the second object on the second image, based on the relationship with the first object.

In an example, a non-transitory computer-readable storage medium on which a program for performing a method for editing an image is recorded may include identifying, when a first touch gesture input is received on a first image via a touch screen, whether the first touch gesture input is an input to add a first object to the first image or an input to modify a second object included in the first image. The storage medium may include requesting, when the first touch gesture input is an input to add the first object, an artificial intelligence computing device to generate first object image information including a first part and a second part of the first object. The storage medium may include displaying at least one of the first part and the second part of the first object in the first image, based on the first object image information. The storage medium may include requesting, when the first gesture input is an input to modify the second object, the artificial intelligence computing device to generate second object image information including a third part and a fourth part of the second object. The storage medium may include displaying at least one of the third part and the fourth part of the second object in the first image, based on the second object image information.

In an example, the input to modify the second object included in the first image may include changing at least one of a color and a texture of at least a part of the second object.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it denotes that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

Effects of the disclosure are not limited to the above-mentioned effects, and other effects that have not been mentioned above can be clearly understood from the above description by those skilled in the art.

## Claims

1. A method for generating an image, the method comprising:
receiving a second drawing input around an object included in the image;
identifying an attribute of the object based on the object and the second drawing input in a case that the second drawing input is determined to be a control command;
generating a first preliminary object image based on the identified attribute of the object; and
providing the generated first preliminary object image.

2. The method of claim 1, wherein the object comprises at least one drawing element received by a first drawing input that is an initial drawing input.

3. The method of claim 2, further comprising determining a type of the control command,
wherein the generated first preliminary object image is provided to replace the at least one drawing element, in a case that the determined type of control command is a command to generate the first preliminary object image.

4. The method of claim 2, wherein the attribute of the object is identified based on at least one of a shape of the at least one drawing element or a relationship between the drawing elements.

5. The method of claim 4, wherein the image further includes text, and
the attribute of the object is identified at least partially based on the text.

6. The method of claim 5, further comprising:
receiving a third drawing input including additional text in an area of the text;
identifying a modified attribute of the object based on the text and the additional text;
generating a second preliminary object image based on the modified attribute of the object; and
providing the generated second preliminary object image.

7. The method of claim 5, further comprising:
receiving a fourth drawing input for modifying the text;
identifying a modified attribute of the object based on the modified text;
generating a third preliminary object image based on the modified attribute of the object; and
providing the generated third preliminary object image.

8. The method of claim 1, wherein the first preliminary object image is generated based on image information of another object included in another image, a type of the object being identical to a type of the another object.

9. The method of claim 1, wherein the generating the first preliminary object image comprises generating multiple first preliminary object images, and
the providing of the generated first preliminary object image comprises providing the multiple generated first preliminary object images.

10. The method of claim 1, further comprising determining a type of the control command,
wherein in the providing of the generated first preliminary object image, in a case that the determined type of control command is a command to move an object, the object is deleted, and the generated first preliminary object image is displayed at a different location than where the deleted object was displayed.

11. An electronic device comprising:
a display configured to display an image;
at least one processor comprising a processing circuit; and
a memory configured to store instructions to be individually or collectively executed by the at least one processor,
wherein the instructions stored in the memory are configured to cause the electronic device to:
receive a second drawing input around an object included in the image;
identify an attribute of the object based on the object and the second drawing input in a case that the second drawing input is determined to be a control command;
generate a first preliminary object image based on the identified attribute of the object; and
provide the generated first preliminary object image.

12. The electronic device of claim 11, wherein the object comprises at least one drawing element received by a first drawing input that is an initial drawing input.

13. The electronic device of claim 12, wherein the instructions stored in the memory are configured to cause the electronic device to:
determine a type of the control command; and
provide the generated first preliminary object image to replace the at least one drawing element, in a case that the determined type of control command is a command to generate the first preliminary object image.

14. The electronic device of claim 12, wherein the instructions stored in the memory are configured to cause the electronic device to identify the attribute of the object based on at least one of a shape of the at least one drawing element or a relationship between the drawing elements.

15. A non-transitory computer-readable storage medium recording a program, which when executed by a processor, performs a method for generating an image, the method comprising:
receiving a second drawing input around an object included in the image;
identifying an attribute of the object based on the object and the second drawing input in a case that the second drawing input is determined to be a control command;
generating a first preliminary object image based on the identified attribute of the object; and
providing the generated first preliminary object image.
